# EUROPEAN PATENT APPLICATION

(11) **EP 4 651 582 A1**
(43) Date of publication of application: **19.11.2025**
(21) Application number: 24757153.2
(22) Date of filing: 08.02.2024
(51) Int. Cl.: H04W 52/36, H04W 52/14, H04W 52/34, H04W 52/42, H04B 7/0404, H04B 7/0413

(54) **METHOD AND APPARATUS FOR CONTROLLING UPLINK TRANSMISSION POWER ON BASIS OF MULTI-PANEL SIMULTANEOUS TRANSMISSION IN WIRELESS COMMUNICATION SYSTEM**

(30) Priority: 17.02.2023 KR 20230021459
(71) Applicant: Samsung Electronics Co., Ltd., Suwon-si, Gyeonggi-do 16677 (KR)
(72) Inventor: KIM, Taekhoon, Suwon-si, Gyeonggi-do 16677 (KR); LIM, Seongmok, Suwon-si, Gyeonggi-do 16677 (KR); JANG, Youngrok, Suwon-si, Gyeonggi-do 16677 (KR); JI, Hyoungju, Suwon-si, Gyeonggi-do 16677 (KR)
(74) Representative: Gulde & Partner
(86) International application number: PCT/KR2024/001950
(87) International publication number: WO 2024/172424

(57) **Abstract**

The present disclosure relates to a 5G or 6G communication system for supporting higher data transmission rates. Specifically, the present disclosure provides a method and an apparatus for an uplink transmission process taking into account the simultaneous transmission of multiple panels.

## Description

### [Technical Field]

The disclosure relates to operations of a UE and a base station in a wireless communication system (or a mobile communication system). More specifically, the disclosure relates to a method and an apparatus for performing uplink simultaneous transmission by using multiple panels in a wireless communication system.

### [Background Art]

5G mobile communication technologies define broad frequency bands so as to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, in line with development of communication systems, there has been ongoing research regarding uplink transmission/reception processes using multiple panels. Particularly, there have been increasing demands for specifying uplink simultaneous transmission by using multiple panels.

### [Disclosure]

### [Technical Problem]

Various embodiments of the disclosure are to provide a device and a method capable of effectively providing services in a mobile communication system. The disclosure proposes a method and an apparatus wherein, in order to perform uplink simultaneous transmission by using multiple panels in a wireless communication system, panel-specific maximum transmission power (configured UE maximum output power) for corresponding operations is configured, and a method for reporting UE capability and power headroom according to panel-specific maximum transmission power introduction, and an apparatus capable of performing the same.

### [Technical Solution]

In order to solve the above-mentioned problems, a method performed by a terminal of a communication system according to the disclosure includes: receiving information for configuring physical uplink shared channel (PUSCH) simultaneous transmission using two panels from a base station; receiving information indicating two transmission configuration indicator (TCI) states from the base station; acquiring a first PUMAX value corresponding to a first TCI state of the two TCI states and

acquiring a second PUMAX value corresponding to a second TCI state; and reporting at least one of the acquired first PUMAX value or second PUMAX value to the base station.

In addition, a method performed by a base station of a communication system includes: transmitting information for configuring physical uplink shared channel (PUSCH) simultaneous transmission using two panels to a terminal; transmitting information indicating two transmission configuration indicator (TCI) states to the terminal; and receiving at least one of a first PUMAX value corresponding to a first TCI state of the two TCI states and a second PUMAX value corresponding to a second TCI state from the terminal.

In addition, a terminal of a communication system includes: a transceiver; and a controller configured to: receive information for configuring physical uplink shared channel (PUSCH) simultaneous transmission using two panels from a base station; receive information indicating two transmission configuration indicator (TCI) states from the base station; acquire a first PUMAX value corresponding to a first TCI state of the two TCI states and acquire a second PUMAX value corresponding to a second TCI state; and report at least one of the acquired first PUMAX value or second PUMAX value to the base station.

In addition, a base station of a communication system includes: a transceiver; and a controller configured to: transmit information for configuring physical uplink shared channel (PUSCH) simultaneous transmission using two panels to a terminal; transmit information indicating two transmission configuration indicator (TCI) states to the terminal; and receive at least one of a first PUMAX value corresponding to a first TCI state of the two TCI states and a second PUMAX value corresponding to a second TCI state from the terminal.

### [Advantageous Effects]

Various embodiments of the disclosure can provide a device and a method capable of effectively providing services in a mobile communication system. According to various embodiments of the disclosure, panel-specific maximum transmission power for simultaneously transmitting multiple uplink channels by using multiple panels in a wireless communication system is configured, and the same is reported to the base station so as to control panel-specific power, thereby enabling efficient uplink transmission.

### [Description of Drawings]

FIG. 1 illustrates a basic structure of a time-frequency domain, which is a radio resource domain used to transmit data or control channels, in a 5G system.
FIG. 2 illustrates a structure of a frame, a subframe, and a slot in a 5G system.
FIG. 3 illustrates an example of a bandwidth part configuration in a 5G system.
FIG. 4 illustrates an example of base station beam allocation according to TCI state configurations.
FIG. 5 illustrates an example of time domain resource allocation with regard to a PDSCH in a wireless communication system according to an embodiment of the disclosure.
FIG. 6 illustrates an example of an antenna port configuration and resource allocation for PDSCH transmission using cooperative communication in a communication system.
FIG. 7 illustrates an example of a downlink control information (DCI) configuration for NC-JT in which respective TRPs transmit different PDSCHs or different PDSCH layers to a UE in a wireless communication system.
FIG. 8 illustrates an example of a PDSCH TCI state activation/deactivation MAC-CE.
FIG. 9 illustrates an enhanced PDSCH TCI state activation/deactivation MAC-CE structure.
FIG. 10 illustrates a beam application time which may be considered in a case where a unified TCI scheme is used in a wireless communication system.
FIG. 11 illustrates an example of an MAC-CE structure for activation and indication of a joint TCI state or a separate DL or UL TCI state in a wireless communication system.
FIG. 12 illustrates an example of another MAC-CE structure for activation and indication of multiple joint TCI states or separate DL or UL TCI states in a wireless communication system.
FIG. 13 illustrates an example of another MAC-CE structure for activation and indication of multiple joint TCI states or separate DL or UL TCI states in a wireless communication system.
FIG. 14 illustrates an example of an mTRP TDM-based uplink channel repetitive transmission method, a multi-panel-based uplink channel simultaneous transmission method (SDM), and a single frequency network (SFN).
FIG. 15 illustrates an example of the structure of an extended single entry PHR MAC CE defined to transmit multiple pieces of P_{CMAXf,c,p} and P-MPR_{f,c,p} derived for multi-panel simultaneous transmission.
FIG. 16 illustrates an example of the structure of an extended multiple entry PHR MAC CE.
FIG. 17 is a flowchart illustrating an example of operations of a base station and a UE performing the UE's multi-panel simultaneous uplink transmission.
FIG. 18A is a flowchart illustrating an example of multi-panel simultaneous uplink transmission operations of a UE.
FIG. 18B is a flowchart illustrating an example of multi-panel simultaneous uplink transmission operations of a base station.
FIG. 19 illustrates a structure of a UE in a wireless communication system according to an embodiment of the disclosure.
FIG. 20 illustrates a structure of a base station in a wireless communication system according to an embodiment of the disclosure.

### [Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Therefore, the definitions of the terms should be made based on the contents throughout the specification.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, the 5G system is not limited to the three services described above.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, the term "a/b" may be understood as at least one of a and b.

Hereinafter, a frame structure of a 5G system will be described in more detail with reference to the accompanying drawings.

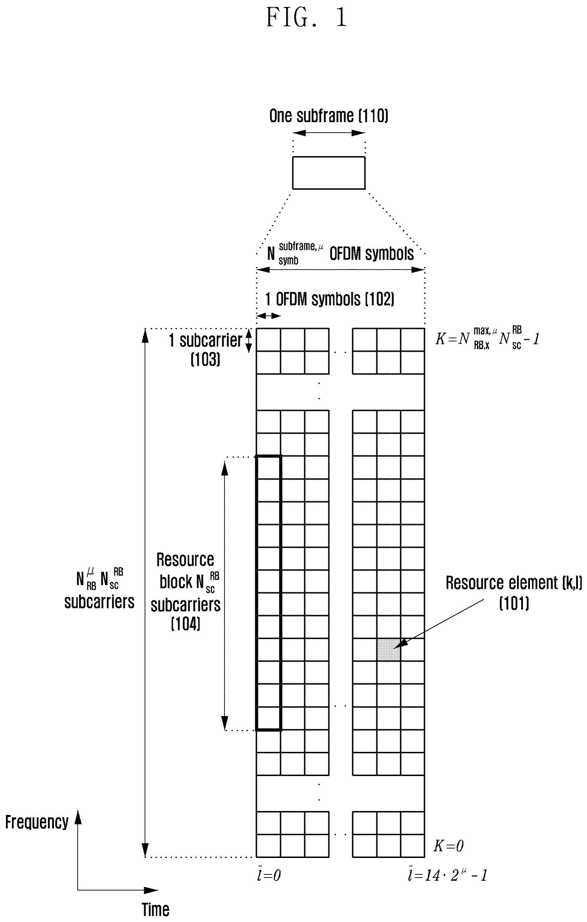

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, ${N}_{SC}^{RB}$ (for example, 12) consecutive REs may constitute one resource block (RB) 104. In the time domain, one subframe 110 may include multiple OFDM symbols 102. For example, the length of one subframe may be 1 ms.

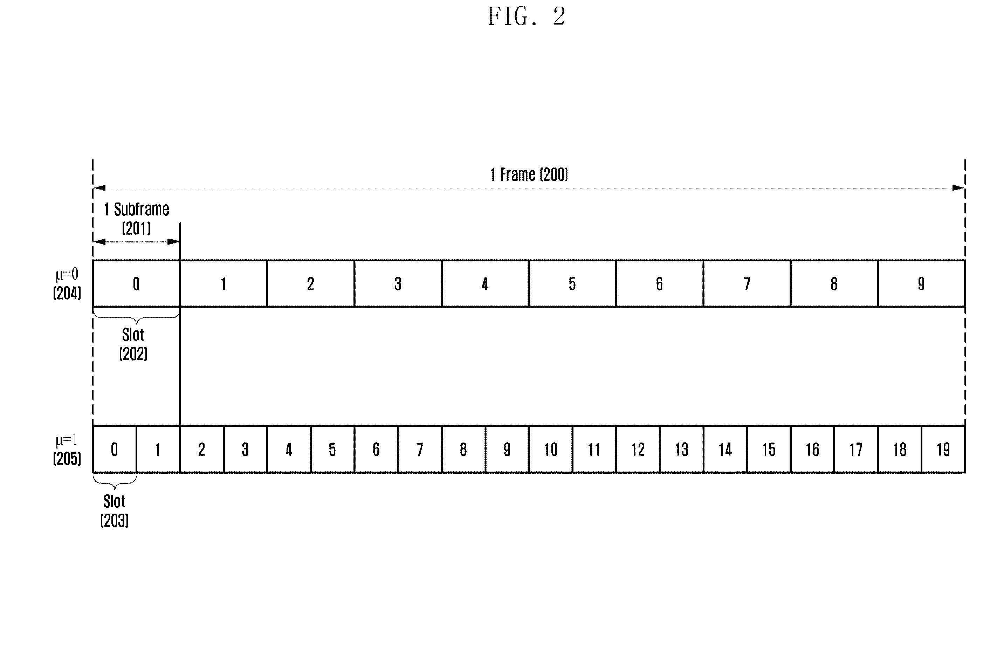

FIG. 2illustrates a structure of a frame, a subframe, and a slot in a 5G system.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot ${N}_{symb}^{slot} = 14$)*.* One subframe 201 may include one or multiple slots 202 and 203, and the number of slots 202 and 203 per one subframe 201 may vary depending on configuration values µ for the subcarrier spacing 204 or 205. The example of FIG. 2 shows the case of µ=0 (2-04) and the case of µ=1 (2-05) as a configuration value for a subcarrier spacing. In the case of µ=0 (204), one subframe 201 may include one slot 202, and in the case of µ=1 (205), one subframe 201 may include two slots 203. That is, the number of slots per one subframe ${N}_{slot}^{subframe , μ}$ may differ depending on the subcarrier spacing configuration value µ, and the number of slots per one frame ${N}_{slot}^{frame , μ}$ may differ accordingly. ${N}_{slot}^{subframe , μ}$ and ${N}_{slot}^{frame , μ}$ may be defined according to each subcarrier spacing configuration µ as in Table 1 below.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

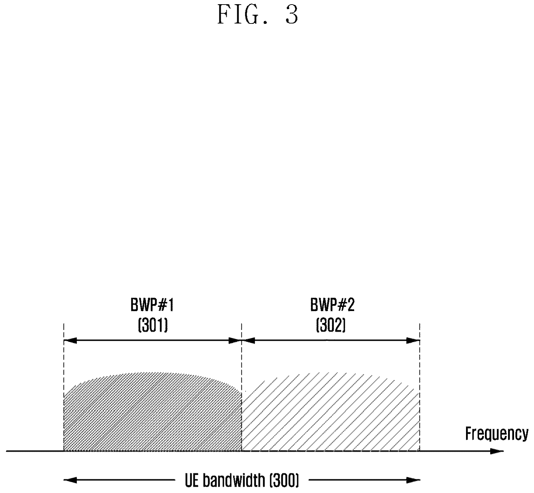

FIG. 3 illustrates an example of a bandwidth part configuration in a 5G system.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

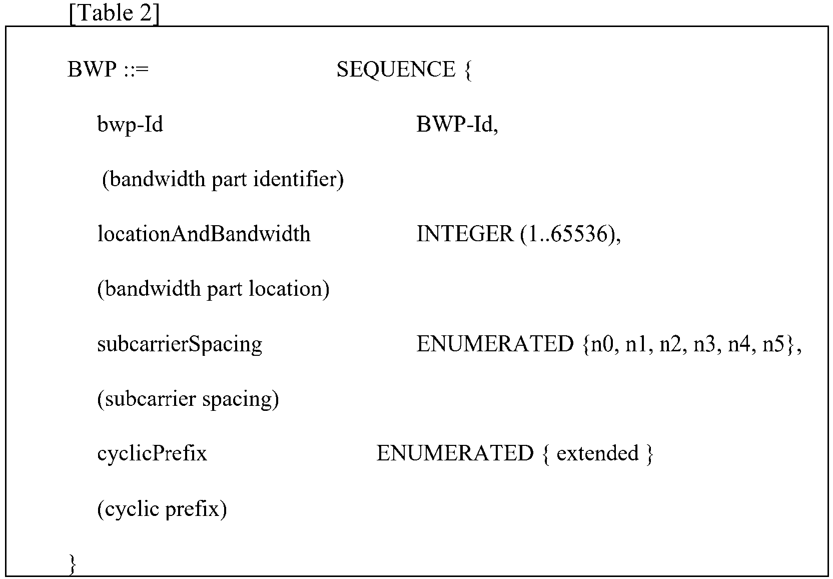

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered to have identity (ID) 0. The base station may notify the UE of configuration information, such as frequency allocation information, time allocation information, and numerology, regarding control resource set #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0. The UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred. Hereinafter, QCLs and transmission configuration indicator (TCI) states will be described.

In a wireless communication system, one or more different antenna ports (which may also be replaced with one or more channels, signals, and combinations thereof, but will hereinafter be referred to as different antenna ports for convenience of description) may be associated with each other by a quasi co-location (QCL) configuration as in Table 3 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 3 below.

**[Table 3]**

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 4 below. Referring to Table 4, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 3 above.

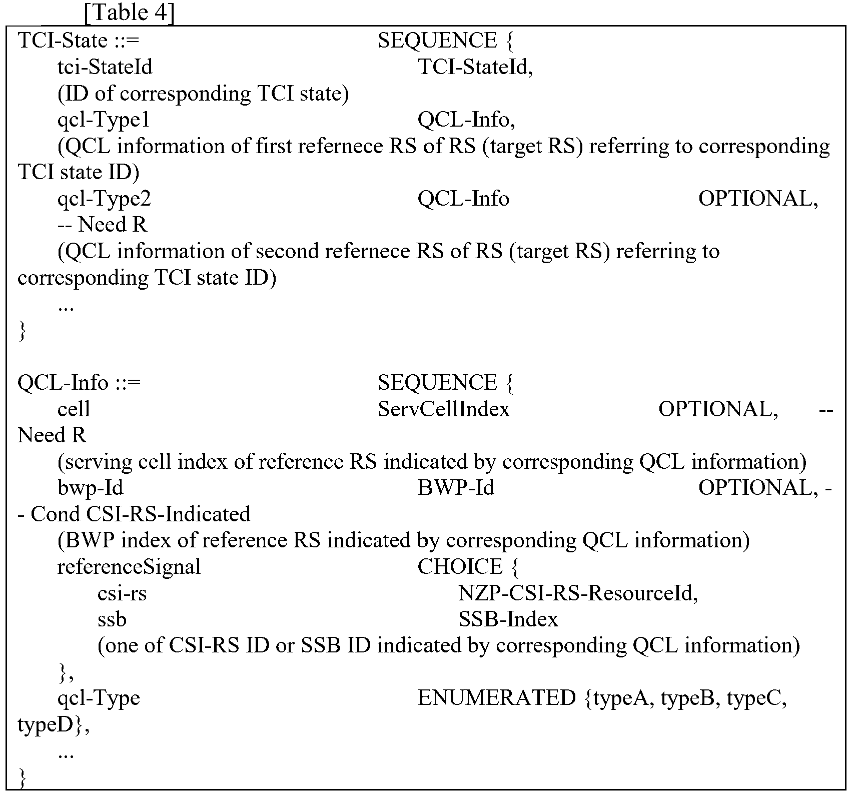

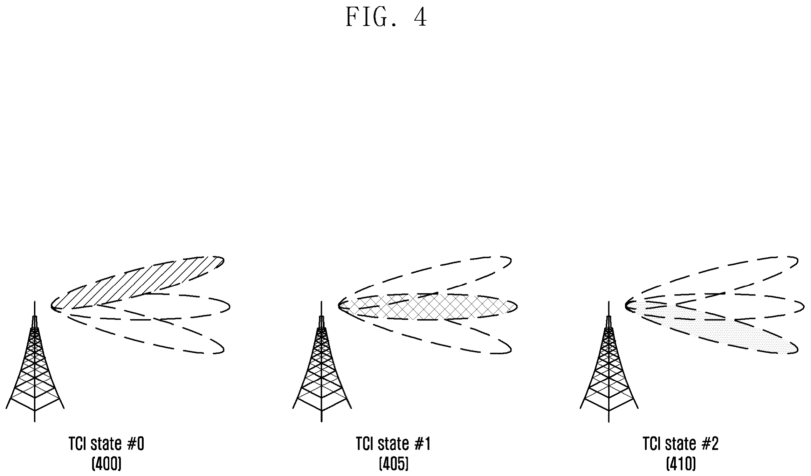

FIG. 4 illustrates an example of base station beam allocation according to TCI state configurations.

Referring to FIG. 4, the base station may transfer information regarding N different beams to the UE through N different TCI states. For example, in the case of N=3 as in FIG. 4, the base station may configure qcl-Type2 parameters included in three TCI states 400, 405, and 410 in QCL type D while being associated with CSI-RSs or SSBs corresponding to different beams, thereby notifying that antenna ports referring to the different TCI states 400, 405, and 410 are associated with different spatial Rx parameters, that is, different beams.

Tables 5 to 9 below enumerate valid TCI state configurations according to the target antenna port type.

Table 5 enumerates valid TCI state configurations when the target antenna port is a CSI-RS for tracking (i.e., TRS) The TRS refers to a non-zero power (NZP) CSI-RS which has no repetition parameter configured therefor, and trs-Info of which is configured as "true", among CRI-RSs. In Table 5, configuration no. 3 may be used for a periodic TRS.

**[Table 5]**

| **Valid TCI state Configuration** | **DL RS 1** | **qcl-Typel** | **DL RS 2 (If configured)** | **qcl-Type2 (If configured)** |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 6 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

**[Table 6]**

| **Valid TCI state Configuration** | **DL RS 1** | **qcl-Type1** | **DL RS 2 (If configured)** | **qcl-Type2 (If configured)** |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 7 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs.

**[Table 7]**

| **Valid TCI state Configuration** | **DL RS 1** | **qcl-Type1** | **DL RS 2 (If configured)** | **qcl-Type2 (If configured)** |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 8 enumerates valid TCI state configurations when the target antenna port is a PDCCH DMRS.

**[Table 8]**

| **Valid TCI state Configuration** | **DL RS 1** | **qcl-Type1** | **DL RS 2 (If configured)** | **qcl-Type2 (If configured)** |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 9 enumerates valid TCI state configurations when the target antenna port is a PDSCH DMRS.

**[Table 9]**

| **Valid TCI state Configuration** | **DL RS 1** | **qcl-Typel** | **DL RS 2 (If configured)** | **qcl-Type2 (If configured)** |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 5 to 9 above, the target antenna port and reference antenna port for each step are configured and operated such as "SSB" - "TRS" - "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

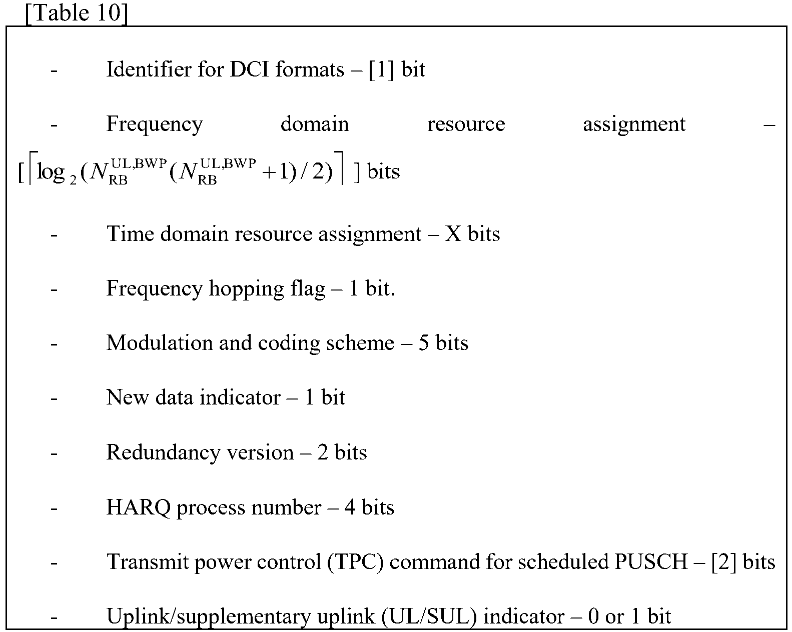

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

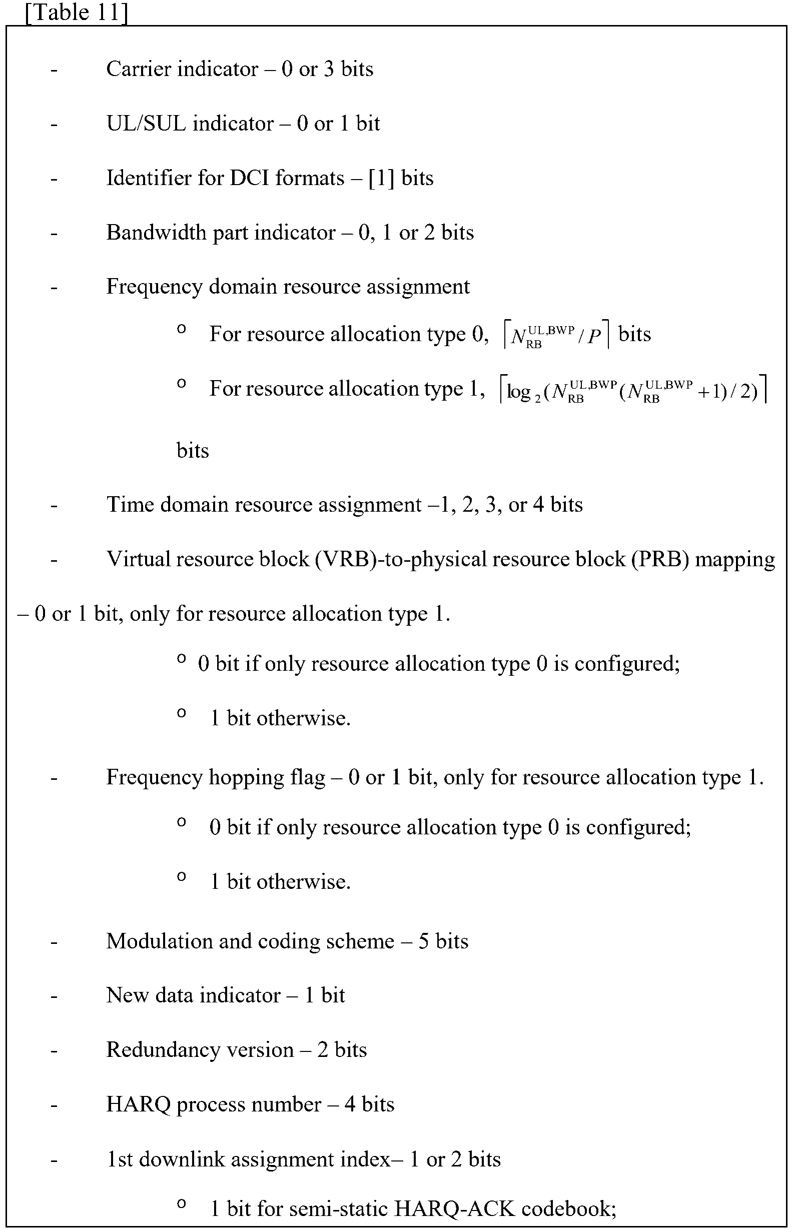

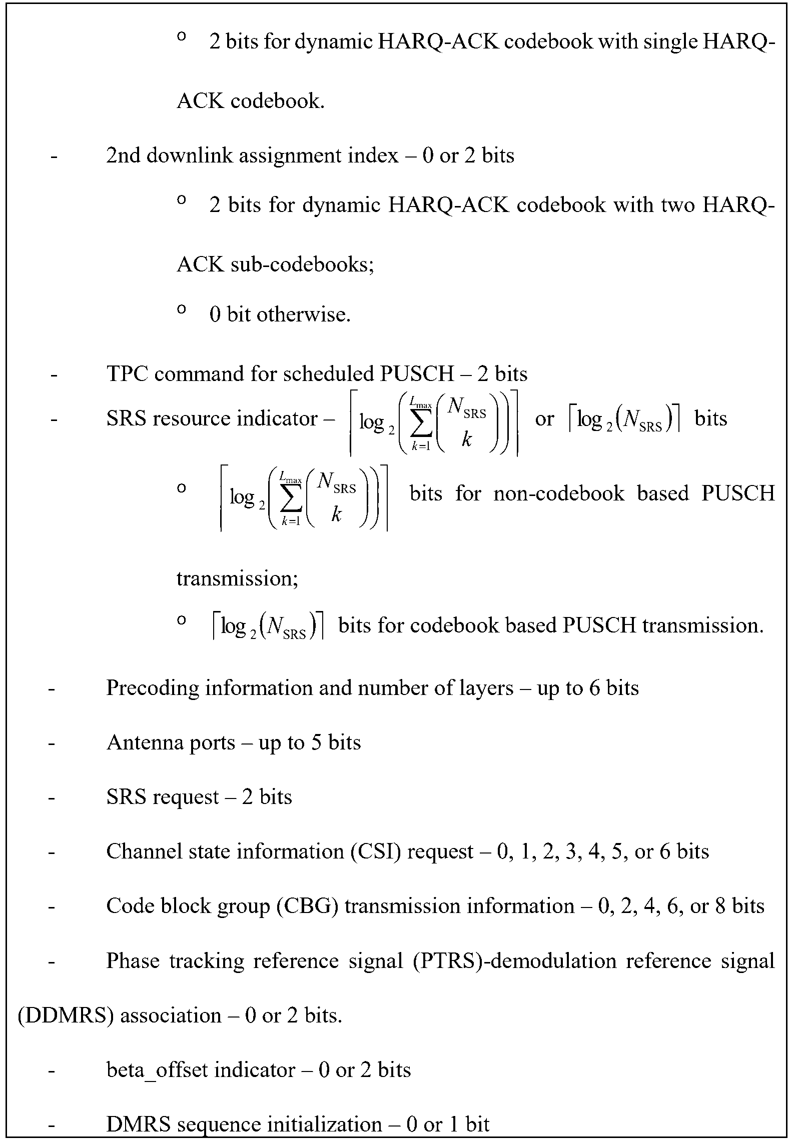

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

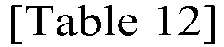

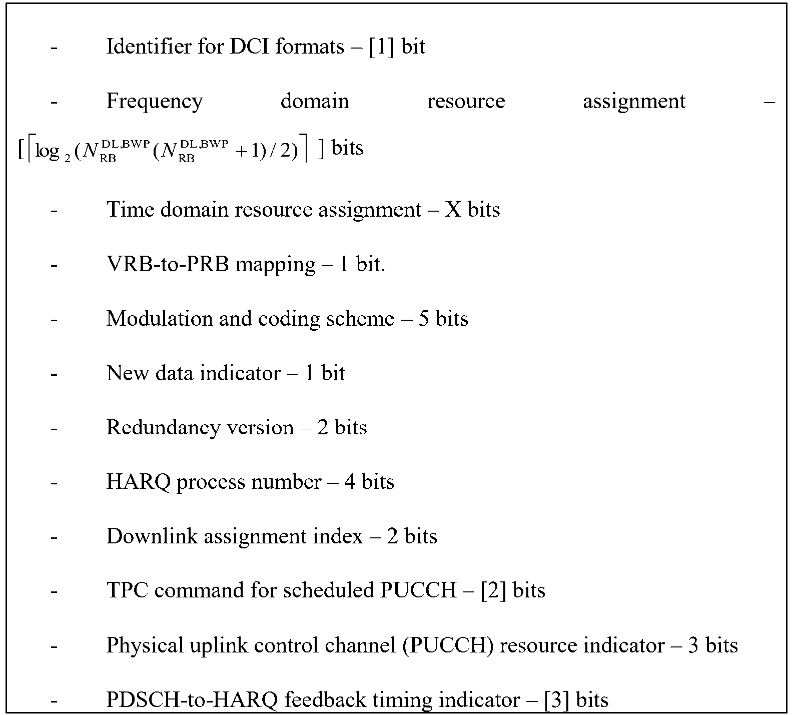

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

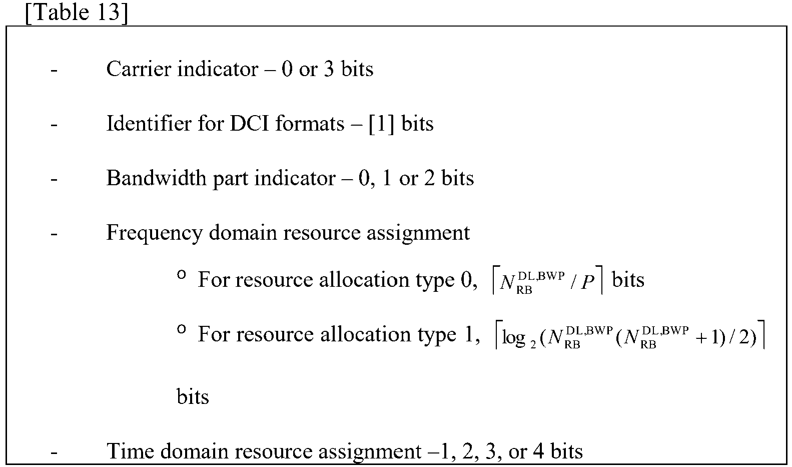

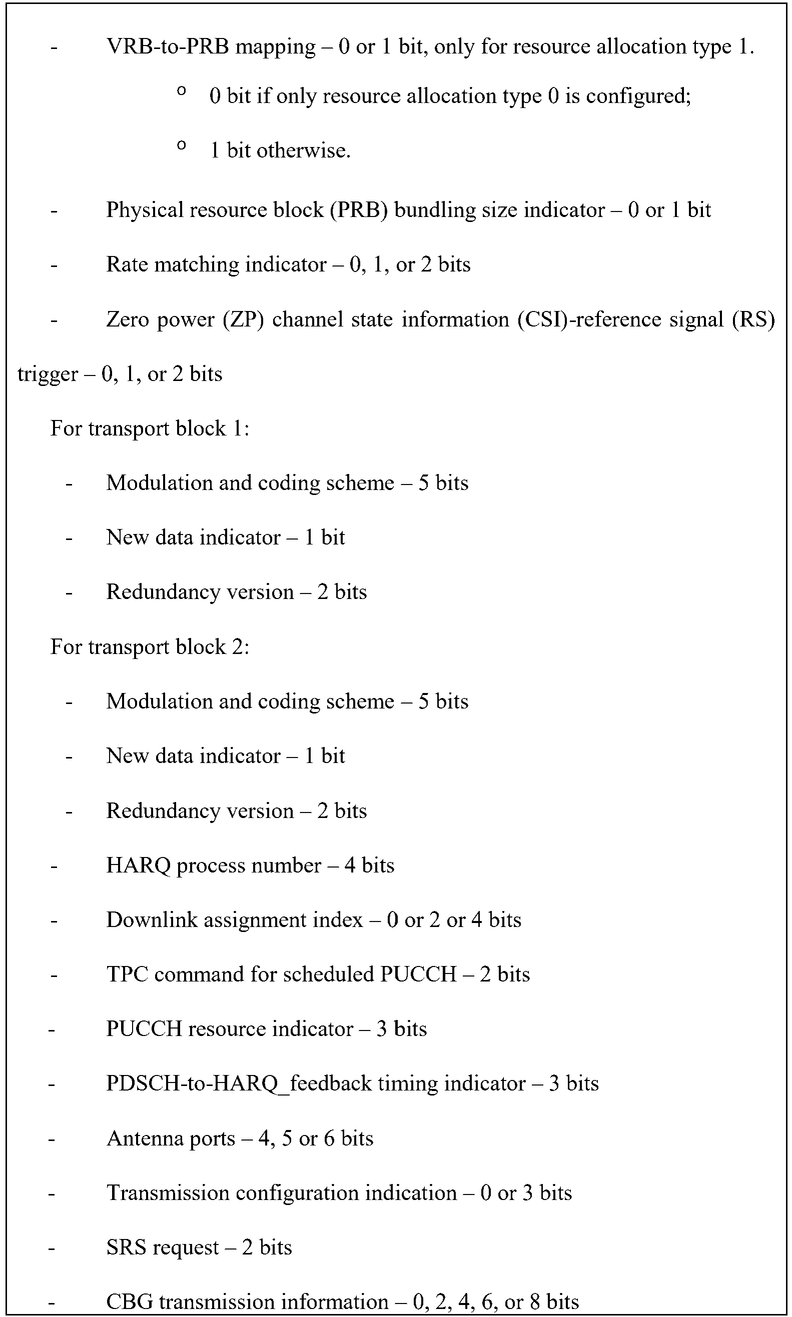

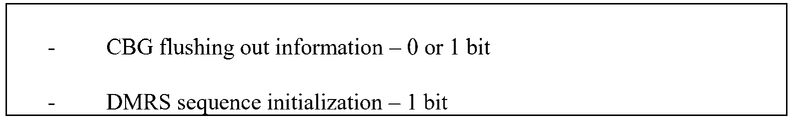

Hereinafter, a time domain resource allocation method regarding a data channel in a 5G system will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 14 or Table 15 below may be transmitted from the base station to the UE.

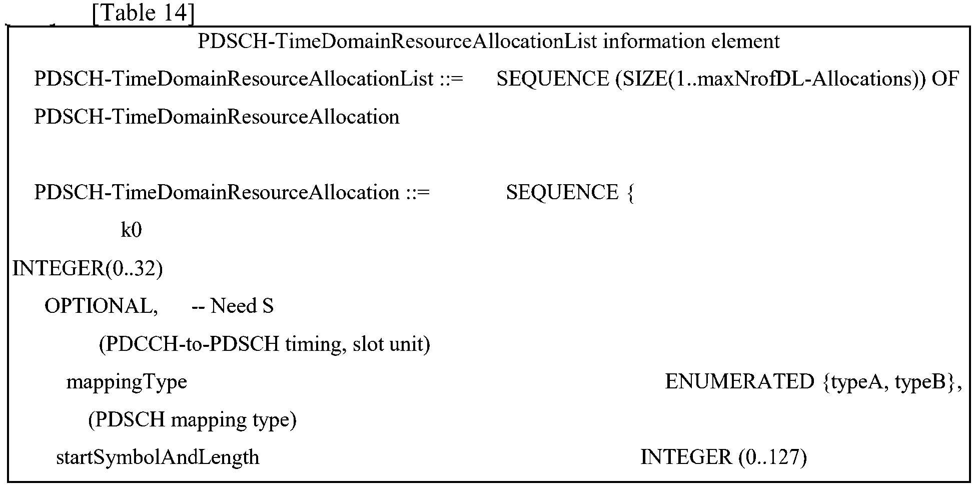

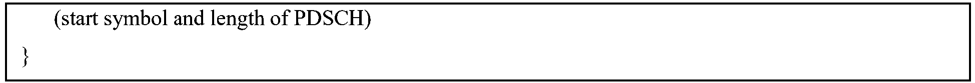

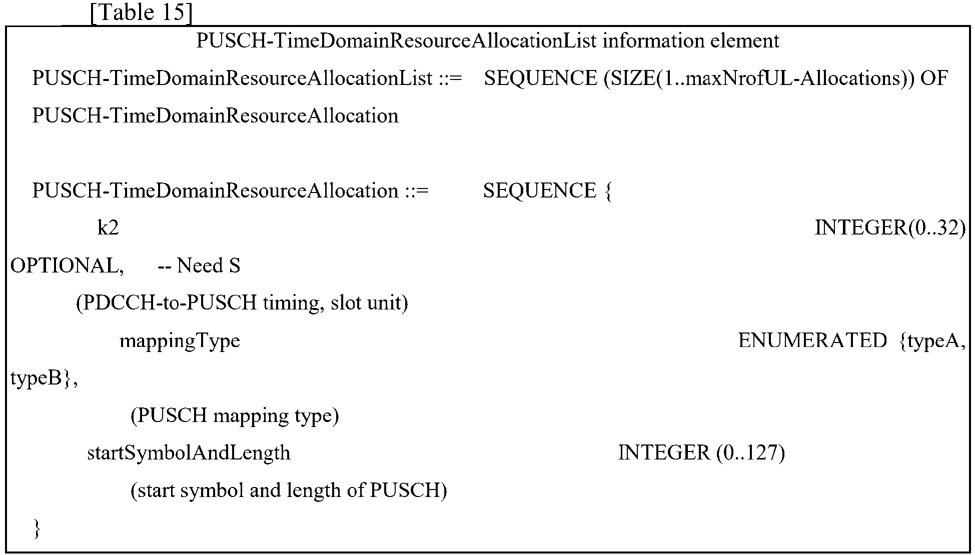

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

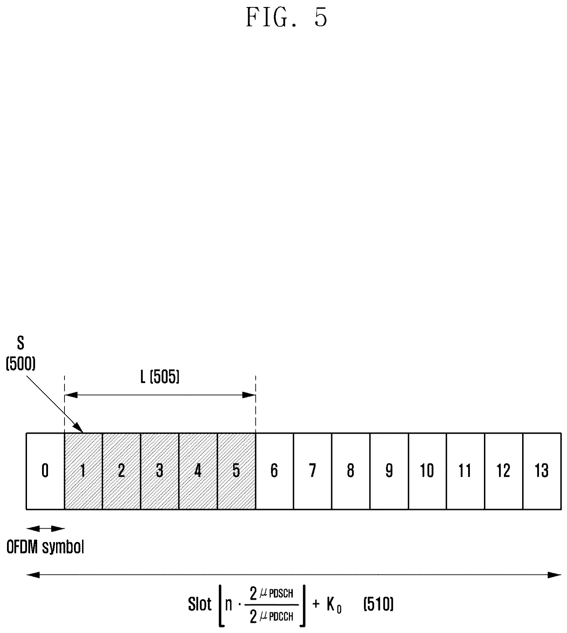

FIG. 5 illustrates an example of time domain resource allocation with regard to a PDSCH in a wireless communication system according to an embodiment of the disclosure.

Referring to FIG. 5, the base station may indicate the time domain location of a PDSCH resource according to the subcarrier spacing (SCS) (*µ*_{PDSCH}, *µ*_{PDCCH}) of a data channel and a control channel configured by using an higherf layer, the scheduling offset (K0) value, and the OFDM symbol start location 500 and length 505 within one slot dynamically indicated through DCI.

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1PUSCH transmission may be configured semi-statically by receiving configuredGrantConfig including rrc-ConfiguredUplinkGrant in Table 16 through higher signaling, without receiving a UL grant inside DCI. Configured grant Type 2PUSCH transmission may be scheduled semi-persistently by a UL grant inside DCI after receiving configuredGrantConfig not including rrc-ConfiguredUplinkGrant in Table 16 through higher signaling. If PUSCH transmission is operated by a configured grant, parameters applied to the PUSCH transmission are applied through configuredGrantConfig (higher signaling) in Table 16 except for dataScramblingIdentityPUSCH, txConfig, codebookSubset, maxRank, and scaling of UCI-OnPUSCH, which are provided by pusch-Config (higher signaling) in Table 17. If provided with transformPrecoder inside configuredGrantConfig (higher signaling) in Table 16, the UE applies tp-pi2BPSK inside pusch-Config in Table 17 to PUSCH transmission operated by a configured grant.

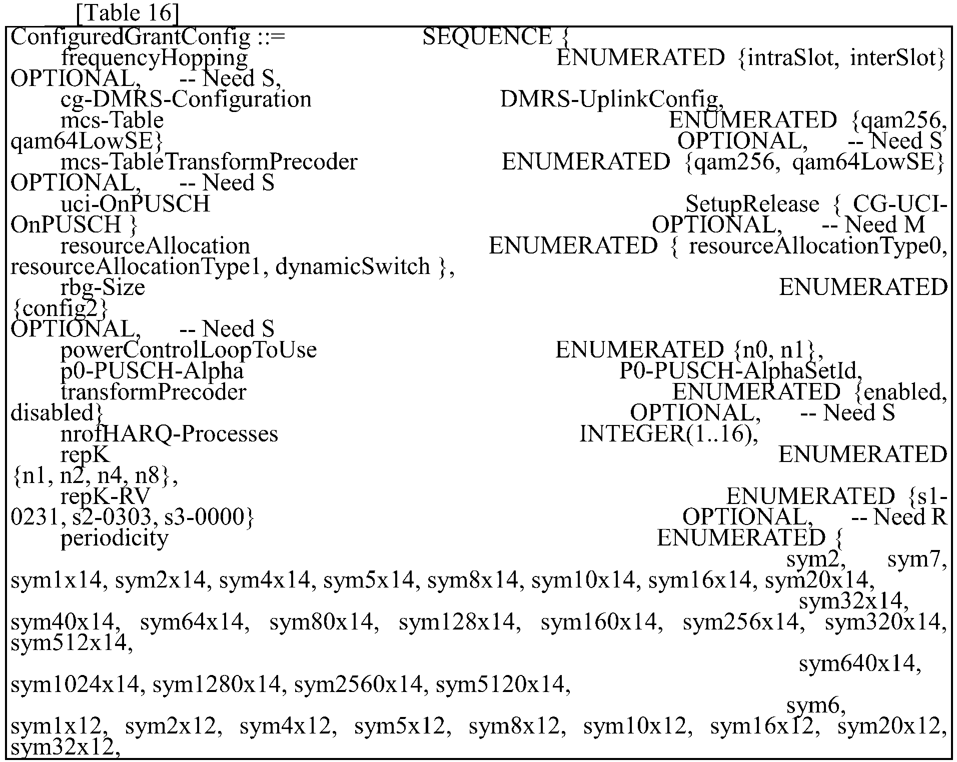

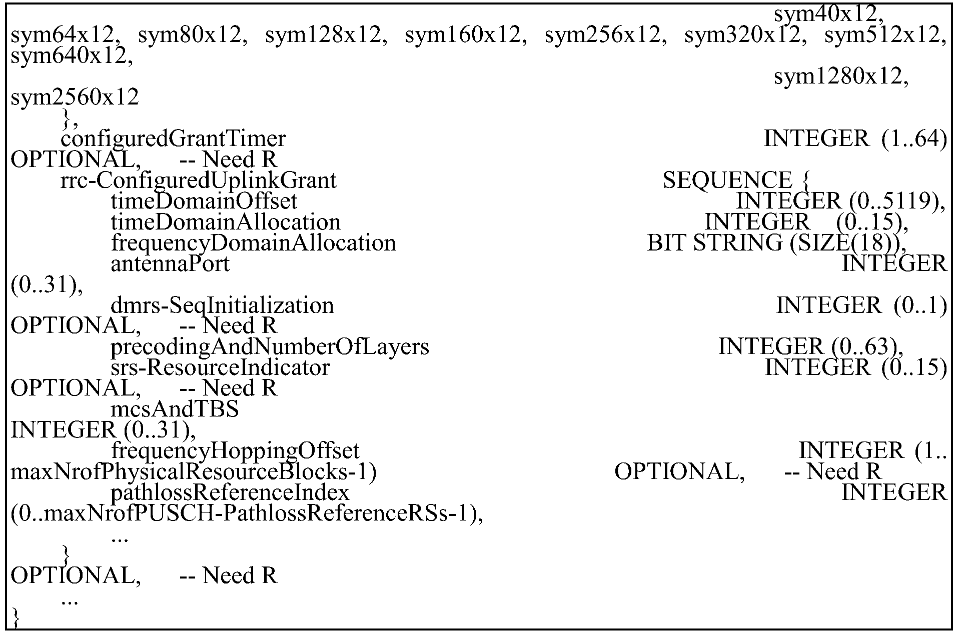

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 17, which is higher signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 17, the UE does not expect scheduling through DCI format 0_1.

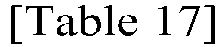

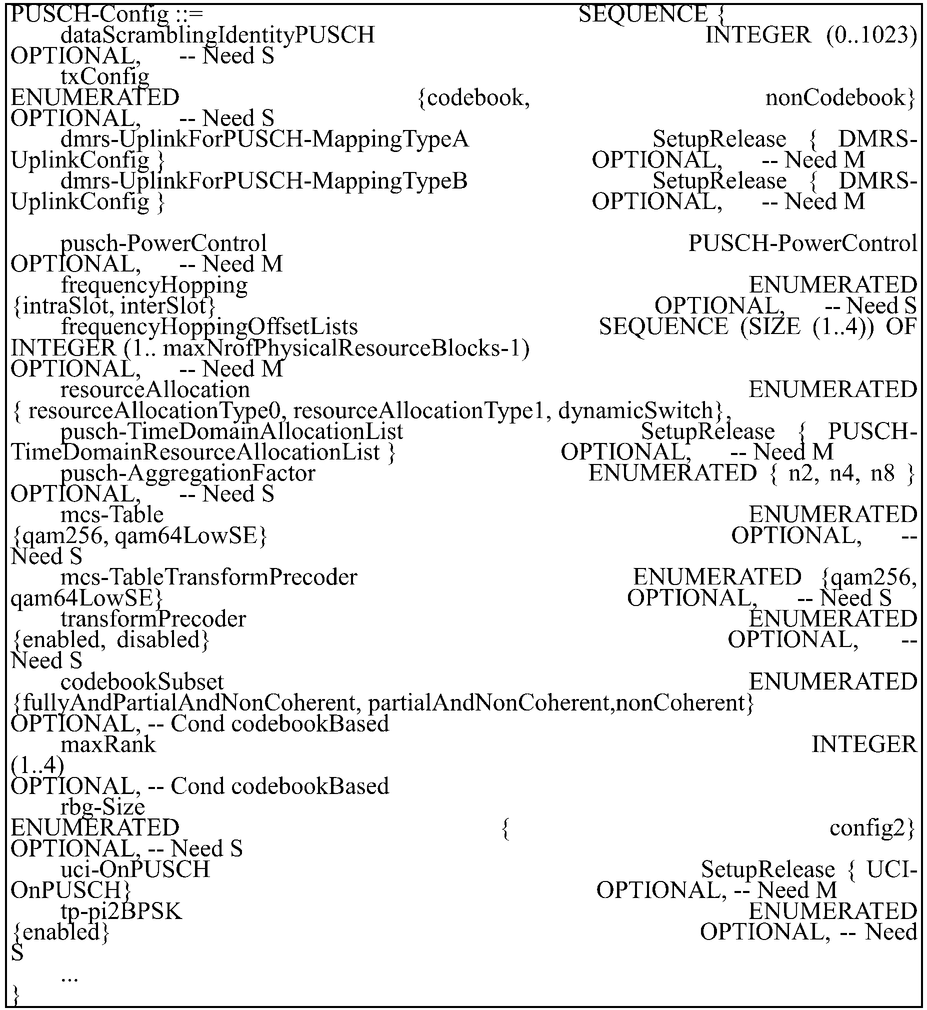

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (higher signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (higher signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (higher signaling). In connection with codebook-based PUSCH transmission, the UE determines a codebook subset, based on codebookSubset inside pusch-Config (higher signaling) and TPMI. The codebookSubset inside pusch-Config (higher signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (higher signaling) will be configured as "fullyAndPartialAndNonCoherent". In addition, if the UE reported "nonCoherent" as UE capability, UE does not expect that the value of codebookSubset (higher signaling) will be configured as "fullyAndPartialAndNonCoherent" or "partialAndNonCoherent". If nrofSRS-Ports inside SRS-ResourceSet (higher signaling) indicates two SRS antenna ports, the UE does not expect that the value of codebookSubset (higher signaling) will be configured as "partialAndNonCoherent".

The UE may have one SRS resource set configured therefor, wherein the value of usage inside SRS-ResourceSet (higher signaling) is "codebook", and one SRS resource may be indicated through an SRI inside the corresponding SRS resource set. If multiple SRS resources are configured inside the SRS resource set wherein the value of usage inside SRS-ResourceSet (higher signaling) is "codebook", the UE expects that the value of nrofSRS-Ports inside SRS-Resource (higher signaling) is identical for all SRS resources.

The UE transmits, to the base station, one or multiple SRS resources included in the SRS resource set wherein the value of usage is configured as "codebook" according to higher signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (higher signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is higher signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (higher signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE may transmit the PUSCH by applying the precoder applied to SRS resource transmission to each layer.

Hereinafter, a method for determining the transmission power of an uplink data channel in a 5G system will be described in detail.

In a 5G system, the transmission power of an uplink data channel may be determined according to the following Equation 1: $\begin{matrix}{P}_{PUSCH b , f , c} \left(i, j, {q}_{d}, l\right) = min \left\{\begin{matrix}{P}_{CMAX f , c} \left(i\right) , \\ {P}_{O _ PUSCH b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF b , f , c} \left(i\right) + {f}_{b , f , c} \left(i, l\right)\end{matrix}\right\} \\ \left[dBm\right]\end{matrix}$

In Equation 1, *j* refers to the grant type of the PUSCH. Specifically, j = 0 refers to a PUSCH grant regarding a random access response, j = 1 refers to a configured grant, and *j* ∈ {2,3,..., J-1} refers to a dynamic grant. *P*_{*CMAX*,*f*,*c*}(*i*) refers to the maximum output power configured for the UE regarding carrier *f* of support cell c with regard to PUSCH transmission occasion *i. P*_{0_*PUSCH*,*b*,*f*,*c*}(*j*) is a parameter configured by the sum of *P*_{0_*NOMINAL*_*PUSCH*,*f*,*c*}(*j*) which is configured by a higher-layer parameter and *P*_{0_*UE*_*PUSCH*,*b*,*f*,*c*}(*j*) which may be determined through a higher-layer parameter configuration and an SRI (in the case of a dynamic grant PUSCH). ${M}_{RB , b , f , c}^{PUSCH} \left(i\right)$ refers to a bandwidth regarding resource allocation expressed by the number of RBs with regard to PUSCH transmission occasion i. Δ_{*TF*,*b*,*f*,*c*}(*i*) refer to a value determined according to the modulation coding scheme (MCS) and the type of information transmitted through the PUSCH (for example, whether UL-SCH is included or whether CSI is included), and the like.

*α*_{*b*,*f*,*c*}(*j*) refers to a value that may be determined through a higher-layer configuration for compensating for pathloss and an SRI (in the case of a dynamic grant PUSCH).

*PL*_{*b*,*f*,*c*}(*q_{d}*) refers to a downlink pathloss estimation value estimated by the UE through a reference signal the reference signal index of which is q_{d}. The reference signal index q_{d} may be determined by the UE through a higher-layer configuration and an SRI (in the case of a dynamic grant PUSCH or a configured grant PUSCH based on ConfiguredGrantConfig including no rrc-ConfiguredUplinkGrant (higher-layer configuration) (type 2 configured grant PUSCH)) or through a higher-layer configuration.

*f*_{*b*,*f*,*c*}(*i*,*l*) refers to a closed loop power adjustment value and may be supported in an accumulation type and in an absolute type. In case that the UE has no higher-layer parameter tpc-Accumulation configured therefor, the closed loop power adjustment value may be determined in the accumulation mode type. In this case, *f*_{*b*,*f*,*c*}(*i*,*l*) is the sum of the closed loop power adjustment value regarding previous PUSCH transmission occasion i-i₀ and TPC command values regarding closed loop index *l* received through DCI, between symbol K_{PUSCH}(i-i₀)-1 for transmitting PUSCH transmission occasion i-i₀ and symbol K_{PUSCH}(i) for transmitting PUSCH transmission occasion i ( ${f}_{b , f , c} \left(i-{i}_{0 ,}l\right) + {\sum }_{m = 0}^{c \left({D}_{i}\right) - 1} {δ}_{PUSCH , b , f , c} \left(m, l\right)$). In case that the UE has higher-layer parameter tpc-Accumulation configured therefor, *f*_{*b*,*f*,*c*}(*i,l*) is a TPC command value δ_{*PUSCH*,*b*,*f*,*c*}(*i,l*) regarding closed loop index *l* received through DCI. In case that the UE has higher-layer parameter twoPUSCH-PC-AdjustementStates configured therefor, closed loop index *l* may be 0 or 1, and may have a value determined through a higher-layer parameter configuration and an SRI (in the case of a dynamic grant PUSCH). The mapping relationship between the TPC command field in the DCI and the TPC value δ_{*PUSCH*,*b*,*f*,*c*} according to the accumulation type and the absolute type may be defined as in Table 18 below:

**[Table 18]**

| TPC command field | Accumulated δ_{*PUSCH*,*b*,*f*,*c*} [dB] | Absolute δ_{*PUSCH*,*b*,*f*,*c*}[dB] |
|---|---|---|
| 0 | -1 | -4 |
| 1 | 0 | -1 |
| 2 | 1 | 1 |
| 3 | 3 | 4 |

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange higher signaling information as follows, in order to transfer information regarding the SRS resource set.
- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook",and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive higher layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through higher layer signaling including RRC signaling or MAC CE signaling, or L1 signaling (for example, DCI). For example, the base station may activate or deactivate periodic SRS transmission for the UE through higher layer signaling. The base station may indicate activation of an SRS resource set having resourceType configured as "periodic" through higher layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through higher layer signaling.

For example, the base station may activate or deactivate semi-persistent SRS transmission for the UE through higher layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through higher layer signaling.

For example, the base station may trigger aperiodic SRS transmission by the UE through DCI. The base station may indicate one of aperiodic SRS triggers (aperiodic SRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. The minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in consideration of the place of use of the SRS resource set including the transmitted SRS resource, the minimum time interval may be determined as N2 symbols, and if the place of use of the SRS resource set is configured as "nonCodebook" or "beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

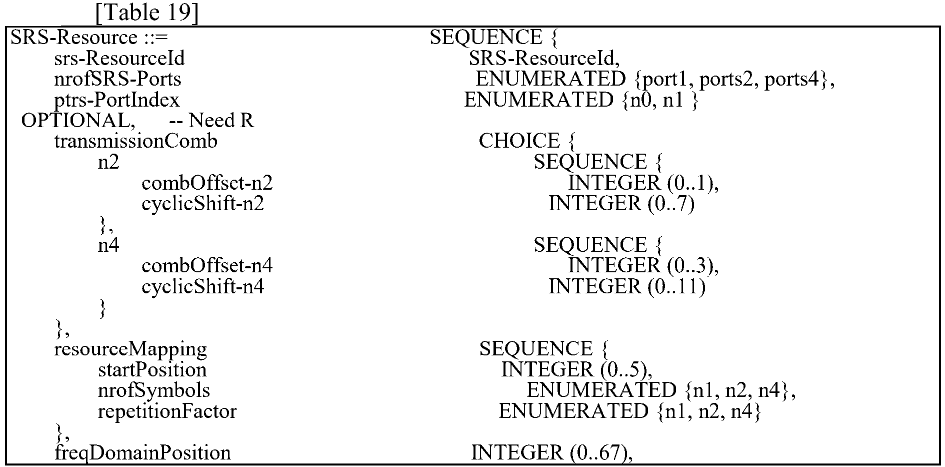

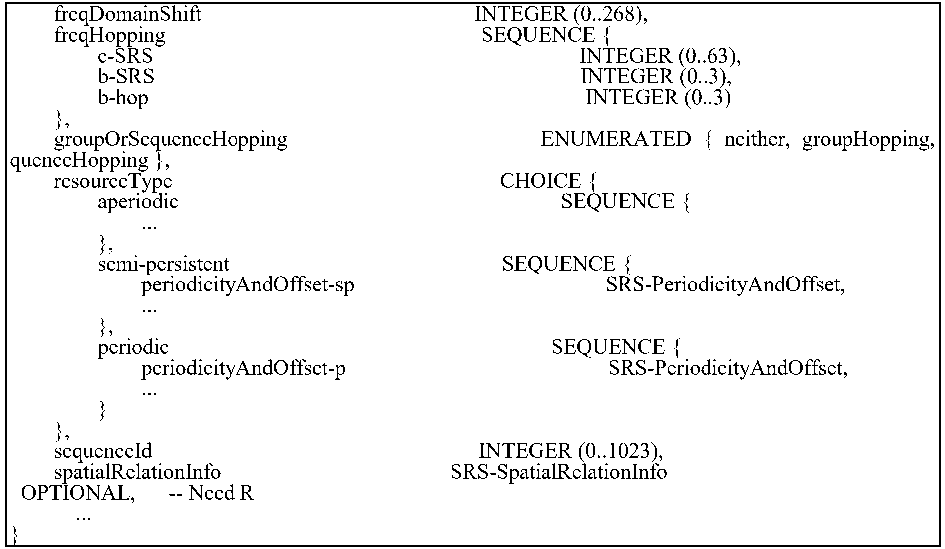

Configuration information spatialRelationInfo in Table 11 above may be applied, with reference to one reference signal, to a beam used for SRS transmission corresponding to beam information of the corresponding reference signal. For example, configuration of the spatialRelationInfo may include the following pieces of information as given in Table 20 below.

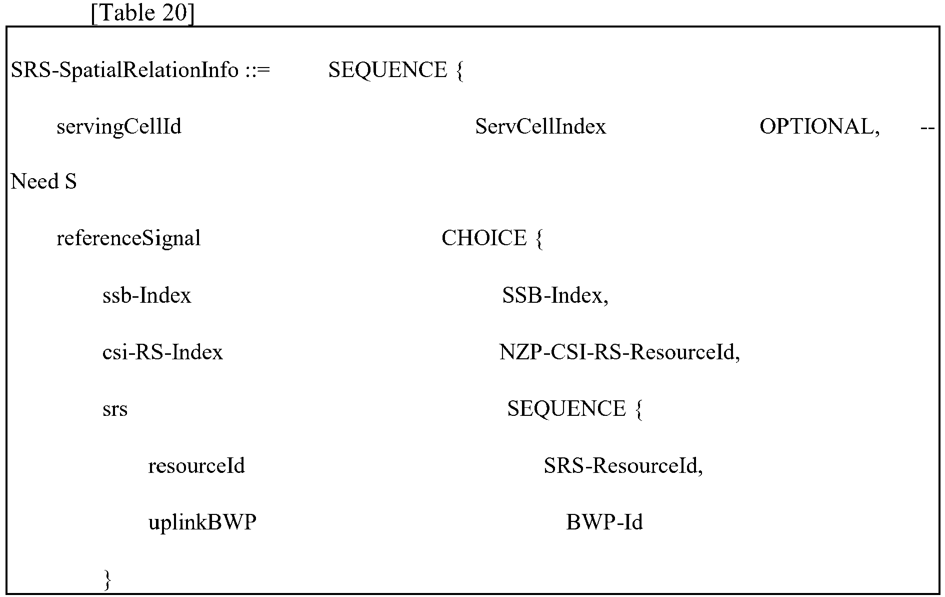

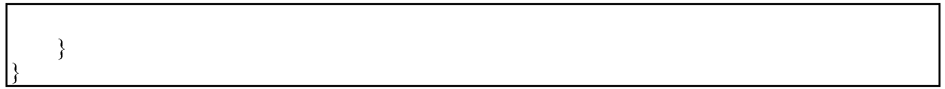

Referring to the spatialRelationInfo configuration, an SS/PBCH block index, CSI-RS index, or SRS index may be configured as the index of a reference signal to be referred to in order to use beam information of a specific reference signal. Higher signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If higher signaling referenceSignal has a configured value of "ssb-Index", the UE may apply the reception beam which was used to receive the SS/PBCH block corresponding to ssb-Index as the transmission beam for the corresponding SRS transmission. If higher signaling referenceSignal has a configured value of "csi-RS-Index", the UE may apply the reception beam which was used to receive the CSI-RS corresponding to csi-RS-Index as the transmission beam for the corresponding SRS transmission. If higher signaling referenceSignal has a configured value of "srs", the UE may apply the reception beam which was used to transmit the SRS corresponding to srs as the transmission beam for the corresponding SRS transmission.

Hereinafter, UE capability reporting will be described.

In LTE and NR systems, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.
1. If the UE receives a list regarding LTE and/or NR bands from the base station at a UE capability request,the UE may construct band combinations (BCs) regarding EN-DC and NR standalone(SA). That is, the UE configures a candidate list of BCs regarding EN-DC and NR SA, based on bands received from the base station at a request through FreqBandList. Bands have priority in the order described in FreqBandList.
2. If the base station has set"eutra-nr-only" flag or "eutra" flag and requested a UE capability report, the UE may remove everything related to NR SA BCs from the configured BC candidate list. Such an operation may occur only if an LTE base station (eNB) requests "eutra" capability.
3. The UE may then remove fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".
4. The UE selects BCs appropriate for the requested RAT type from the final "candidate BC list" and selects BCs to report. In this step, the UE configures supportedBandCombinationList in a determined order. That is, the UE configures BCs and UE capability to report according to a preconfigured rat-Type order. (nr - > eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

In addition, if the requested RAT type is eutra-nr and has an influence, featureSetCombinations may be included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

Hereinafter, non-coherent joint transmission (NC-JT) will be described. A UE may use NC-JT to receive PDSCHs from multiple TRPs.

Unlike the conventional system, the 5G wireless communication system may support not only a service requiring a high transmission rate, but also a service having a very short transmission delay and a service requiring a high connection density. In a wireless communication network including a plurality of cells, transmission and reception points (TRPs), or beams, coordinated transmission between respective cells, TRPs, and/or beams may satisfy various service requirements by increasing the strength of a signal received by the UE or efficiently controlling interference between the cells, TRPs, and/or beams.

Joint transmission (JT) is a representative transmission scheme for the aforementioned cooperative communication, and is a scheme for increasing the strength or throughput of a signal received by a UE, by transmitting the signal to one UE via multiple different cells, TRPs, and/or beams. Here, a channel between respective cells, TRPs, and/or beam and the UE may have different characteristics, and particularly, NC-JT supporting non-coherent precoding between respective cells, TRPs, and/or beams may need individual precoding, MCSs, resource allocations, and TCI indications according to the channel characteristics for each link between respective cells, TRPs, and/or beam and the UE.

The above-described NC-JT transmission may be applied to at least one of a downlink data channel (PDSCH), a downlink control channel (PDCCH), an uplink data channel (PUSCH), and an uplink control channel (PUCCH). During PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

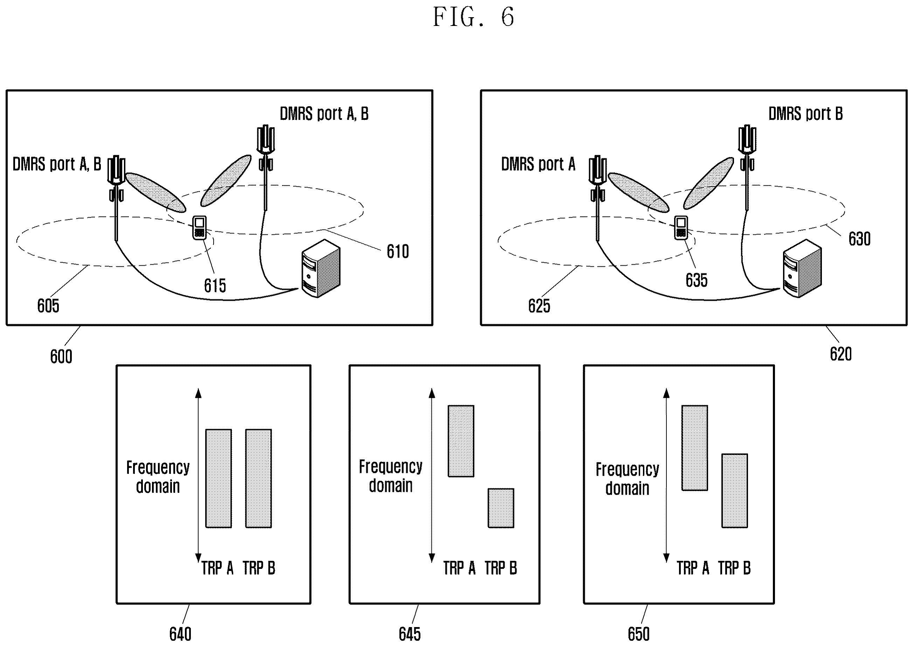

FIG. 6 illustrates an example of an antenna port configuration and resource allocation for PDSCH transmission using cooperative communication in a communication system.

Referring to FIG. 6, an example for PDSCH transmission is described for each scheme of joint transmission (JT), and examples for radio resource allocation for each TRP are illustrated.

Referring to FIG. 6, an example 600 of coherent joint transmission (C-JT) supporting coherent precoding between respective cells, TRPs, and/or beams is illustrated.

In the case of C-JT, a TRP A 605 and a TRP B 610 transmit single data (PDSCH) to a UE 615, and multiple TRPs may perform joint precoding. This may signify that the TRP A 605 and a TRP B 610 transmit DMRSs through the same DMRS ports in order to transmit the same PDSCH. For example, the TRP A 605 and a TRP B 610 may transmit DMRSs to the UE through a DMRS port A and a DMRS port B, respectively. In this case, the UE may receive one piece of DCI information for receiving one PDSCH demodulated based on the DMRSs transmitted through the DMRS port A and the DMRS port B.

FIG. 6 illustrates an example 620 of non-coherent joint transmission (NC-JT) that supports non-coherent precoding between respective cells, TRPs, or/and beams for PDSCH transmission.

In the case of NC-JT, the PDSCH is transmitted to a UE 635 per cell, per TPR, and/or per beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of descriptive convenience, a cell, a TRP, and/or a beam may be collectively referred to as a TRP.

In this case, various wireless resource allocations such as the case 640 in which frequency and time resources used by a plurality of TRPs for PDSCH transmission are all the same, the case 645 in which frequency and time resources used by a plurality of TRPs do not overlap at all, and the case 650 in which some of the frequency and time resources used by a plurality of TRPs overlap each other may be considered.

In order to support NC-JT, DCIs in various forms, structures, and relations may be considered to simultaneously allocate a plurality of PDSCHs to one UE.

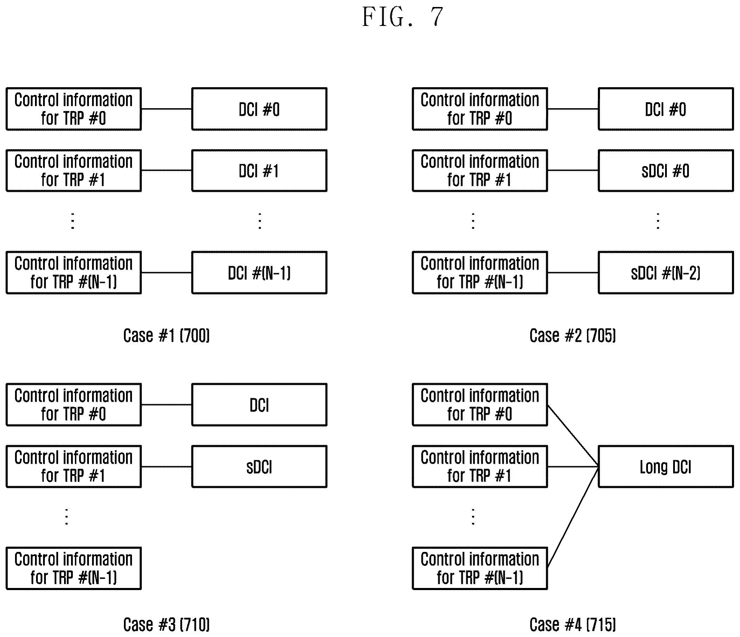

FIG. 7 illustrates an example of a downlink control information (DCI) configuration for NC-JT in which respective TRPs transmit different PDSCHs or different PDSCH layers to a UE in a wireless communication system.

Referring to FIG. 7, case #1 700 is an example in which control information for PDSCHs transmitted from (N-1) additional TRPs is transmitted independently from control information for a PDSCH transmitted from a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP #(N-1)) through independent DCIs (DC1 #0 to DCI #(N-1)). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 705 may be dependent on control information for a PDSCH, in which, in a situation where N-1 different PDSCHs are transmitted from N-1 additional TRPs (TRP#1 to TRP#N-1) in addition to a serving TRP (TRP#0) used during single PDSCH transmission, control information (DCI) for PDSCHs of the respective additional N-1 TRPs is transmitted, and each piece of the DCI is transmitted from the serving TRP.

For example, DCI #0 that is control information for a PDSCH transmitted from the serving TRP (TRP #0) may include all information elements of DCI format 1_0, DCI format 1_1, and DCI format 1_2, but shortened DCIs (hereinafter, referred to as sDCIs) (sDCI #0 to sDCI #(N-2)) that are control information for PDSCHs transmitted from the cooperative TRPs (TRP #1 to TRP #(N-1)) may include only some of the information elements of DCI format 1_0, DCI format 1_1, and DCI format 1_2. Accordingly, the sDCI for transmitting control information of PDSCHs transmitted from cooperative TPRs has smaller payload compared to the normal DCI (nDCI) for transmitting control information related to the PDSCH transmitted from the serving TRP, and thus can include reserved bits compared to the nDCI.

In case #2 described above, a degree of freedom of each PDSCH control or allocation may be limited according to content of information elements included in the sDCl, but reception capability of the sDCI is better than the nDCI, and thus a probability of the generation of difference between DCI coverages may become lower.

Case #3 710 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI such as a bandwidth part (BWP) indicator and a carrier indicator may follow the DCI (DCI #0, normal DCI, or nDCI) of the serving TRP.

In case #3 710, a degree of freedom of PDSCH control or allocation may be limited according to content of the information elements included in the sDCI but reception performance of the sDCI can be controlled, and case #3 710 may have smaller complexity of DCI blind decoding of the UE compared to case #1 700 or case #2 705.

Case #4 715 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP # (N-1)) through single DCI. In case #4 715, complexity of DCI blind decoding of the UE may not be

increased, but a degree of freedom of PDSCH control or allocation may be low, for example, the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, Case #1 700, case #2 705, and case #3 710 in which one or more pieces of DCI (or PDCCHs) are used to support NC-JT may be classified as multiple PDCCH-based NC-JT, and case #4 715 in which single DCI (or PDCCH) is used to support NC-JT may be classified as single PDCCH-based NC-JT. In multiple PDCCH-based PDSCH transmission, a CORESET for scheduling the DCI of the serving TRP (TRP #0) is separated from CORESETs for scheduling the DCI of cooperative TRPs (TRP #1 to TRP #(N-1)). A method of distinguishing the CORESETs may include a distinguishing method through a higher-layer indicator for each CORESET and a distinguishing method through a beam configuration for each CORESET. Furthermore, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

According to embodiments of the disclosure, the "cooperative TRP" may be replaced by various terms such as a "cooperative panel" or a "cooperative beam" when actually applied.

According to embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by one expression for the sake of descriptive convenience.

In the disclosure, a radio protocol structure for NC-JT may be used in various ways according to a TRP deployment scenario. For example, if there is no backhaul delay between cooperative TRPs or there is a small backhaul delay, a method (a CA-like method) using a structure based on MAC layer multiplexing can be used. On the other hand, when the backhaul delay between cooperative TRPs is too large to be ignored (for example, when a time of 2 ms or longer is needed to exchange information such as CSI, scheduling, and HARQ-ACK between cooperative TRPs), a method (a DC-like method) of securing a characteristic robust to a delay can be used through an independent structure for each TRP from an RLC layer.

The UE supporting C-JT/NC-JT may receive a C-JT/NC-JT-related parameter or a setting value from a higher-layer configuration and set an RRC parameter of the UE based on the same. For the higher-layer configuration, the UE may use a UE capability parameter, for example, tci-StatePDSCH. Here, the UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. A maximum value 128 refers to a value indicated by maxNumberConfiguredTCI statesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

Next, a multi-DCI-based multi-TRP transmission method will be described. The multi-DCI based multi-TRP transmission method is a method in which a downlink control channel for NC-JT is configured based on multi-PDCCHs to transmit a PDSCH.

NC-JT based on multiple PDCCHs may have CORESETs or search spaces distinguished between respective TRPs when the DCI for PDSCH scheduling of the respective TRPs is transmitted. The CORESET or search space for each TRP may be configured as at least one of the following cases.
- Higher-layer index configuration for each CORESET: CORESET configuration information configured via a higher layer may include an index value, and a TRP for PDCCH transmission in a corresponding CORESET may be distinguished by a configured index value for each CORESET. That is, in a set of CORESETs having the same higher-layer index value, it may be considered that the same TRP transmits the PDCCH or that the PDCCH for scheduling the PDSCH of the same TRP is transmitted. The index for each CORESET may be named CORESETPoolIndex, and it may be considered that the PDCCH is transmitted from the same TRP in CORESETs in which the same CORESETPoolIndex value is configured. In the CORESET in which the same CORESETPoolIndex value is not configured, it may be considered that a default value of CORESETPoolIndex is configured, and the default value may be 0.
   > In the disclosure, when the number of types of CORESETPoolIndex of each of a plurality of CORESETs included in higher-layer signaling PDCCH-Config is larger than 1, that is, when respective CORESETs have different CORESETPoolIndex, the UE may consider that the base station can use a multi-DCI-based multi-TRP transmission method.
   > Unlike this, in the disclosure, when the number of types of CORESETPoolIndex of each of a plurality of CORESETs included in higher-layer signaling PDCCH-Config is 1, that is, when all CORESETs have the same CORESETPoolIndex of 0 or 1, the UE may consider that the base station performs transmission using a single-TRP instead of using the multi-DCI-based multi-TRP transmission method.
- Multi-PDCCH-Config configuration: Multiple values of PDCCH-Config may be configured in one BWP, and each PDCCH-Config may include a PDCCH configuration for each TRP. That is, a list of CORESETs for each TRP and/or a list of search spaces for each TRP may be included in one PDCCH-Config, and it may be considered that one or more CORESETs and one or more search spaces included in one PDCCH-Config correspond to a specific TRP.
- CORESET beam/beam group configuration: A TRP corresponding to a corresponding CORESET may be distinguished via a beam or beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.
- Search space beam/beam group configuration: A beam or beam group may be configured for each search space, and a TRP for each search space may be distinguished based on the configured beam or beam group. For example, if the same beam/beam group or TCI state is configured for multiple search spaces, it may be considered or determined that the same TRP transmits a PDCCH in a corresponding search space or that a PDCCH for scheduling of a PDSCH of the same TRP is transmitted in the corresponding search space.

As described above, by distinguishing the CORESETs or search spaces according to TRPs, it may be possible to classify PDSCH and HARQ-ACK information for each TRP, and based on this, it may be possible to independently generate an HARQ-ACK codebook and independently use a PUCCH resource for each TRP.

The configuration may be independent for each cell or each BWP. For example, while two different CORESETPoolIndex values are configured for a PCell, a CORESETPoolIndex value may not be configured for a specific SCell. In this case, it may be considered that NC-JT transmission has been configured for the PCell, whereas NC-JT transmission has not been configured for the SCell for which no CORESETPoolIndex value has been configured.

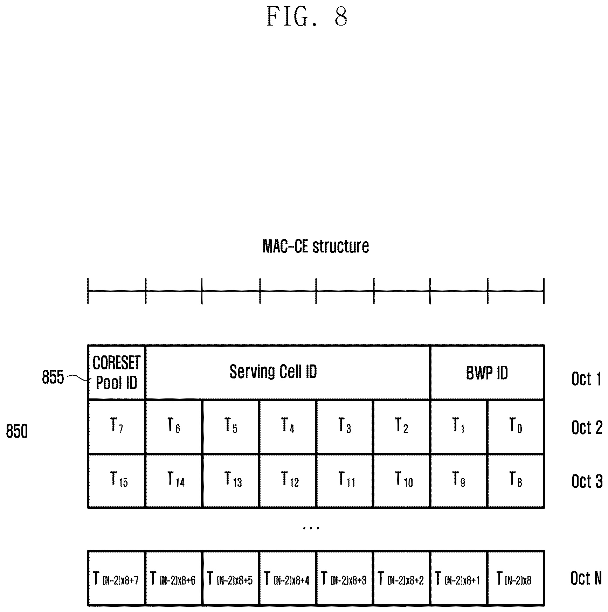

A PDSCH TCI state activation/deactivation MAC-CE which can be applied to the multi-DCI-based multi-TRP transmission method may follow FIG. 8.

FIG. 8 illustrates an example of a PDSCH TCI state activation/deactivation MAC-CE. If the UE does not receive a configuration of CORESETPoolIndex for each of all CORESETs within higher-layer signaling PDCCH-Config, the UE may ignore a CORESET Pool ID field 955 within a corresponding MAC-CE 950. If the UE can support the multi-DCI-based multi-TRP transmission method, that is, when respective CORESETs within higher-layer signaling PDCCH-Config have different CORESETPoolIndex, the UE may activate a TCI state within the DCI included in PDCCHs transmitted in CORESETs having a CORESETPoolIndex value which is the same as a value of a CORESET Pool ID field 955 within the corresponding MAC-CE 950. For example, if the CORESET Pool ID field 955 within the corresponding MAC-CE 950 has a value of 0, a TCI state within the DCI included in PDCCHs transmitted by the CORESETs having CORSETPoolIndex of 0 may follow activation information of the corresponding MAC-CE.

If the UE receives, from the base station, a configuration such that the multi-DCI-based multi-TRP transmission method can be used, that is, the number of types of CORESETPoolIndex of a plurality of CORESETs included in higher-layer signaling PDCCH-Config is larger than 1 or respective CORESETs have different CORESETPoolIndex, the UE is able to know that there are the following restrictions on PDSCHs scheduled by PDCCHs within respective CORESETs having different two CORESETPoolIndex.

First, if PDSCH indicated by PDCCHs within respective CORESETs having different two CORESETPoollndex completely or partially overlap, the UE may apply TCI states indicated by the respective PDCCHs to different CDM groups. That is, two or more TCI states may not be applied to one CDM group

Secondly, if PDSCH indicated by PDCCHs within respective CORESETs having different two CORESETPoolIndex completely or partially overlap, the UE may expect that the numbers of actual front loaded DMRS symbols of respective PDSCHs, the numbers of actual additional DMRS symbols, locations of actual DMRS symbols, and DMRS types are not different.

Thirdly, the UE may expect that bandwidth parts indicated by PDCCHs within respective CORESETs having different two CORESETPoolIndexs are the same and subcarrier spacings are also the same.

Fourthly, the UE may expect that information on PDSCH scheduled by PDCCHs within respective CORESETs having different two CORESETPoolIndex are completely included in respective PDCCHs.

Next, a single-DCI-based multi-TRP transmission method will be described. The single-DCI-based multi-TRP transmission method is a method in which a downlink control channel for NC-JT is configured based on a single-PDCCH to transmit a PDSCH.

In the single-DCI-based multi-TRP transmission method, PDSCHs transmitted by a plurality of TRPs may be scheduled by one piece of DCI. Here, as a method of indicating the number of TRPs transmitting the corresponding PDSCHs, the number of TCI states may be used. That is, when the number of TCI states indicated by the DCI for scheduling the PDSCHs is 2, single PDCCH-based NC-JT transmission may be considered, and when the number of TCI states is 1, single-TRP transmission may be considered. The TCI states indicated by the DCI may correspond to one or two TCI states among TCI states activated by the MAC CE. If the TCI states of the DCI correspond to two TCI states activated by the MAC CE, a TCI codepoint indicated by the DCI is associated with the TCI states activated by the MAC CE, and this may correspond to a case in which the number of TCI states activated by the MAC CE, corresponding to the TCI codepoint, is 2.

As another example, when at least one of all codepoints of the TCI state field within the DCI indicate two TCI states, the UE may consider that the base station can perform transmission based on the single-DCI-based multi-TRP method. In this case, at least one codepoint indicating two TCI states within the TCI state field may be activated through an enhanced PDSCH TCI state activation/deactivation MAC-CE.

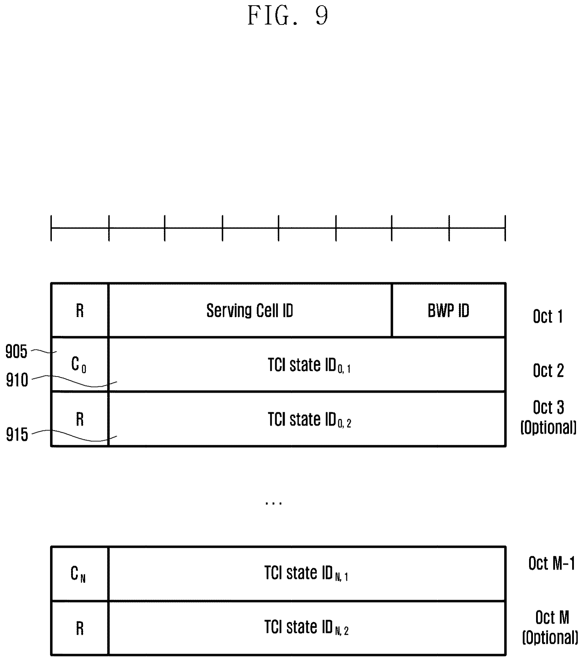

FIG. 9 illustrates an enhanced PDSCH TCI state activation/deactivation MAC-CE structure. The meaning of respective fields inside the MAC CE and values configurable for respective fields are as follows.
- Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- BWP ID: This field indicates a DL BWP for which the MAC CE applies as the codepoint of the DCI bandwidth part indicator field as specified in TS 38.212 [9]. The length of the BWP ID field is 2 bits.
- Ci: This field indicates whether the octet containing TCI state IDi,2 is present. If this field is set to 1, the octet containing TCI state IDi,2 is present. If this field is set to 0, the octet containing TCI state IDi,2 is not present;
- TCI state IDi,j: This field indicates the TCI state identified by TCI-StateId as specified in TS 38.331 [5], where i is the index of the codepoint of the DCI Transmission configuration indication field as specified in TS 38.212 [9] and TCI state IDi,j denotes the jth TCI state indicated for the ith codepoint in the DCI Transmission Configuration Indication field. The TCI codepoint to which the TCI States are mapped is determined by its ordinal position among all the TCI codepoints with sets of TCI state IDi,j fields, i.e. the first TCI codepoint with TCI state ID0,1 and TCI state ID0,2 shall be mapped to the codepoint value 0, the second TCI codepoint with TCI state ID1,1 and TCI state ID1,2 shall be mapped to the codepoint value 1 and so on. The TCI state IDi,2 is optional based on the indication of the Ci field. The maximum number of activated TCI codepoint is 8 and the maximum number of TCI states mapped to a TCI codepoint is 2.
- R: Reserved bit, set to 0.

In FIG. 9, if a C0 field 905 has a value of 1, the corresponding MAC-CE may include a TCI state ID0,2 field 910 in addition to a TCI state ID0,1 field 915. This signifies that a TCI state ID0, 1 and a TCI state ID0,2 are activated for a zeroth codepoint of the TCI state field included within the DCI, and when the base station indicates the corresponding codepoint to the UE, the UE may receive an indication of two TCI states. If the C0 field 905 has a value of 0, the corresponding MAC-CE is unable to include the TCI state ID0,2 field 915, and this signifies that one TCI state corresponding to the TCI state ID0, 1 is activated for the zeroth codepoint of the TCI state field included in the DCI.

The configuration may be independent for each cell or each BWP. For example, while a maximum number of activated TCI states corresponding to one TCI codepoint is 2 in the PCell, a maximum number of activated TCI states corresponding to one TCI codepoint may be 1 in a specific SCell. In this case, it may be considered that NC-JT is configured for the PCell but NC-JT is not configured for the SCell.

Next, a method of distinguishing between single-DCI-based multi-TRP PDSCH repetition transmission schemes will be described. The UE may receive an indication of different single-DCI-based multi-TRP PDSCH repetition transmission schemes (for example, time division multiplexing (TDM), FDM, and spatial division multiplexing (SDM)) from the base station according to a value indicated by a DCI field and a higher-layer signaling configuration. Table 21 below shows a method of distinguishing single or multi-TRP-based schemes indicated to a UE according to a specific DCI field value and a higher-layer signaling configuration.

**[Table 21]**

| Combi nation | No. of TCI states | No. of CDM groups | repetitionNumber configuration and indication condition | Regarding repetitionScheme configuration | Transmission technique indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme A/FDM scheme B/TDM scheme A |
| 9 | 2 | 2 | Condition 1 | Not configured | Multi-TRP TDM scheme B |

Each column in Table 21 above may be described as follows.
- Number of TCI states (second column): refers to the number of TCI states indicated by a TCI state field within the DCI, and may be 1 or 2.
- Number of CDM groups (third column): refers to the number of different CDM groups of DRMS ports indicated by an antenna port field within the DCI. The number of CDM groups may be 1, 2, or 3.
- RepetitionNumber configuration and indication condition (fourth column): has three conditions according to whether repetitionNumber for all TDRA entries which can be indicated by a time domain resource allocation field within the DCI is configured and whether an actually indicated TDRA entry has a repetitionNumber configuration.
   > Condition 1: case in which at least one of all TDRA entries which can be indicated by the time domain resource allocation field includes the configuration for repetitionNumber and the TDRA entry indicated by the time domain resource allocation field within the DCI includes the configuration of repetitionNumber larger than 1.
   > Condition 2: case in which at least one of all TDRA entries which can be indicated by the time domain resource allocation field includes the configuration for repetitionNumber and the TDRA entry indicated by the time domain resource allocation field within the DCI does not include the configuration for repetitionNumber.
   > Condition 3: case in which all TDRA entries which can be indicated by the time domain resource allocation field do not include the configuration for repetitionNumber.
- Regarding a repetitionScheme configuration (fifth column): refers to whether repetitionScheme which is higher-layer signaling is configured. RepetitionScheme which is higher-layer signaling may receive a configuration of one of 'tdmSchemeA', and 'fdmSchemeA', 'fdmSchemeB'.
- Transmission scheme indicated to UE (sixth column): refers to single or multiple-TRP schemes indicated according to each combination (first column) expressed by Table 29 above.
   > Single-TRP: refers to single-TRP-based PDSCH transmission. If the UE receives a configuration of pdsch-AggegationFactor within higher-layer signaling PDSCH-config, the UE may receive scheduling of single TRP-based PDSCH repeated transmission a number of times received through the configuration. Otherwise, the UE may receive scheduling of single TRP-based PDSCH single transmission.
   > Single-TRP TDM scheme B: refers to time resource division-based PDSCH repeated transmission between single TRP-based slots. The UE repeatedly transmits a PDSCH on a time dimension a number of times corresponding to the number of slots of repetitionNumber larger than 1 configured in the TDRA entry indicated by the time domain resource allocation field according to the above-described condition 1 related to repetitionNumber. In this case, a start symbol and a symbol length of the PDSCH indicated by the TDRA entry is equally applied to every slot corresponding to repetitionNumber and the same TCI state is applied to each PDSCH repeated transmission. The corresponding scheme is similar to a slot aggregation scheme in that the PDSCH repeated transmission between slots is performed in time resources but is different therefrom in that a repeated transmission indication is dynamically determined based on the time domain resource allocation field within the DCI.
   > Multi-TRP SDM: refers to a multi-TRP-based space resource division PDSCH transmission scheme. This is a method of dividing a layer and performing reception from each TRP and may increase reliability of PDSCH transmission in that transmission can be performed at a lowered coding rate through an increase in the number of layers even though it is not the repeated transmission scheme. The UE may receive a PDSCH by applying each of two TCI states indicated through the TCI state field within the DCI to two CDM groups indicated by the base station.
   > Multi-TRP FDM scheme A: refers to a multi-TRP-based frequency resource division PDSCH transmission scheme and is a scheme having one PDSCH transmission occasion and capable of performing transmission with higher reliability by increasing frequency resources and lowering a coding rate even though it is not the repeated transmission such as multi-TRP SDM. Multi-TRP FDM scheme A may apply two TCI states indicated through the TCI state field within the DCI to frequency resources which do not overlap each other. If the PRB bundling size is determined as a wideband and the number of RBs indicated by the frequency domain resource assignment field is N, the UE may receive first ceil (N/2) RBs by applying a first TCI state and receive the remaining floor(N/2) RBs by applying a second TCI state. Here, ceil(.) and floor(.) are operators for rounding up and rounding off the first decimal place. If the PRB bundling size is determined as 2 or 4, even-numbered PRGs are received by applying a first TCI state and odd-numbered PRGs are received by applying a second TCI state.
   > Multi-TRP FDM scheme B: refers to a multi-TRP-based frequency resource division PDSCH repeated transmission scheme and has two PDSCH transmission occasions to repeatedly transmit a PDSCH on each occasion. In the same manner as the multi-TRP FDM scheme A, multi-TRP FDM scheme B may also apply two TCI states indicated through the TCI state field within the DCI to frequency resources which do not overlap each other. If the PRB bundling size is determined as a wideband and the number of RBs indicated by the frequency domain resource assignment field is N, the UE may receive first ceil (N/2) RBs by applying a first TCI state and receive the remaining floor(N/2) RBs by applying a second TCI state. Here, ceil(.) and floor(.) are operators for rounding up and rounding off the first decimal place. If the PRB bundling size is determined as 2 or 4, even-numbered PRGs are received by applying a first TCI state and odd-numbered PRGs are received by applying a second TCI state.
   > Multi-TRP TDM scheme A: refers to a PDSCH repeated transmission scheme within a multi-TRP-based time resource division slot. The UE has two PDSCH transmission occasion within one slot, and a first reception occasion may be determined based on a start symbol and a symbol length of the PDSCH indicated through the time domain resource allocation field within the DCI. A start symbol of a second reception occasion of the PDSCH may be an occasion to which a symbol offset is applied by higher-layer signaling StartingSymbolOffsetK from the last symbol of the first transmission occasion, and the transmission occasion corresponding to the symbol length indicated therefrom may be determined. If higher-layer signaling StartingSymbolOffsetK is not configured, the symbol offset may be considered as 0.
   > Multi-TRP TDM scheme B: refers to a PDSCH repeated transmission scheme between multi-TRP-based time resource division slots. The UE has one PDSCH transmission occasion within one slot and may receive repeated transmission based on a start symbol and a symbol length of the same PDSCH during slots corresponding to repetitionNumber indicated by the time domain resource allocation field within the DCI. If repetitionNumber is 2, the UE may receive PDSCH repeated transmission of first and second slots by applying first and second TCI states, respectively. If repetitionNumber is larger than 2, the UE may use different TCI state application schemes according to configured higher-layer signaling tciMapping. If tciMapping is configured as cyclicMapping, first and second TCI states may be applied to first and second PDSCH transmission occasions, respectively, and the same TCI state application method is equally applied to the remaining PDSCH transmission occasions. If tciMapping is configured as sequenticalMapping, a first TCI state may be applied to first and second PDSCH transmission occasions, a second TCI state may be applied to third and fourth PDSCH transmission occasions, and the same TCI state application method may be equally applied to the remaining PDSCH transmission occasions.

Hereinafter, a method for indicating and activating a single TCI state, based on a unified TCI scheme, will be described. The unified TCI scheme may refer to a scheme wherein, although existing Rel-15 and 16 have used a TCI state scheme for a UE's downlink reception and have used a spatial relation info scheme for uplink transmission (separate transmission/reception beam management scheme), the same is managed in an integrated manner by using a TCI state. Therefore, in a case where a UE receives an indication from a base station, based on the unified TCI scheme, the UE may perform beam management even for uplink transmission by using a TCI state. If the higher layer signaling TCI-State having the higher layer signaling tci-stateId-r17 is configured for a UE by a base station, the UE may perform an operation based on the unified TCI scheme by using the TCI-State.

The TCI-State based on the unified TCI scheme may exist in two types (joint TCI state or separate TCI state).

The first type is a joint TCI state in which all TCI states to be applied to uplink transmission and downlink reception may be indicated to a UE by a base station through one TCI-State. If a TCI-State based on a joint TCI state has been indicated to the UE, a parameter to be used for downlink channel estimation may be indicated to the UE by using an RS corresponding to qcl-Type1 in the TCI-State based on a joint TCI state, and a parameter to be used as a downlink reception beam or reception filter may be indicated to the UE by using an RS corresponding to qcl-Type2 therein. If a TCI-State based on a joint TCI state has been indicated to the UE, a parameter to be used as an uplink transmission beam or transmission filter may be indicated to the UE by using an RS corresponding to qcl-Type2 therein in the TCI-State based on a joint DL/UL TCI state. If a joint TCI state is indicated to the UE, the UE may apply the same beam to uplink transmission and downlink reception.

The second type is a separate TCI state in which a UL TCI state to be applied to uplink transmission and a DL TCI state to be applied to downlink reception may be individually indicated to a UE by a base station. If a UL TCI state is indicated to the UE, a parameter to be used as an uplink transmission beam or transmission filter may be indicated to the UE by using a reference RS or a source RS configured in the UL TCI state. If a DL TCI state has been indicated to the UE, a parameter to be used for downlink channel estimation may be indicated to the UE by using an RS corresponding to qcl-Type1 in the DL TCI state, and a parameter to be used as a downlink reception beam or reception filter may be indicated to the UE by using an RS corresponding to qcl-Type2 therein.

If both a DL TCI state and a UD TCI state have been indicated to the UE, a parameter to be used as an uplink transmission beam or transmission filter may be indicated to the UE by using a reference RS or source RS configured in the UL TCI state, a parameter to be used for downlink channel estimation may be indicated to the UE by using an RS corresponding to qcl-Type1 configured in the DL TCI state, and a parameter to be used as a downlink reception beam or reception filter may be indicated to the UE by using an RS corresponding to qcl-Type2 configured therein. If the DL TCI state indicated to the UE and the reference RS or source RS configured in the UL TCI state are different, the UE may apply individual beams to uplink transmission and downlink reception, respectively, based on the UL TCI state and DL TCI state indicated thereto.

A maximum of 128 joint TCI states may be configured for a particular bandwidth part in a particular cell for the UE by the base station through higher layer signaling, a maximum of 64 or 128 DL TCI states among separate TCI states may be configured for a particular bandwidth part in a particular cell through higher layer signaling, based on a UE capability report, and a DL TCI state among separate TCI states and a joint TCI state may use the same higher layer signaling structure. As an example, if 128 joint TCI states have been configured, and if 64 DL TCI states have been configured among separate TCI states, the 64 DL TCI states may be included in the 128 joint TCI states.

A maximum of 32 or 64 UL TCI states among separate TCI states may be configured for a particular bandwidth part in a particular cell through higher layer signaling, based on a UE capability report, and a UL TCI state among separate TCI states and a joint TCI state may also use the same higher layer signaling structure like the relation between a DL TCI state among separate TCI states and a joint TCI state, or a UL TCI state among separate TCI states may also use a higher layer signaling structure different from that of a joint TCI state and a DL TCI state among separate TCI states.

Such use of different or identical higher layer signaling structures may be defined in specifications, or may be distinguished through different higher layer signaling configured by the base station, based on a UE capability report containing information regarding which is to be used among two schemes that the UE may support.

The UE may use one scheme, among a joint TCI state and a separate TCI state configured by the base station, thereby receiving an indication regarding transmission/reception beam according to a unified TCI scheme. Whether to use one of a joint TCI state and a separate TCI state may be configured for a UE by a base station through higher layer signaling.

The UE may receive an indication regarding transmission/reception beam by using a scheme selected from a joint TCI state and a separate TCI state through higher layer signaling, and the base station may indicate a transmission/reception beam in two methods (a MAC-CE-based indication method and a MAC-CE-based activation and DCI-based indication method).

If the UE receives an indication regarding transmission/reception beam by using a joint TCI state through higher layer signaling, the UE may receive a MAC-CE indicating a joint TCI state from the base station, thereby performing a transmission/reception beam application operation, and the base station may schedule reception regarding a PDSCH including the MAC-CE for the UE through a PDCCH. If the MAC-CE includes one joint TCI state set, the UE may determine an uplink transmission beam or transmission filter and a downlink reception beam or reception filter by using joint TCI states included in the indicated joint TCI state set 3ms after transmission of a PUCCH including HARQ-ACK information indicating whether or not the PDSCH is successfully received. If the MAC-CE includes two or more joint TCI state sets, the UE may identify that multiple joint TCI state sets indicated by the MAC-CE correspond to respective codepoints of the TCI state field of DCI format 1_1 or 1_2 and then activate the indicated joint TCI state sets, 3ms after transmission of a PUCCH including HARQ-ACK information indicating whether or not the PDSCH is successfully received. Thereafter, the UE may receive DCI format 1_1 or 1_2 to apply one joint TCI state indicated by a TCI state field in the DCI to uplink transmission and downlink reception beams. DCI format 1_1 or 1_2 may include downlink data channel scheduling information (with DL assignment) or may not include the same (without DL assignment).

If the UE receives an indication regarding transmission/reception beam by using a separate TCI state through higher layer signaling, the UE may receive a MAC-CE indicating a separate TCI state from the base station, thereby performing a transmission/reception beam application operation, and the base station may schedule reception regarding a PDSCH including the MAC-CE for the UE through a PDCCH. If the MAC-CE includes one separate TCI state set, the UE may determine an uplink transmission beam or transmission filter and a downlink reception beam or reception filter by using separate TCI states included in the indicated separate TCI state set 3 ms after transmission of a PUCCH including HARQ-ACK information indicating whether or not the PDSCH is successfully received. A separate TCI state set may indicate a single or multiple separate TCI states which one codepoint of a TCI state field in DCI format 1_1 or 1_2 may have, and one separate TCI state set may include one DL TCI state, include one UL TCI state, or include one DL TCI state and one UL TCI state. If the MAC-CE includes two or more separate TCI state sets, the UE may identify that multiple separate TCI state sets indicated by the MAC-CE correspond to respective codepoints of the TCI state field of DCI format 1_1 or 1_2 and then activate the indicated separate TCI state sets, 3 ms after transmission of a PUCCH including HARQ-ACK information indicating whether or not the PDSCH is successfully received. Each codepoint of the TCI state field of DCI format 1_1 or 1_2 may indicate one DL TCI state, may indicate one UL TCI state, or may indicate one DL TCI state and one UL TCI state. The UE may receive DCI format 1_1 or 1_2 to apply a separate TCI state set indicated by a TCI state field in the DCI to uplink transmission and downlink reception beams. DCI format 1_1 or 1_2 may include downlink data channel scheduling information (with DL assignment) or may not include the same (without DL assignment).

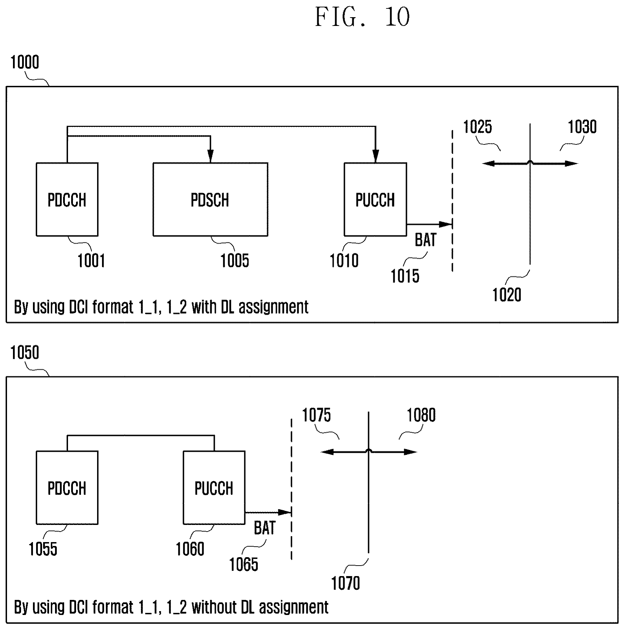

FIG. 10 illustrates a beam application time which may be considered in a case where a unified TCI scheme is used in a wireless communication system.

As described above, the UE may receive DCI format 1_1 or 1_2 including downlink data channel scheduling information (with DL assignment) or not including the same (without DL assignment) from the base station, and may apply one joint TCI state or separate TCI state set indicted by the TCI state field in corresponding DCI to uplink transmission and downlink reception beams.
- DCI format 1_1 or 1_2 with DL assignment (1000): If a UE receives, from a base station, DCI format 1_1 or 1_2 including downlink data channel scheduling information (1001) so that one joint TCI state or one separate TCI state set based on a unified TCI scheme is indicated, the UE may receive a PDSCH scheduled based on the received DCI (1005), and transmit a PUCCH including a HARQ-ACK indicating whether reception of the DCI and the PDSCH has been successful (1010). The HARQ-ACK may include whether reception has been successful, for both the DCI and the PDSCH, if the UE fails to receive at least one of the DCI and the PDSCH, the UE may transmit a NACK, and if the UE succeeds in receiving both of them, the UE may transmit an ACK.
- DCI format 1_1 or 1_2 without DL assignment (1050): If a UE receives, from a base station, DCI format 1_1 or 1_2 not including downlink data channel scheduling information (1055) so that one joint TCI state or one separate TCI state set based on a unified TCI scheme is indicated, the UE may assume at least one combination of the following items for the DCI.
   ■ The DCI includes a CRC scrambled using a CS-RNTI.
   ■ The values of all bits assigned to all fields used as redundancy version (RV) fields are 1.
   ■ The values of all bits assigned to all fields used as modulation and coding scheme (MCS) fields are 1.
   ■ The values of all bits assigned to all fields used as new data indication (NDI) fields are 0.
   ■ In a case of frequency domain resource allocation (FDRA) type 0, the values of all bits assigned to an FDRA field are 0, in a case of FDRA type 1, the values of all bits assigned to an FDRA field are 1, and in a case of an FDRA scheme being dynamicSwitch, the values of all bits assigned to an FDRA field are 0.

The UE may transmit a PUCCH including a HARQ-ACK indicating whether DCI format 1_1 or 1_2 for which the items described above are assumed has been successfully received (1060).
- With respect to both DCI format 1_1 or 1_2 with DL assignment (1000) and without DL assignment (5-50), if the new TCI state indicated through DCI 1001 or 1055 is the same as a TCI state that has previously been indicated and thus been being applied to uplink transmission and downlink reception beams, the UE may maintain the previously applied TCI state. If the new TCI state is different from the previously indicated TCI state, the UE may determine, as a time point for application of the joint TCI state or separate TCI state set, which is indicable by a TCI state field included in the DCI, a time point 1030 or 1080 after the first slot 1020 or 1070 after passage of a time interval as long as a beam application time (BAT) 1015 or 1065 after PUCCH transmission, and may use the previously indicated TCI state at a time point 1025 or 1075 before the slot 1020 or 1070.
- With respect to both DCI format 1_1 or 1_2 with DL assignment (1000) and without DL assignment (1050), the BAT is a particular number of OFDM symbols and may be configured through higher layer signaling, based on UE capability report information, and numerologies of the BAT and the first slot after the BAT may be determined based on the smallest numerology among all cells to which a joint TCI state or separate TCI state set indicated through DCI is applied.

A UE may apply one joint TCI state indicated through a MAC-CE or DCI to reception for control resource sets connected to all UE-specific search spaces, reception of a PDSCH scheduled by a PDCCH transmitted from the control resource sets and transmission of a PUSCH, and transmission of all PUCCH resources.

If one separate TCI state set indicated through a MAC-CE or DCI includes one DL TCI state, a UE may apply the one separate TCI state set to reception for control resource sets connected to all UE-specific search spaces and to reception of a PDSCH scheduled by a PDCCH transmitted from the control resource sets, and apply a previously indicated UL TCI state to all PUSCH and PUCCH resources.

If one separate TCI state set indicated through a MAC-CE or DCI includes one UL TCI state, a UE may apply the one separate TCI state set to all PUSCH and PUCCH resources, and apply a previously indicated DL TCI state to reception for control resource sets connected to all UE-specific search spaces and reception of a PDSCH scheduled by a PDCCH transmitted from the control resource sets.

If one separate TCI state set indicated through a MAC-CE or DCI includes one DL TCI state and one UL TCI state, a UE may apply the DL TCI state to reception for control resource sets connected to all UE-specific search spaces and reception of a PDSCH scheduled by a PDCCH transmitted from the control resource sets, and apply the UL TCI state to all PUSCH and PUCCH resources.

Hereinafter, a single TCI state indication and activation method based on a unified TCI scheme is described. A PDSCH including a MAC-CE described below may be scheduled to a UE by a base station, and the UE may interpret each codepoint of a TCI state field in DCI format 1_1 or 1_2, based on information in the MAC-CE received from the base station, after 3 slots from transmission of a HARQ-ACK for the PDSCH to the base station. That is, the UE may activate each entry of the MAC-CE received from the base station in each codepoint of the TCI state field in DCI format 1_1 or 1_2.

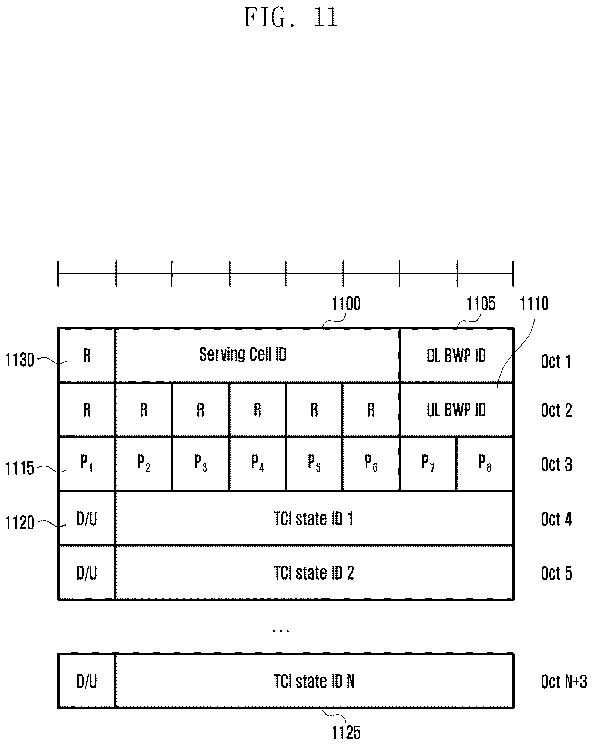

FIG. 11 illustrates an example of an MSC-CE structure for activation and indication of a joint TCI state or a separate DL or UL TCI state in a wireless communication system. Each field in the MAC-CE structure may have the following meaning.
- Serving Cell ID 1100: This field may indicate which serving cell to which a corresponding MAC-CE is to be applied. The length of this field may be 5 bits. If a serving cell indicated by this field is included in at least one of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more lists among simultaneousU-TCI-UpdateList1, simultaneousU-TCI-UpdateList2, simultaneousU-TCI-UpdateList3, or simultaneousU-TCI-UpdateList4, in which the serving cell indicated by the field is included.
- DL BWP ID 1105: This field may indicate which DL BWP to which the MAC-CE is to be applied, and the meanings of codepoints in the field may correspond to codepoints of a bandwidth part indicator in DCI, respectively. The length of this field may be 2 bits.
- UL BWP ID 1110: This field may indicate which UL BWP to which the MAC-CE is to be applied, and the meanings of codepoints in the field may correspond to codepoints of a bandwidth part indicator in DCI, respectively. The length of this field may be 2 bits.
- Pi 1115: This field may indicate whether each codepoint of a TCI state field in DCI format 1_1 or 1_2 has multiple TCI states or one TCI state. If the value of Pi is 1, this indicates that a corresponding i-th codepoint has multiple TCI states, and may imply that the codepoint may include a separate DL TCI state and a separate UL TCI state. If the value of Pi is 0, this indicates that a corresponding i-th codepoint has a single TCI state, and may imply that the codepoint may include one type among a joint TCI state, a separate DCI TCI state, or a separate UL TCI state.
- D/U 1120: This field may indicate whether a TCI state ID field in the same octet is a joint TCI state, a separate DL TCI state, or a separate UL TCI state. If the field is 1, a TCI state ID field in the same octet may be a joint TCI state or a separate DL TCI state, and If the field is 0, a TCI state ID field in the same octet may be a separate UL TCI state.
- TCI state ID 1125: This field may indicate a TCI state identifiable by the higher layer signaling TCI-StateId. If the D/U field is configured to be 1, the TCI state ID field may be used to represent TCI-StateId expressible by 7 bits. If the D/U field is configured to be 0, a most significant bit (MSB) of the TCI state ID field may be considered as a reserved bit, and the remaining 6 bits may be used to represent the higher layer signaling UL-TCIState-Id. The number of maximally activatable TCI states may be 8 in a case of joint TCI states, and may be 16 in a case of separate DL or UL TCI states.
- R: This indicates a reserved bit and may be configured to be 0.

With respect to the MAC-CE structure of FIG. 11, a UE may include, in the MAC-CE structure, a third octet including P1, P2,..., and P8 fields in FIG. 11 regardless of unifiedTCI-StateType-r17 in MIMOparam-r17 in the higher layer signaling ServingCellConfig being configured to be joint or separate. In this case, the UE may perform TCI state activation by using a fixed MAC-CE structure regardless of higher layer signaling configured by a base station. As another example, with respect to the MAC-CE structure of FIG. 11, a UE may omit the third octet including P1, P2,..., and P8 fields illustrated in FIG. 11, in a case where unifiedTCI-StateType-r17 in MIMOparam-r17 in the higher layer signaling ServingCellConfig being configured to be joint. In this case, the UE may save the payload of the MAC-CE by a maximum of 8 bits according to higher layer signaling configured by a base station. In addition, all D/U fields positioned on the first bits in octets starting from a fourth octet in FIG. 11 may be considered as R fields, and all the R fields may be configured to be 0 bits.

Next, additional methods for indicating and activating single and multiple TCI states, based on a unified TCI scheme, will be described. The UE may have a PDSCH including a MAC-CE configured by the base station, and may transmit a HARQ-ACK regarding the PDSCH to the base station by using three slots, after which the UE may interpret each codepoint of the TCI state field in DCI format 1_1 or 1_2, based on information in the MAC-CE received from the base station. That is, the UE may activate each entry of the MAC-CE received from the base station to each codepoint of the TCI state field in DCI format 1_1 or 1_2.

In case that the UE has two different CORESETPoolIndexes configured by higher-layer signaling and has DLorJointTCIState or UL-TCIState configured therefor as higher-layer signaling, the base station and the UE may expect that, in FIG. 11 which illustrates a MAC-CE structure for indicating unified TCI state activation, the R field 1130 existing in the first octet will be interpreted as a field indicating a CORESET Pool ID. In case that the configured CORESET Pool ID is 0, the UE may consider that the MAC-CE may be applied to each codepoint of the TCI state field in the PDCCH transmitted in the CORESET corresponding to CORESETPoolIndex 0. In case that the configured CORESET Pool ID is 1, the UE may consider that the MAC-CE may be applied to each codepoint of the TCI state field in the PDCCH transmitted in the CORESET corresponding to CORESETPoolIndex 1.

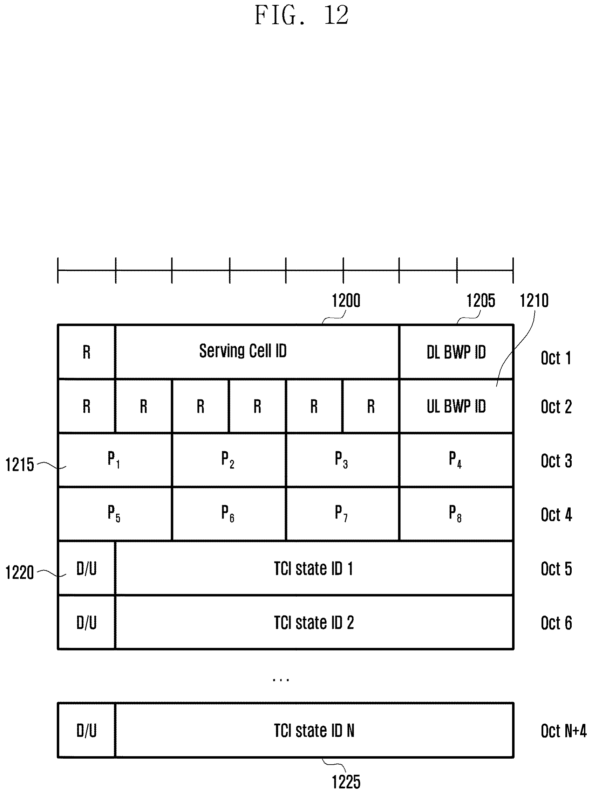

FIG. 12 illustrates another example of a MAC-CE structure for activating and indicating multiple joint TCI states or separate DL or UL TCI states in a wireless communication system. Each field in the MAC-CE structure may have the following meaning:
- Serving cell ID 1200: this field may indicate to which serving cell the MAC-CE will be applied. This field may have a 5-bit length. In case that the serving cell indicated by this field is included in one or more from among simultaneousU-TCI-UpdateList1, simultaneousU-TCI-UpdateList2, simultaneousU-TCI-UpdateList3, or simultaneousU-TCI-UpdateList4 (higher-layer signaling), the MAC-CE may be applied to all serving cells included in one or more lists from among simultaneousU-TCI-UpdateList1, simultaneousU-TCI-UpdateList2, simultaneousU-TCI-UpdateList3, and simultaneousU-TCI-UpdateList4 including the serving cell indicated by this field.
- DL BWP ID 1205: this field may indicate to which DL BWP the MAC-CE will be applied, and the meaning of each codepoint in this field may correspond to each codepoint of the BWP indicator in the DCI. This field may have a 2-bit length.
- UL BWP ID 1210: this field may indicate to which UL BWP the MAC-CE will be applied, and the meaning of each codepoint in this field may correspond to each codepoint of the BWP indicator in the DCI. This field may have a 2-bit length.
- Pᵢ 1215: this field may indicate whether each codepoint of the TCI state field in DCI format 1_1 or 1_2 will have multiple TCI states or one TCI state.
   > In case that the UE can configure unifiedTCI-StateType-r17 in MIMOparam-r17 in ServingCellConfig (higher-layer signaling) with regard to one of "joint" and "separate," this field may be interpreted as follows, regardless of which of the two pieces of configuration information has been configured.
      >> The value of Pᵢ, in the case of "00," means that the i^{th} codepoint corresponding thereto has a single TCI state. This may mean that the codepoint may include one of a joint TCI state, a separate DCI TCI state, or a separate UL TCI state.
      >> The value of Pᵢ, in the case of "01," means that the i^{th} codepoint corresponding thereto has two TCI states. This may mean the codepoint may include one from among two joint TCI states, one separate DL TCI state and one separate UL TCI state, two separate DL TCI states, or two separate UL TCI states.
      >> The value of Pᵢ, in the case of "10," means that the i^{th} codepoint corresponding thereto has three TCI states. This may mean the codepoint may include one separate DL TCI state and two separate UL TCI states, or two separate DL TCI states and one separate UL TCI state.
      >> The value of Pᵢ, in the case of "11," means that the i^{th} codepoint corresponding thereto has four TCI states. This may mean the codepoint may include two separate DL TCI states and two separate UL TCI states.
   > In case that the UE can configure unifiedTCI-StateType-r17 in MIMOparam-r17 in ServingCellConfig (higher-layer signaling) with regard to one of "joint," "separate," and "mixed mode," this field may be interpreted as follows, regardless of which of the configurable values has been configured. The mixed mode may be expressed as one configuration value meaning that a general mixed mode of a joint TCI state and a separate DL or UL TCI state is possible, or expressed as multiple configuration values such as "1joint+1DL" and "1joint+1UL," and may be configured to indicate a specific combination of a specific number of joint TCI states and a specific number of separate DL or UL TCI states.
      >> The value of Pᵢ, in the case of "00," means that the i^{th} codepoint corresponding thereto has a single TCI state. This may mean that the codepoint may include one of a joint TCI state, a separate DCI TCI state, or a separate UL TCI state.

The value of Pᵢ, in the case of "01," means that the i^{th} codepoint corresponding thereto has two TCI states. This may mean that the codepoint may include one from among two joint TCI states, one joint TCI state and one separate DL TCI state, one joint TCI state and one separate UL TCI state, one separate DL TCI state and one separate UL TCI state, two separate DL TCI states, or two separate UL TCI states. In case that the UE has unifiedTCI-StateType-r17 in MIMOparam-r17 in ServingCellConfig (higher-layer signaling) configured to have a value meaning that a general mixed mode of a joint TCI state and a separate DL or UL TCI state (for example, a mixed mode) is possible, the two cases described above (one joint TCI state and one separate DL TCI state/one joint TCI state and one separate UL TCI state) may be possible. In case that the UE has unifiedTCI-StateType-r17 in MIMOparam-r17 in ServingCellConfig (higher-layer signaling) configured to be one of "1joint+1DL" and "1joint+1UL," only the case corresponding to the unifiedTCI-StateType-r17 configuration value may be possible, among the above-described cases (one joint TCI state and one separate DL TCI state/one joint TCI state and one separate UL TCI state).
>> The value of Pᵢ, in the case of "10," means that the i^{th} codepoint corresponding thereto has three TCI states. This may mean the codepoint may include one separate DL TCI state and two separate UL TCI states, or two separate DL TCI states and one separate UL TCI state.

The value of Pᵢ, in the case of "11," means that the i^{th} codepoint corresponding thereto has four TCI states. This may mean the codepoint may include two separate DL TCI states and two separate UL TCI states.
> The corresponding field may have 2 bits.
   - D/U 1220: this field may indicate whether the TCI state ID field in the same octet is a joint TCI state, a separate DL TCI state, or a separate UL TCI state. In case that this field is 1, the TCI state ID field in the same octet may be a joint TCI state or a separate DL TCI state. In case that this field is 0, the TCI state ID field in the same octet may be a separate UL TCI state.
   - TCI state ID 1225: this field may indicate the TCI state that may be identified by TCI-StateId (higher-layer signaling). In case that the D/U field is configured to be 1, this field may be used to express TCI-StateId that may be expressed by 7 bits. In case that the D/U field is configured to be 0, the most significant bit (MSB) of this field may be regarded as a reserved bit, and the remaining 6 bits may be used to express UL-TCIState-Id (higher-layer signaling). The maximum number of TCI states that may be activated may be 8 in the case of the joint TCI state, and 16 in the case of the separate DL or UL TCI state.
   - R: refers to reserved bits and may be configured to be 0.

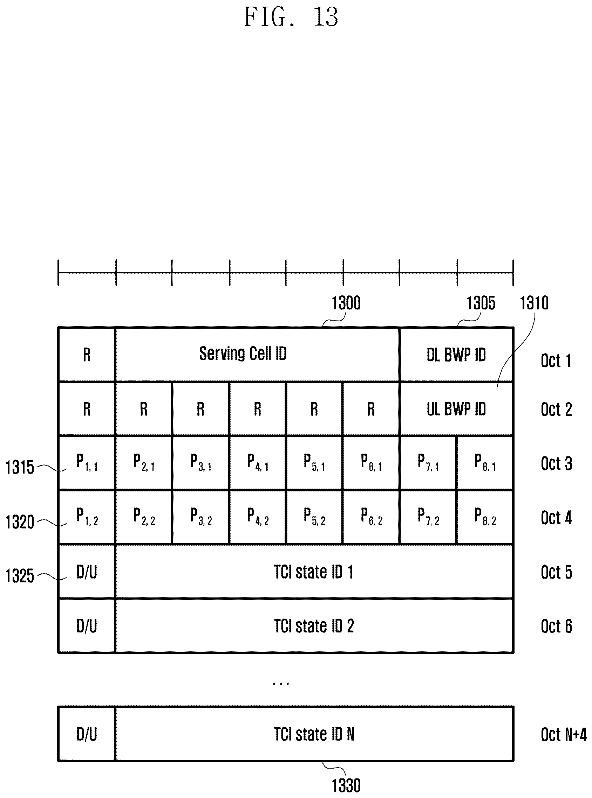

FIG. 13 illustrates another example of a MAC-CE structure for activating and indicating multiple joint TCI states or separate DL or UL TCI states in a wireless communication system. Each field in the MAC-CE structure may have the following meaning:
- Serving cell ID 1300: this field may indicate to which serving cell the MAC-CE will be applied. This field may have a 5-bit length. In case that the serving cell indicated by this field is included in one or more from among simultaneousU-TCI-UpdateList1, simultaneousU-TCI-UpdateList2, simultaneousU-TCI-UpdateList3, or simultaneousU-TCI-UpdateList4 (higher-layer signaling), the MAC-CE may be applied to all serving cells included in one or more lists from among simultaneousU-TCI-UpdateList1, simultaneousU-TCI-UpdateList2, simultaneousU-TCI-UpdateList3, and simultaneousU-TCI-UpdateList4 including the serving cell indicated by this field.
- DL BWP ID 1305: this field may indicate to which DL BWP the MAC-CE will be applied, and the meaning of each codepoint in this field may correspond to each codepoint of the BWP indicator in the DCI. This field may have a 2-bit length.
- UL BWP ID 1310: this field may indicate to which UL BWP the MAC-CE will be applied, and the meaning of each codepoint in this field may correspond to each codepoint of the BWP indicator in the DCI. This field may have a 2-bit length.
- P_{i,1} 1315 and P_{i,2} 1320: these two fields may indicate whether each codepoint of the TCI state field in DCI format 1_1 or 1_2 will have multiple TCI states or one TCI state.
   > In case that the UE can configure unifiedTCI-StateType-r17 in MIMOparam-r17 in ServingCellConfig (higher-layer signaling) with regard to one of "joint" and "separate," or with regard to one of "joint," "separate," and "mixed mode," and in case that unifiedTCI-StateType-r17 (higher-layer signaling) is configured to be "joint," the fourth octet including P_{1,2}, P_{2,2}, ..., P_{8,2} fields in FIG. 38 may be omitted, and P_{i,1} may solely be interpreted as follows. The mixed mode may be expressed as one configuration value meaning that a general mixed mode of a joint TCI state and a separate DL or UL TCI state is possible, or expressed as multiple configuration values such as "1joint+1DL" and "1joint+1UL," and may be configured to indicate a specific combination of a specific number of joint TCI states and a specific number of separate DL or UL TCI states.
      >> The value of P_{i,1}-, in the case of "0," means that the i^{th} codepoint corresponding thereto has one TCI state. This may mean that the codepoint may include one joint TCI state.
      >> The value of P_{i,1}-, in the case of "1," means that the i^{th} codepoint corresponding thereto has two TCI states. This may mean that the codepoint may include two joint TCI states.
   > In case that the UE can configure unifiedTCI-StateType-r17 in MIMOparam-r17 in ServingCellConfig (higher-layer signaling) with regard to one of "joint" and "separate," or with regard to one of "joint," "separate," and "mixed mode," and in case that unifiedTCI-StateType-r17 (higher-layer signaling) is configured to be "separate," the UE may regard P_{i,1} of the third octet and P_{i,2} of the fourth octet as a single 2-bit field and may interpret the same as follows. The mixed mode may be expressed as one configuration value meaning that a general mixed mode of a joint TCI state and a separate DL or UL TCI state is possible, or expressed as multiple configuration values such as "1joint+1DL" and "1joint+1UL," and may be configured to indicate a specific combination of a specific number of joint TCI states and a specific number of separate DL or UL TCI states.
   > The value of P_{i,1} and the value of P_{i,2}, in the case of "0" and "0," respectively, mean that the i^{th} codepoint corresponding thereto has a single TCI state. This may mean that the codepoint may include one of a separate DL TCI state or a separate UL TCI state.
   > The value of P_{i,1} and the value of P_{i,2}, in the case of "0" and "1," respectively, mean that the i^{th} codepoint corresponding thereto has two TCI states. This may mean that the codepoint may include one from among one separate DL TCI state and one separate UL TCI state, two separate DL TCI states, or two separate UL TCI states.
   > The value of P_{i,1} and the value of P_{i,2}, in the case of "1" and "0," respectively, mean that the i^{th} codepoint corresponding thereto has three TCI states. This may mean that the codepoint may include one separate DL TCI state and two separate UL TCI states, or two separate DL TCI states and one separate UL TCI state.
   > The value of P_{i,1} and the value of P_{i,2}, in the case of "1" and "1," respectively, mean that the i^{th} codepoint corresponding thereto has four TCI states. This may mean that the codepoint may include two separate DL TCI states and two separate UL TCI states.
   > In case that the UE can configure unifiedTCI-StateType-r17 in MIMOparam-r17 in ServingCellConfig (higher-layer signaling) with regard to one of "joint," "separate," and "mixed mode," and in case that unifiedTCI-StateType-r17 (higher-layer signaling) is configured to be "mixed mode," the UE may interpret P_{i,1} of the third octet as follows, and may not transmit the fourth octet. The mixed mode may be expressed as one configuration value meaning that a general mixed mode of a joint TCI state and a separate DL or UL TCI state is possible.
      >> The value of P_{i,1}, in the case of "0," may mean that the i codepoint corresponding thereto includes one joint TCI state and one separate DL TCI state.
      >> The value of P_{i,1}, in the case of "1," may mean that the i^{th} codepoint corresponding thereto includes one joint TCI state and one separate UL TCI state.

In case that the UE can configure unifiedTCI-StateType-r17 in MIMOparam-r17 in ServingCellConfig (higher-layer signaling) with regard to one of "joint," "separate," and "mixed mode," and in case that unifiedTCI-StateType-r17 (higher-layer signaling) is configured to be "mixed mode," the UE may interpret P_{i,1} of the third octet and P_{i,2} of the fourth octet as follows. The mixed mode may be expressed as one configuration value meaning that a general mixed mode of a joint TCI state and a separate DL or UL TCI state is possible.
>> The value of P_{i,1}, in the case of "0," may mean that the i^{th} codepoint corresponding thereto includes one joint TCI state only. That is, no mixed mode is used, and the value of P_{i,2} may thus be ignored.
>> The value of P_{i,1}, in the case of "1," may mean that the i^{th} codepoint corresponding thereto includes one joint TCI state and additionally includes one from among one separate UL TCI state and one separate DL TCI state. That is, the mixed mode may be used with regard to the codepoint. In case that the value of P_{i,2} is "0," one separate UL TCI state may be additionally used. In case that the value of P_{i,2} is "1," one separate UL TCI state may be additionally used.
   - D/U 1325: this field may indicate whether the TCI state ID field in the same octet is a joint TCI state, a separate DL TCI state, or a separate UL TCI state. In case that this field is 1, the TCI state ID field in the same octet may be a joint TCI state or a separate DL TCI state. In case that this field is 0, the TCI state ID field in the same octet may be a separate UL TCI state.
   - TCI state ID 1330: this field may indicate the TCI state that may be identified by TCI-StateId (higher-layer signaling). In case that the D/U field is configured to be 1, this field may be used to express TCI-Stateld that may be expressed by 7 bits. In case that the D/U field is configured to be 0, the most significant bit (MSB) of this field may be regarded as a reserved bit, and the remaining 6 bits may be used to express UL-TCIState-Id (higher-layer signaling). The maximum number of TCI states that may be activated may be 8 in the case of the joint TCI state, and 16 in the case of the separate DL or UL TCI state.
   - R: refers to reserved bits and may be configured to be 0.

The above-described unifiedTCI-StateType-r17 in MIMOparam-r17 in ServingCellConfig (higher-layer signaling) may be defined as a new parameter, such as unifiedTCI-StateType-r18 in MIMOparam-r18 (higher-layer signaling) in ServingCellConfig, or an existing parameter may be reused.

As used herein, the description that resources are transmitted/received may be understood as meaning that reference signals corresponding to resources are transmitted/received.

As described above in connection with the method for determining the transmission power of the uplink data channel of a 5G system, the UE may configure the maximum output power configured for the UE regarding carrier *f* of support cell c. The maximum rated output power of the UE configured as such is defined as P_{CMAX,f,c} (configured UE maximum output power), and this corresponds to the maximum rated output at the reference point of a given transmitter corresponding to the reference point of RSRP measurement.

In FR2, the rated maximum output power of the UE regarding carrier *f* of support cell c needs to be configured to correspond to P_{UMAX,f,c} which is the peak effective isotropically radiated power (EIRP) measured at carrier *f* of support cell c, and P_{UMAX,f,c} is configured by the UE within the upper and lower limits as in Equation 2 below. Therefore, P_{CMAX} of FR2 described in the disclosure may be interpreted as having the same meaning as P_{UMAX}. PPowerclass + ΔPIBE - MAX(MAX(MPRf,c, A- MPRf,c,) + ΔMBP,n, P-MPRf,c) - MAX{T(MAX(MPRf,c, A- MPRf,c,)), T(P-MPRf,c)} ≤ PUMAX,f,c ≤ EIRPmax

In [Equation 2], P_{Powerclass} is the minimum peak EIRP value of the UE defined as in the example in Table 22, and EIRPₘₐₓ is the allowable maximum EIRP value defined as in the example in Table 23.

**[Table 22]**

| Operating band | Min peak EIRP (dBm) |
|---|---|
| n257 | 22.4 |
| n258 | 22.4 |
| n259 | 18.7 |
| n260 | 20.6 |
| n261 | 22.4 |
| n262 | 16.0 |
| n263 | 14.1 |

**[Table 23]**

| Operating band | Max EIRP (dBm) | Max EIRP (dBm/MHz) |
|---|---|---|
| n257 | 43 | |
| n258 | 43 | |
| n259 | 43 | |
| n260 | 43 | |
| n261 | 43 | |
| n262 | 43 | |
| n263 | FFS | |
| | 40 | 23 |

In Equation 2, MPR_{f,c} is the allowable maximum power reduction value determined by the modulation scheme and the amount (that is, the bandwidth) of uplink transmission resources allocated to the UE regarding carrier *f* of support cell c. A-MPR_{f,c} is configured by network signaling (NS) of which the UE is informed by the base station for the purpose of regional regulations or avoiding adjacent band interference, and refers to a power reduction value additionally allowed in consideration of the frequency band in which uplink transmission is performed by carrier *f* of support cell c, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the supported bands and the number (n). ΔP_{IBE} is configured to be 1 dB or 0 dB depending on whether the UE supports *mpr-PowerBoost-FR2-r16.*

P-MPR_{f,c} refers to the power management maximum output power reduction, and the UE may configure the P-MPR_{f,c} value regarding carrier *f* of support cell c only in the following cases:
- In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference
- In the case of temporarily reducing the output through the proximity detection sensor mounted on the UE in order to comply with applicable electromagnetic power density exposure requirements which are regulated human impact assessment criteria

The UE calculates the maximum and minimum values of P_{CMAX,f,c} by using Equation 2, and then selects P_{CMAX,f,c} which satisfies various requirements at the corresponding timepoint between the two values.

### <First embodiment: a UE panel distinction method according to a beam reporting method for simultaneous transmission of multiple panels>

Hereinafter, according to an embodiment of the disclosure, a method in which a UE performs beam reporting to a base station in order to simultaneously transmit an uplink channel by using multiple panels, and a method of distinguishing transmission panels of the UE, based thereon, will be described in detail.

Beams regarding the uplink and downlink may be managed by using unified TCI which is a method for individually managing the same, or a method for unifying the same into one and then managing the same. As described previously, based on the unified TCI, not only a reception beam for receiving a downlink signal, but also a transmission beam for transmitting an uplink signal may be indicated through the TCI. To be specific, the transmission beam or reception beam may be determined with reference to a reference signal indicated by QCL-Info configured in the TCI state indicated to the UE by the base station. In case that the reference signal of QCL-Info configured in the TCI state indicated by the base station is a downlink reference signal (for example, CSI-RS or SSB), the UE may determine the transmission beam of the scheduled uplink channel or the reception beam of the scheduled downlink channel, based on the reception filter used to receive the downlink reference signal. In case that the base station has indicated TCI-UL-State to the UE, and in case that the reference signal configured in the indicated TCI-UL-State is an uplink reference signal (for example, SRS), the UE may determine the transmission beam of the scheduled uplink channel, based on the transmission filter used to transmit the uplink reference signal.

In order for the UE to transmit an uplink signal simultaneously by using multiple panels, a different uplink transmission filter may be required for each panel. This means that, if the UE selects two panels from multiple panels and transmits an uplink signal with respective transmission beams, two transmission beams need to be indicated by the base station. As an extension of this, if the UE selects *N* panels from multiple panels and transmits an uplink signal with respective transmission beams, N transmission beams need to be indicated by the base station. In a system in which, in order to support uplink simultaneous transmission using multiple panels, multi-panel simultaneous transmission is indicated based on a single DCI (sDCI), or multi-panel simultaneous transmission is indicated based on multiple DCIs (multi-DCI (mDCI)), a method in which *N* transmission beams are reported and the base station determines a transmission beam for multi-panel simultaneous transmission based thereon may be commonly applied to the sDCI-based system and the mDCI-based system. The base station may indicate, to the UE, the transmission beam for multi-panel simultaneous transmission determined in the same manner, and the UE may simultaneously transmit an uplink channel with multiple panels by applying the transmission beam indicated by the base station.

Alternatively, the UE may report N transmission beams to the sDCI-based system and the mDCI-based system, and the base station may determine the beam to be used for simultaneous transmission regardless of the type of the system, and indicate the same to the UE. Although such a method is applicable, the UE may apply indicated transmission beams to perform multi-panel simultaneous transmission through independent methods with regard to respective systems. Alternatively, the base station may instruct the UE to report N transmission beams through independent methods with regard to respective sDCI-based systems and mDCI-based systems, and the base station may independently determine transmission beams with regard to respective systems, based on the transmission beams reported by the UE. The base station may indicate the transmission beams determined with regard to respective systems to the UE, and the UE may simultaneously transmit an uplink channel with multiple panels by applying the transmission beams indicated by the base station.

The base station may instruct the UE to perform beam reporting in order to determine transmission beams of the UE. The UE may perform beam reporting by utilizing group-based beam reporting in order to perform beam reporting. To describe the group-based beam reporting in detail, CSI information reported to the base station by the UE may include the following pieces of information:
- Resource set indicator,
- First and second CRIs (CSI-RS resource indicators) or SSB resource indicators (SSBRIs) regarding each reported resource group (or the "reported resource group" may be defined as a "beam group" for convenience of description. A maximum of four groups may be defined, and the number of groups configured for the UE is determined based on an higher-layer parameter (for example, "nrofReportedGroups") configured by the base station
- An RSRP or a differential RSRP regarding a reported CRI or SSBRI. The RSRP is reported with 7 bits only with regard to the first resource of the first resource group, and differential RSRPs may be reported with 4 bits with regard to other resource groups and resources of the resource groups, respectively.
- CORESETPoolIndex (this information may be implicitly omitted and, if omitted, each resource group's the first beam information may be associated with a case in which COPRESETPoolIndex is "0" or CORESETPoolIndex is not configured, and each resource group's the second beam information may be assumed to be associated with a case in which CORESETPoolIndex is "1." The mapping information between CORESETPoolIndex and beam information may differ from the described example.)
- Associated SRS resource sets (this information may be implicitly omitted or not reported. If not reported, some associations between each resource group and each SRS resource set may be defined in advance. As an example, information regarding the first beam in each resource group may be associated with the first SRS resource set (for example, the SRS resource set having a small ID value among multiple SRS resource sets, the usage of which is "codebook" or "nonCodebook," and information regarding the second beam in each resource group may be associated with the second SRS resource set (for example, the SRS resource set having a large ID value among multiple SRS resource sets, the usage of which is "codebook" or "nonCodebook,")

Information regarding the first reported resource (or the first reported beam) and the second reported resource (or the second reported beam) in a resource group (or a beam group) that the UE reports to the base station may be selected one by one from multiple (for example, two) channel measurement resource sets for group-based beam reporting, respectively, and the UE may configure the selected resources (or beams) into a group and then report the same to the base station. That is, in order to indicate the first beam of one of the first to (at most) fourth beam groups, the UE may select one of CSI-RS resources in the first channel measurement resource set or one of SSB resources in the first channel measurement resource set. That is, in order to indicate the second beam of one of the first to (at most) fourth beam groups, the UE may select one of CSI-RS resources in the second channel measurement resource set or one of SSB resources in the second resource set. The UE needs to be able to simultaneously receive a downlink channel with multiple panels by using the reception beam applied to receive two CSI-RS resources or SSB resources reported as one beam group, and needs to be able to simultaneously transmit an uplink channel with multiple panels.

Alternatively, the CRI or SSBRI may be selected from two different CSI-RS resources or two different SSB resources, which the UE may simultaneously transmit/receive with one or more spatial domain receive filters. Unlike the group-based beam reporting described above, two channel measurement resource sets may not be configured separately, and the UE may select any two different CSI-RS or SSB resources that the UE may simultaneously transmit/receive by using multiple panels among multiple resources and may report the same to the base station.

As described above, the CSI information reported to the base station by the UE may be based on the CSI reporting method, and the UE may also report the following additional CSI information to the base station in consideration of multi-panel simultaneous transmission:
- The UE may report CapabilityIndex for indicating the capability value with regard to the reported CRI or SSBRI (or a corresponding indicator having a specific name which makes it possible to perform an operation of indicating the maximum number of SRS ports that the UE can support with regard to the reported CRI or SSBRI, such as UE capability set index) with 2 bits with regard to each resource group and resources of the resource group. Alternatively, the number of bits for CapabilityIndex reporting may be larger than 2 bits, depending on the maximum number of SRS ports that can be supported. As another example of CapabilityIndex reporting, the UE may report CapabilityIndex with regard to each beam group only, instead of the method of reporting CapabilityIndex with regard to each beam group and resources in each group. The base station may then understand that the maximum number of SRS ports according to the same CapabilityIndex may be supported with regard to multiple resources in the beam group reported by the UE.

That is, the UE may additionally report the maximum number of SRS ports that may be supported with regard to each beam group and resources in each group, thereby supporting the information to be used by the base station to configure two TCI states for performing simultaneous support using multiple panels. For example, the base station may expect that two resources included in the same beam group will be received through different panels. If the UE reports a beam group and corresponding CSI information to the base station as such, the base station may activate two TCI states by using two reference signal resources in the beam group reported by the UE. Among multiple CSI-RS resources or multiple SSB resources, the UE may report, to the base station, two different CSI-RS resources or two different SSB resources that may be simultaneously received by one or multiple spatial domain receive filters as described above, and the base station may activate two TCI states by using the two reported reference signal resources.

In connection with a MAC CE for activating/deactivating the unified TCI state, only one TCI state corresponding to one codepoint could be indicated conventionally, but the same may be expanded such that a maximum of two TCI states corresponding to one codepoint are indicated. In order to determine two TCI states for supporting simultaneous transmission using multiple panels mapped to one codepoint, the base station may use two reference signal resources in the beam group of the beam group report from the UE. It is assumed for convenience of description that two TCI states are indicated through one codepoint, but in case that the UE transmits signals simultaneously by using as many panels as N_{UL,panel} which is larger than 2, as many TCI states as N_{UL,panel} may be indicated by one codepoint, instead of two TCI states being indicated by one codepoint. As another example, the base station may configure higher-layer parameters such that that each channel measurement resource set includes the same CSI resource. When determining the resource group to be reported to the base station, the UE may select the same CSI resource from each channel measurement resource set (as an example, two CSI resources selected from each channel measurement resource set are configured by the same NZP-CSI-RS-ResourceId). Such a resource group reporting method may be used to report, to the base station, an operation in which the UE may simultaneously receive downlink signals or simultaneously transmit uplink signals by using different panels with the same CSI resource. If the base station receives the UE's report regarding a resource group configured by two identical CSI resources, the base station may activate the TCI state of the UE by a MAC CE such that that two identical TCI states are indicted through one codepoint such that the UE applies one transmission beams to all of multiple panels, thereby simultaneously transmitting uplink channels.

In another method, when the UE reports a beam to a base station, panel information regarding the reported beam may be configured as additional CSI information and then reported. For example, in case that the maximum number of panels that the UE can support is defined as Nₚₐₙₑₗ, the UE may add log₂Nₚₐₙₑₗ bits to each reported CRI or SSBRI, thereby informing the base station of the corresponding panel. This may be defined as a "panel index." Alternatively, another type of CSI reporting information may be configured such that, instead of explicitly indicating panel-related information, the same is indicated implicitly.

As a specific example, in case that the number of resources in the CSI resource set associated with the CSI report is 8, and in case that the CSI-RS resource, the CRI of which is 0 or 1 or 2 or 3, is received with the first panel among two panels that the UE can operate, the UE may configure an additional one bit to be "0" together with the corresponding CRI and the resulting RSRP (or SINR or any channel measurement information may correspond thereto), thereby reporting the same to the base station. That is, the UE may report to the base station that the first of the two panels has been used for reception. Similarly, in case that the CSI-RS resource, the CRI of which is 4 or 5 or 6 or 7, is received with the second panel among two panels that the UE can operate, the UE may configure an additional one bit to be "1" together with the corresponding CRI and the resulting RSRP (or SINR or any channel measurement information may correspond thereto), thereby reporting the same to the base station.

In case that the UE adds panel-related information to the CSI report as such, the base station may configure a beam combination that enables simultaneous transmission by using multiple panels, based on the reported beam information and the resulting panel information, and may transmit a MAC CE that configures multiple TCI states as one codepoint to the UE therethrough. The UE may receive the MAC CE from the base station, may activate the TCI state, and may finally apply the TCI state, which has been indicated by indicating one codepoint through DCI format 1_1 or DCI format 1_2, to uplink signal transmission after the BAT time. In case that panel information is added as such, the following operations may be considered: the base station configures identical CSI resources for respective CSI resource sets included in the same group by higher-layer configurations, and the UE receives identical CSI resource by using different panels. In case that identical CSI resources are configured for different resource sets in the group as such, the UE may likewise report the corresponding CRI and the resulting RSRP (or SINR or any channel measurement information may correspond thereto) and panel information (which is configured by log₂Nₚₐₙₑₗ bits, for example, as described above) to the base station.

As described above, in the first embodiment, the UE may report beam information to the base station, and the base station may configure higher-layer parameters for supporting simultaneous transmission using multiple panels based thereon, and may transmit a MAC CE to the UE to activate the TCI state. The MAC CE transmitted from the base station to the UE may be identical to an example of a MAC CE for indicating multiple TCI states based on the unified TCI, as in FIG. 11, such as the above-described unified TCI scheme-based TCI state indicating method. Alternatively, a MAC CE may be configured as in FIG. 12 or FIG. 13 to indicate multiple TCI states with one codepoint such that multiple TCI states for supporting multi-panel simultaneous transmission are activated with one codepoint.

Multiple TCI states activated for one codepoint through such a MAC CE (FIG. 11 or FIG. 12 or FIG. 13) may be multiple TCI states that can be simultaneously transmitted by using multiple panels, or may be multiple TCI states that cannot be simultaneously transmitted by using multiple panels. The former and latter cases may be recognized and configured by the base station through a group-based beam report that the UE transmits to the base station. The UE and the base station may implicitly recognize, through the reported (received) group-based beam report, whether simultaneous transmission using multiple panels or not is possible or not with the TCI state combination.

Alternatively, an unused field in the reserved area (R area) of the MAC CE may be used to add an indicator for indicating whether multi-panel simultaneous transmission is performed or not with regard to each codepoint. Alternatively, in case that the reserved area is insufficient to secure the entire number of codepoints, a new octet (8 bits) may be used such that a new indicator for indicating whether multi-panel simultaneous transmission is performed or not is added to the MAC CE. As an example, in case that there is a total of 8 codepoints, a total of 8 bits may be additionally configured to indicate multi-panel simultaneous transmission, or the MAC CE may be configured by using the reserved area or adding a new octet. In case that the first bit (MSB) is configured to be 1, and multiple (for example, two) TCI states are indicated with regard to the first codepoint, the TCI state may be activated to perform uplink simultaneous transmission using multiple panels, based on the multiple TCI states. Alternatively, in case that the first bit (MSB) is configured to be 0, and multiple (for example, two) TCI states are indicated with regard to the first codepoint, it may be indicated that simultaneous uplink transmission using multiple panels cannot be performed based on the multiple TCI states. In case that simultaneous transmission using multiple panels is not performed as such, the multiple TCI states indicated by the codepoint may support multi-TRP transmission based on time division multiplexing (TDM).

As such, multiple TCI states may be activated/configured/indicated by using one codepoint, and the method of indicating one codepoint meaning multiple TCI states through one field in a single DCI is appropriate for simultaneous transmission using sDCI-based multiple panels. For the simultaneous transmission method using mDCI-based multiple panels in which the UE performs uplink transmission with a TRP that may correspond to each CORESETPoolIndex through multiple DCIs, multiple (for example, N=2) transmission beam pairs may be determined as one beam group through the same or similar procedure as described, and the UE may report the determined beam group to the base station. The base station and the UE may define explicit rules in 3GPP specifications such that the first transmission beam information in the beam group is associated with CORESETPoolIndex = 0 (in this case, if a group-based beam reporting (groupBasedBeamReporting) method is considered, the same may mean beam information reported first among any beam group of CSI information included in UCI, and the beam information is CRI or SSBRI), and may define beam information reported second among CSI information included in UCI so as to be associated with CORESETPoolIndex = 1 (in this case, if a group-based beam reporting (groupBasedBeamReporting) method is considered, the same may mean beam information reported second among the beam group including the previous first transmission beam information of CSI information included in UCI, and the beam information is CRI or SSBRI). In addition, without being limited to such an example, an explicit mapping rule between the transmission beam information and CORESETPoolIndex may be defined.

Alternatively, the base station and the UE may define the association between the reported beam group and the CORESETPoolIndex in an implicit method. The relationship between the first beam information and the second beam information in the reported beam group and the CORESETPoolIndex having different indices follows explicit rules as described above such that the first beam information in the beam group may be associated with CORESETPoolIndex = 0, and the second beam information in the beam group may be associated with CORESETPoolIndex = 1. In case that the implicit method is followed, such an association may not be specified in 3GPP specifications, but the base station may consider the implicit relationship and indicate beam information (for example, CRI or SSBRI) associated with the CORESETPoolIndex in the beam group as a reference signal of the TCI state (*DLorJoint-TCIstate-r17* or UL-TCIstate) for scheduled uplink channel transmission, through the DCI associated with the CORESETPoolIndex (that is, the PDCCH received through CORESET, the CORSETPoolIndex of which is 0 (or may not be configured). The DCI for indicating the TCI state is a DL DCI format (for example, DCI format 1_1 or 1_2) for indicating downlink scheduling or a TCI state in the same manner as the conventional unified TCI framework. The indicated TCI state may be applied to uplink transmission after a beam application time (BAT). Alternatively, the same may be a UL DCI format (for example, DCI format 0_1 or 0_2) for scheduling an uplink PUSCH, and the indicated DCI state may be applied after the BAT or may be applied immediately at the timepoint at which the PUSCH scheduled with the DCI is transmitted. In addition, without being limited to such an example, an implicit mapping rule between transmission beam information and CORESETPoolIndex may be defined.

The UE may define or distinguish panels for uplink simultaneous transmission, based on the multiple beam reporting methods for multi-panel simultaneous transmission described above. Such various beam reporting methods and panel distinction methods are commonly included in the definition of maximum transmission power per panel or power headroom reporting per panel through an MAC CE, which will be described in the following embodiments.

### <Second embodiment: a method for scheduling and determining a multi-panel based simultaneous transmission scheme>

In the second embodiment, a method in which the base station schedules an uplink channel according to one of various methods for simultaneously transmitting an uplink channel based on multiple panels, and a method in which the UE determines one of various multi-panel-based simultaneous transmission schemes, based on scheduling information, and transmits the scheduled uplink channel, will be described in detail.

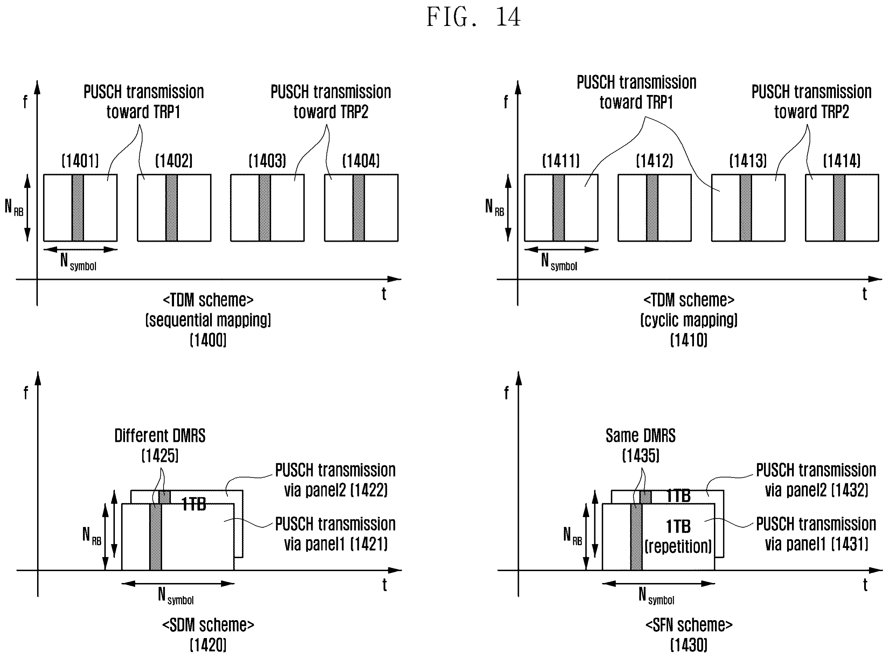

FIG. 14 illustrates an example of an mTRP TDM-based uplink channel repetitive transmission method, a multi-panel-based uplink channel simultaneous transmission method (SDM), and single frequency network (SFN).

The mTRP TDM-based uplink channel repetitive transmission method 1400 and 1410 may be distinguished into a "sequential mapping" method 1400 and a "cyclic mapping" method 1410 according to the method of mapping an uplink beam (or a transmitted TRP) with regard to multiple repetitive transmissions. When the UE repeatedly transmits an mTRP TDM-based uplink channel according to the "sequential mapping" method, the UE transmits a PUSCH with the first TRP (or the first UL beam indicated by the first spatial relation info or the first TCI state (the DL and UL joint TCI state or the UL TCI state described above)) in the first and second transmission occasions 1401 and 1402, and transmits a PUSCH with the second TRP (or the second UL beam indicated by the second spatial relation info or the second TCI state (the DL and UL joint TCI state or the UL TCI state described above)) in the third and fourth transmission occasions 1403 and 1404. With regard to as many repetitive transmissions as 4 or larger, transmission occasions and uplink-transmitting RPs may also be mapped in the same pattern (that is, the transmitted TRP is changed in every two transmission occasions).

When the UE repeatedly transmits an mTRP TDM-based uplink channel according to the "cyclic mapping" method, the UE transmits a PUSCH with the first TRP (or the first UL beam indicated by the first spatial relation info or the first TCI state (the DL and UL joint TCI state or the UL TCI state described above)) in the first and third transmission occasions 1411 and 1413, and transmits a PUSCH with the second TRP (or the second UL beam indicated by the second spatial relation info or the second TCI state (the DL and UL joint TCI state or the UL TCI state described above)) in the second and fourth transmission occasions 1412 and 1414. With regard to as many repetitive transmissions as 4 or larger, transmission occasions and uplink-transmitting RPs may also be mapped in the same pattern (that is, the transmitted TRP is changed in every transmission occasion).

According to the SDM scheme 1420, all PUSCH resources are configured as one TB in consideration of the total number of layers, and information bits are encoded based thereon. Thereafter, according to the SDM scheme, the UE may divide resources in the spatial domain and may simultaneously transmit a PUSCH at the same time by using each panel. That is, the UE divides different layers of the PUSCH into respective panels and then transmit the same. As an example, the UE may transmit the first part (the part including a layer of a low index) through the first panel (1421) and may transmit the second part (a part other than the first part) through the second panel (1422). This is only one example, and respective parts may be mapped to panels and transmitted in a different order from the example (for example, the first part may be transmitted through the second panel, and the second part may be transmitted through the first panel). The DMRS 1425 of the PUSCH transmitted through respective panels is configured by different DMRS ports, and different DMRS ports may be included in different CDM groups. Alternatively, the DMRS ports may be different from each other but included in the same CDM group. If one TB is divided into halves, which are transmitted through respective panels, and transmitted to different TRPs by using respective panels, a part of one TB will be received as one TRP. Thereafter, the base station may collect the same as one and perform joint decoding or separate decoding according to the base station implementation, thereby receiving the signal transmitted by the UE.

According to the SFN scheme 1430, completely identical TB and identical DMRS are configured for identical frequency and time resources, thereby transmitting the same. The PUSCH transmitted with each panel may include the same data and the same DMRS. That is, the UE may transmit the first part through the first panel (1431) and may transmit the second part through the second panel (1432). This is only one example, and respective parts may be mapped to panels and then transmitted in a different order from the example (for example, the first part may be transmitted through the second panel, and the second part may be transmitted through the first panel). If the same TB is transmitted through respective panels and transmitted with different TRPs by using respective panels, the same TB is received as one TRP. Thereafter, the base station may collect the same as one and perform joint decoding or separate decoding according to the base station implementation, thereby receiving the signal transmitted by the UE.

In the SFN scheme 1430, the DMRS transmitted with each panel may be configured by the same DMRS port (1435). However, different precoding matrices may be applied to DMRSs of respective panels having the same DMRS port index. That is, although both panels transmit the same TB through the same DMRS port, each panel's DMRS and data-related precoding may be applied individually.

In addition to the transmission method described above with reference to FIG. 14, repetitive transmission may be supported such that the same TB is transmitted based on the SDM scheme. Although FIG. 14 has been described in connection with uplink channel transmission using mTRP and multiple panels, dynamic switching may also be additionally considered, and a panel switching-based transmission method using sTRP and a single panel may also be considered accordingly.

### <Third embodiment: a method for defining new P_{CMAX} according to simultaneous transmission using multiple panels>

Hereinafter, methods for defining the maximum output power (hereinafter, referred to as P_{CMAX} or P_{UMAX}), as the UE simultaneously transmits an uplink data channel (PUSCH) by using multiple panels, will be described in detail.

As described above, existing P_{CMAXf,c} has only one P_{CMAX} value configured with regard to carrier *f* of support cell c. Therefore, when the UE performs PUSCH simultaneous transmission using multiple panels, according to the existing P_{CMAX} configuration method, the UE may use a power control method such that the total sum of transmission power of respective PUSCHs does not exceed the existing UE-specific single P_{CMAX}. More specifically, the PUSCH multi-panel simultaneous transmission scheme in the UE is a scheme for performing low-latency transmission having increased throughput of the uplink channel or having secured robustness, by performing individual PUSCH transmissions to multiple TRPs with low latency. That is, the UE's each panel-specific transmission generally corresponds to each TRP, and it may thus be appropriate for the UE to use individual power control methods in connection with transmitting respective PUSCHs to multiple TRPs which are at different locations, and which have different distances from the UE. However, restrictions regarding the UE-specific single P_{CMAX} are not appropriate for each power-specific control method per panel. In addition, the base station has no information regarding the power headroom available with regard to each panel during PUSCH multi-panel simultaneous transmission, and thus may be unable to sufficiently provide the UE with appropriate scheduling of uplink multi-panel simultaneous transmission. In particular, existing band-specific PUSCH transmission output restrictions are maintained for the UE, and there is accordingly a shortcoming in that, even if the UE performs simultaneous PUSCH transmission through two panels, the transmission power per panel or per PUSCH that the UE may use may decrease.

In order to solve this problem, the UE may use a method of considering each panel-specific P_{CMAX}. To this end, the base station and the UE may have to operate with the same understanding of each panel in the UE. Meanwhile, the concept of a panel in the UE, which is considered during PUSCH multi-panel simultaneous transmission, may refer to a unit of logically or physically separated transmission beams or antenna ports. However, implementation of panels in the UE may differ between UE manufacturers, and the concept of "panel" is merely an implicit concept and may not be standardized and used. Therefore, in case of considering an indicator corresponding to each panel in the UE, the UE and the base station may consider an explicit panel indicator, but may also use another indicator implicitly corresponding to the panel even if it the panel is not directly indicated. As an example, it may also be considered to use an index of a channel measurement resource set that may be defined when the UE reports a set of multiple different transmission beams that may be used during multi-panel simultaneous transmission regarding the uplink.

The UE and the base station may consider a combination of at least one of various methods for defining and/or distinguishing each panel in the UE in order to determine P_{CMAX} with regard to each panel in the UE.

[Method 1] channel measurement resource set-based method: as described above, the UE and the base station may assume that each panel can be expressed based on the index of multiple channel measurement resource sets that the base station has configured for the UE through higher-layer signaling, and may determine each panel-specific P_{CMAX}. That is, the UE and the base station may define P_{CMAX} with regard to each index of channel measurement resource sets, and may assume that each channel measurement resource set corresponds to each panel. As described above, the UE may have two different channel measurement reference signal sets configured by the base station through higher-layer signaling. The UE may select one reference signal from each of the two channel measurement reference signal sets, may define the two reference signals as one group, and may report the reception performance of the two reference signals in the group to the base station. Therefore, each channel measurement reference signal set may be regarded as a set of reference signals that the UE may receive from a specific panel, the index of the channel measurement reference signal set may thus be assumed as an indicator corresponding to the specific panel. The two channel measurement resource sets define reference signals that may be simultaneously received through two different panels, but since uplink transmission beams originate from downlink reception beams (that is, uplink transmission beams are determined with reference to downlink reception beams). Accordingly, the two channel measurement reference signal sets may also be regarded as sets of reference signals that may be simultaneously transmitted through two different panels. Therefore, the UE and the base station may distinguish each panel by using the index of each channel measurement reference signal set during multi-panel simultaneous transmission.

[Method 2] TCI pool/group/set-based method: the UE and the base station may divide multiple TCI states that may be configured for the UE by the base station through higher-layer signaling into multiple sets, may name the same as pools, groups, or sets of TCI states, and may determine each panel-specific P_{CMAX} based thereon. The UE may receive downlink channels and signals from two different TRPs from the base station or may transmit uplink channels and signals thereto. Accordingly, the UE and the base station can divide the multiple TCI states into two sets, and may consider that the first set of TCI states corresponds to the first TRP of the two TRPs, and the second set of TCI states corresponds to the second TRP of the two TRPs.

As an example, in case that the UE operates with the multi-DCI based multi-TRP, the UE may consider that, with regard to each codepoint of the TCI state field in the PDCCH transmitted from the base station in a CORESET, the CORESETPoolIndex (higher-layer signaling) value of which is 0, the codepoints have been activated through the TCI state activation MAC-CE, the CORESETPoolIndex of which corresponds to 0. In addition, the UE may consider that, with regard to each codepoint of the TCI state field in the PDCCH transmitted from the base station in a CORESET, the CORESETPoolIndex (higher-layer signaling) value of which is 1, the codepoints have been activated through the TCI state activation MAC-CE, the CORESETPoolIndex of which corresponds to 1. As another example, in case that the UE operates with the single-DCI based multi-TRP, the UE may be instructed by the base station to activate one or two TCI states with regard to each codepoint of the TCI state field in the PDCCH. With regard to multiple codepoints of a TCI state field including two TCI states, the UE may consider that the first TCI state among the two TCI states included in each codepoint is included in the first TCI pool, group, or set, and may consider the second TCI state to be included in the second TCI pool, group, or set.

That is, in case that the UE operates with a multi-DCI based multi-TRP, different CORESETPoolIndex corresponds to respective TRPs. In case that the UE operates with a single-DCI based multi-TRP, each TCI state among two TCI states of a specific codepoint in a TCI state field in a PDCCH corresponds to each TRP. In consideration thereof, the UE may recognize that the set of TCI states is different for each TRP. The UE may receive specific downlink channels and signals from the corresponding TRP using TCI states corresponding to respective TRPs. Accordingly, the UE and the base station may understand the same as information corresponding to the panel used to receive specific downlink channels and signals from the corresponding TRP with regard to each pool, group, or set of TCI states. Therefore, the UE and the base station may define P_{CMAX} with regard to each pool, group, or set of TCI states.

[Method 3] CORESET group or CORESETPoolIndex-based method: the UE and the base station may consider that each CORESET group or each CORESETPoolIndex value that may be configured for the UE by the base station through higher-layer signaling corresponds to each panel, and the UE and the base station may determine each panel-specific P_{CMAX} based thereon. As an example, in case that the UE operates with the multi-DCI based multi-TRP, the UE may have two different CORESETPoolIndex values configured therefor, and may consider that each CORESETPoolIndex corresponds to each TRP, and reception of downlink channels and signals in each TRP by the UE correspond to each panel.

As another example, in case that the UE operates with the single-DCI based multi-TRP, the UE may receive higher-layer signaling from the base station with regard to each CORESET or each CORESET group. The UE may identify, among multiple unified TCI states indicated through the higher-layer signaling, which TCI state (as an example, the first among two indicated TCI states, the second, the first and second, and all TCI states other than the first and second) may be used to receive a PDCCH transmitted from the base station in the CORESET. In case that the value configured by higher-layer signaling with regard to a specific CORESET means that a PDCCH is to be received by using the first TCI state among the indicated TCI states, the UE may consider that the CORESET is included in the first group. In case that the value means that a PDCCH is to be received by using the second TCI state among the indicated TCI states, the UE may consider that the CORESET is included in the second group. In addition, in case that the value means that a PDCCH is to be received by using the first and second TCI state among the indicated TCI states, the UE may consider that the CORESET is included in both the first and second groups. In case that the value means that a PDCCH is to be received by using a TCI state other than the first and second TCI states among the indicated TCI states, the UE may consider that the CORESET is included in the first group, for example. Similarly to the multi-DCI based multi-TRP, the UE may assume that each CORESET group corresponds to each TRP, and may consider that reception of downlink channels and signals in each TRP corresponds to each panel. Therefore, according to whether the UE operates with the multi-DCI or single-DCI based multi-TRP, the same may correspond to each TRP with regard to each CORESET group or CORESETPoolIndex. This may be considered as corresponding to each panel of the UE. Therefore, the UE and the base station may define P_{CMAX} with regard to each CORESET group or the CORESETPoolIndex.

[Method 4] SRS resource set-based method: the UE and the base station may consider that a maximum of two SRS resource sets that may be configured for the UE by the base station through higher-layer signaling correspond to respective panels, and the UE and the base station may determine each panel-specific P_{CMAX} based thereon. As an example, the UE may have two different SRS resource sets configured by the base station through higher-layer signaling for the sake of TDM-based PUSCH repetitive transmission to multiple TRPs, which is one of single-DCI based multi-TRP operations. Each SRS resource set corresponds to each TRP, and may include path attenuation reference signals and power control parameters that may be determined with regard to each TRP. In addition, the UE may have the two SRS resource sets configured by the base station through higher-layer signaling and may use the same during PUSCH multi-panel simultaneous transmission. Therefore, each SRS resource set may correspond to each TRP, and it may thus be considered that the same corresponds to each panel of the UE. The UE and the base station may thus define P_{CMAX} with regard to each index of each SRS resource set.

[Method 5] closed loop index-based method: the UE and the base station may consider that a maximum of two closed loop indices used by the UE for uplink power control correspond to respective panels of the UE, and the UE and the base station may determine each panel-specific P_{CMAX} based thereon. As an example, when performing uplink transmission in consideration of multiple TRPs, the UE may receive the base station's signaling such as a TPC command regarding the first closed loop index, among two closed loop indices, for power control during uplink transmission to the first TRP. Similarly, the UE may receive the base station's signaling regarding the second closed loop index, among the two closed loop indices, for power control during uplink transmission to the second TRP. In such a case, the UE and the base station may consider that each closed loop index corresponds to each TRP, and may understood that the same corresponds to each panel of the UE. The UE and the base station may thus define P_{CMAX} with regard to each index of each closed loop index.

Meanwhile, in case that the UE and the base station define the UE's panel-specific P_{CMAX} with regard to a specific carrier in a serving cell by using a combination of at least one the above methods, that is, in case that the UE and the base station define as many different P_{CMAX} as the number of the UE's panels with regard to a specific carrier in a serving cell, the maximum value of the UE's transmission power may double. Such a situation in which the maximum value of the transmission power doubles may need to be avoided according to how each panel in the UE is implemented.

Therefore, the UE may report, to the base station, the P_{CMAX} definition method through UE capability reporting. As an example, even if the UE supports PUSCH multi-panel simultaneous transmission, the UE may report, to the base station, information indicating that P_{CMAX} may be defined with regard to a specific carrier in a serving cell. In such a case, the UE may not define panel-specific P_{CMAX}, and may need to perform transmission power control in consideration of one defined P_{CMAX} value such that the maximum power value is not exceeded during uplink simultaneous transmission in two panels. As another example, the UE may report, to the base station, information indicating that panel-specific P_{CMAX} may be defined with regard to a specific carrier in a serving cell, as described above. In such a case, the UE and the base station may define panel-specific P_{CMAX} by using a combination of at least one [Method 1] to [Method 5] described above. Additionally, in case that panel-specific P_{CMAX} definition is possible, the UE may report, to the base station, the maximum value regarding the sum of panel-specific P_{CMAX} through UE capability. The UE may assume that maximum value regarding the sum of panel-specific P_{CMAX} may be a multiple (for example, twice or a multiple corresponding to the number of panels or a multiple having a specific weight applied thereto) of the P_{CMAX} value with regard to a specific carrier in a serving cell, or may assume that the same may be identical to the P_{CMAX} value with regard to a specific carrier in a serving cell.

### <Fourth embodiment: methods for controlling the maximum power in consideration of P_{CMAX} of the UE which support multi-panel simultaneous transmission >

Hereinafter, methods for defining P_{CMAX} such that the UE performs uplink simultaneous transmission by using multiple panels will be described in detail.

In order for the UE to define P_{CMAX} with regard to each of multiple panels in order to support multi-panel simultaneous transmission, channel measurement resource sets may be typically used, as mentioned above. That is, the UE may configure each P_{CMAX} for calculating the power of PUSCHs transmitted simultaneously in respective panels of the UE by using channel measurement resource sets. That is, the transmission power of each PUSCH transmitted simultaneously with regard to each panel may be calculated based on the P_{CMAX} (as mentioned above, referred to as P_{UMAX} in equations for FR2) value configured with regard to each measurement resource set associated with each panel.

The UE may configure the maximum output power configured for the UE regarding panel *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215.

In FR2, the UE's rated maximum output power regarding panel p that supports carrier *f* of support cell c needs be configured to correspond to P_{UMAX,f,c,p} which is peak EIRP measured with regard to panel *p* that supports carrier *f* of support cell c, and P_{UMAX,f,c,p}, which is each panel-specific P_{UMAX} value, is determined by the UE within the upper and lower boundaries as in the following Equation 3. In this regard, p refers to a channel measurement resource set index, that is, each panel, and the index p of channel measurement resource sets may be defined from 0 to n-1 according to the number (n) of panels supporting simultaneous transmission (for example, if two channel measurement resource sets are configured to support simultaneous transmission using two panels, p is 0 or 1). PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f,c,p ≤ EIRPmax

In Equation 3, ΔT_{STxMP} refers to an additional transmission power reduction value that may be applied when the UE supports multi-panel simultaneous transmission in FR2.

In Equation 3, P_{Powerclass} refers to the UE's minimum peak EIRP value defined as in the example in Table 22, and EIRPₘₐₓ refers to the allowable maximum EIRP value defined as in the example in Table 23.

In Equation 3, MPR_{f,c,p} refers to the allowable maximum power reduction value determined by the modulation scheme and the amount (that is, bandwidth) of uplink transmission resources allocated for the UE regarding uplink channels transmitted with panel *p* that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to panel *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the supported bands and the number (n). ΔP_{IBE} is configured to be 1 dB or 0 dB depending on whether the UE supports *mpr-PowerBoost-FR2-r16.*

P-MPR_{f,c,p} refers to the power management maximum output power reduction, and the UE may configure the P-MPR_{f,c,p} value regarding panel p that supports carrier *f* of support cell c only in the following cases:
- In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference
- In the case of temporarily reducing the output through the proximity detection sensor mounted on the UE in order to comply with applicable electromagnetic power density exposure requirements which are regulated human impact assessment criteria

That is, items related to the MPR are affected by P_{UMAX} configured for each panel for the UE's multi-panel simultaneous transmission. Therefore, if an uplink channel is transmitted simultaneously with multiple panels unlike the conventional case of transmitting an uplink channel with a single panel, the UE may define parameters related to each panel-specific MPR. In particular, the P-MPR value configured based on the UE's own proximity sensor operations may greatly vary depending on the position of respective panels and grips, and each P_{UMAX} value is accordingly to be configured for each panel. Therefore, the panel-specific P_{UMAX} must be distinguished according to *p* and defined, and this must be reflected in equations for determining P_{UMAX} by the UE.

Firstly, the UE needs to configure each panel-specific P_{UMAX} such that the sum of multiple P_{UMAX} values defined with regard to respective panels does not exceed the P_{UMAX} value that refers to UE's total power. That is, additional definitions may be made such that the sum of panel-specific P_{UMAX} value satisfies the following Equation 4:
${\sum }_{p} {P}_{UMAX , f , c , p} \leq {P}_{UMAX , f , c}$

In Equation 4, P_{UMAX,f,c} refers to the P_{UMAX} value configured by the UE to indicate the total power that the UE can support, and is defined as in Equation 2 (section 6.2.4 of TS 38.101-2) as described above.

That is, when the UE performs multi-panel-based uplink simultaneous transmission, the UE may configure each panel-specific P_{UMAX} value and may report the same to the base station together with each panel-specific P-MPR value. In addition, the UE may calculate the power headroom with regard to each panel and report the same to the base station. However, the total sum of power for transmitting an uplink channel with each panel cannot exceed P_{UMAXf,c}. Therefore, there may be no need for additional operations for complying with applicable electromagnetic power density exposure requirements (MPE) which are human impact assessment criteria.

In addition, the sum of respective P_{UMAX} values determined by the UE with regard to multiple panels may be configured so as not to exceed the EIRPₘₐₓ value which refers to the total power that the UE can support, and the total output value for the UE's simultaneous transmission may be configured to be able to increase by the number of panels. In this case, the following Equation 3 may be added in addition to Equation 3.${\sum }_{p} {P}_{UMAX , f , c , p} \leq {EIRP}_{max}$

That is, when performing multi-panel-based uplink simultaneous transmission, the UE may configure each panel-specific P_{UMAXf,c,p} value and may report the same to the base station together with each panel-specific P-MPR_{f,c,p} value, thereby configuring the power headroom for each panel. In addition, if the total sum of power for simultaneously transmitting the uplink channel with each panel is smaller than the maximum output at which the UE can satisfy regulations, the UE may increase the total sum of power by the number of panels for simultaneous transmission during multi-panel-based simultaneous transmission.

However, in case that the UE that supports multi-panel simultaneous transmission may increase the sum of panel-specific P_{UMAXf,c,p} values by the number of panels, the UE may reduce the uplink transmission rate per second, which is the UE's capability that may serve as a criterion for applying P-MPR in order to comply with applicable electromagnetic power density exposure requirement (MPE), which are human impact assessment criteria, by the inverse of the number of panels. That is, the UE may reduce the value of *maxUplinkDutyCycle-FR2* which refers to the uplink transmission rate per second for satisfying electromagnetic power density exposure requirements, by the inverse of the number of panels (n), that is, by *maxUplinkDutyCycle-FR2* / n. For example, in case that the number of panels supporting simultaneous transmission is 2, and in case that the rate of uplink symbols transmitted per second exceeds *maxUplinkDutyCycle-FR2* / 2 configured by the UE, P-MPR_{f,c,p} may be applied to limit panel-specific transmission power.

Likewise, as mentioned in the third embodiment, the UE may determine each panel-specific P_{UMAXf,c,p} in consideration of various panel definition methods besides channel measurement resource sets. Furthermore, various scenarios are possible according to cases in which the sum of multiple P_{UMAX} values is increased by the number of panels, or the sum of multiple P_{UMAXf,c,p} values is configured so as not to exceed the EIRPₘₐₓ value, which is the total power that the UE can support, and such scenarios are summarized as follows:

Table 24 describes a case in which each panel is distinguished by a channel measurement resource set, and the sum of P_{UMAXf,c,p} configured in each panel is configured so as not to exceed the general P_{UMAXf,c} value for single panel transmission.

**[Table 24]**

| |
|---|
| The UE may configure the maximum output power configured for the UE regarding channel measurement resource set *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding channel measurement resource set *p* that supports carrier *f* of support cell c needs be configured to correspond to P_{UMAX,f,c,p} which is peak EIRP measured with regard to channel measurement resource set *p* that supports carrier *f* of support cell c, and P_{UMAX,f,c,p}, which is each channel measurement resource set-specific P_{UMAX} value, is determined by the UE within the upper and lower boundaries as in the following Equation 3. In this regard, p refers to the index of the channel measurement resource set associated with panel p, and may be defined from 0 to n-1 according to the number (n) of panels supporting simultaneous transmission (for example, during two-panel simultaneous transmission, p is 0 or 1). |
| [Equation 3] |
| P_{Powerclass} + ΔP_{IBE} - MAX(MAX(MPR_{f,c,p}, **A-** MPR_{f,c,p}) + ΔMB_{P,n}, P-MPR_{f,c,p})-MAX{T(MAX(MPR_{f,c,p}, **A-** MPR_{f,c,p},)), T(P-MPR_{f,c,p})} **-[ΔT_{STxMP}]** ≤ P_{UMAX,f,c,p} ≤ EIRPₘₐₓ |
| ${\sum }_{p} {P}_{UMAX , f , c , p} \leq {P}_{UMAX , f , c}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding channel measurement resource set *p* that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to channel measurement resource set *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| In Equation 4, P_{UMAX,f,c} refers to a PUMAX value configured by a UE that does not support multi-panel simultaneous transmission, and is defined as in Equation 2 (section 6.2.4 of TS 38.101-2) as described above. |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds the above value, the UE may follow the |
| uplink scheduling and may determine P_{UMAX,f,c,p} by applying P-MPR_{f,c,p}. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding channel measurement resource set *p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 25 describes a case in which respective panels are distinguished by channel measurement resource sets, and the sum of P_{UMAXf,c,p} configured in respective panels is configured to be able to increase by the number of panels.

**[Table 25]**

| |
|---|
| UE may configure the maximum output power configured for the UE regarding channel measurement resource set *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding channel measurement resource set *p* that supports carrier *f* of support cell c needs be configured to correspond to P_{UMAX,f,c,p} which is peak EIRP measured with regard to channel measurement resource set *p* that supports carrier *f* of support cell c, and P_{UMAX,f,c,p}, which is each channel measurement resource set-specific P_{UMAX} value, is determined by the UE within the upper and lower boundaries as in the following Equation 3. In this regard, p refers to the index of the channel measurement resource set associated with panel p, and the channel measurement resource set index *p* may be defined from 0 to n-1 according to the number *(n)* of panels |
| supporting simultaneous transmission (for example, during two-panel simultaneous transmission, p is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f,c,p ≤ EIRPmax |
| ${Σ}_{p} {P}_{UMAX , f , c , p} \leq {EIRP}_{max}$ |
| In Equation 3, ΔT_{STxMP} refers to an additional transmission power reduction value that may be applied when the UE supports multi-panel simultaneous transmission in FR2. |
| Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount (that is, bandwidth) of uplink transmission resources allocated for the UE regarding channel measurement resource set index *p* that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to channel measurement resource set index *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the supported bands and the number (n). ΔP_{IBE} is configured to be 1 dB or 0 dB depending on whether the UE supports *mpr-PowerBoost-FR2-r16.* |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2 / 2, the UE may follow existing |
| uplink scheduling and may apply P-MPR_{f,c,p}. That is, in case that the UE has reported maxUplinkDutyCycle-FR2 as UE capability, and even if the base station performs uplink scheduling that exceeds half the above value, the UE may follow the uplink scheduling and may determine P_{UMAX,f,c,p} by applying P-MPR_{f,c,p}. In this regard, 2 is the number of panels, and it is also possible to apply a different number (n) of panels. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding channel measurement resource set *p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 26 describes a case in which each panel is distinguished by a TCI pool (or TCI group or TCI set), and the sum of P_{UMAXf,c,p} configured in respective panels is configured so as not to exceed the general P_{UMAXf,c} value for single panel transmission.

**[Table 26]**

| |
|---|
| The UE may configure the maximum output power configured for the UE regarding TCI pool (or TCI group or TCI set) *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding TCI pool (or TCI group or TCI set) *p* that supports carrier *f* of support cell c needs be configured to correspond to P_{UMAX,f,c,p} which is peak EIRP measured with regard to TCI pool (or TCI group or TCI set) *p* that supports carrier *f* of support cell c, and P_{UMAX,f,c,p}, |
| which is each TCI pool (or TCI group or TCI set)-specific P_{UMAX} value, is determined by the UE within the upper and lower boundaries as in the following Equation 3. In this regard, p refers to the index of the TCI pool (or TCI group or TCI set) associated with panel p, and the TCI pool (or TCI group or TCI set) index *p* may be defined from 0 to n-1 according to the number *(n)* of panels supporting simultaneous transmission (for example, during two-panel simultaneous transmission, p is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f,c,p ≤ EIRPmax |
| ${\sum }_{p} {P}_{UMAX , f , c , p} \leq {P}_{UMAX , f , c}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding TCI pool (or TCI group or TCI set) *p* that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to TCI pool (or TCI group or TCI set) *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| In Equation 4, P_{UMAX.f,c} refers to a P_{UMAX} value configured by a UE that does not |
| support multi-panel simultaneous transmission, and is defined as in Equation 2 (section 6.2.4 of TS 38.101-2) as described above. |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds the above value, the UE may follow the uplink scheduling and may determine P_{UMAX,f,c,p} by applying P-MPR_{f,c,p}. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding TCI pool (or TCI group or TCI set) *p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 27 describes a case in which each panel is distinguished by a TCI pool (or TCI group or TCI set), and the sum of P_{UMAXf,c,p} configured in respective panels is configured to be able to increase by the number of panels.

**[Table 27]**

| |
|---|
| The UE may configure the maximum output power configured for the UE regarding TCI pool (or TCI group or TCI set) *p* at carrier *f* of support cell c. The UE's maximum rated output power configured as such is defined as P_{CMAX,f,c,p} (configured UE maximum output power), which corresponds to the maximum rated |
| output at a reference point of a given transmitter corresponding to a reference point of higher-layer filtered RSRP measurement as defined in TS 38.215. |
| In FR2, the UE's rated maximum output power regarding TCI pool (or TCI group or TCI set) *p* that supports carrier *f* of support cell c needs be configured to correspond to P_{UMAX,f,c,p} which is peak EIRP measured with regard to TCI pool (or TCI group or TCI set) *p* that supports carrier *f* of support cell c, and P_{UMAX,f,c,p}, which is each TCI pool (or TCI group or TCI set)-specific P_{UMAX} value, is determined by the UE within the upper and lower boundaries as in the following Equation 3. In this regard, p refers to the index of the TCI pool index (or TCI state pool index) associated with panel p, and the TCI pool (or TCI group or TCI set) index *p* may be defined from 0 to n-1 according to the number *(n)* of panels supporting simultaneous transmission (for example, during two-panel simultaneous transmission, p is 0 or 1). |
| PPowerclass + ΔPIBE - MAX(MAX(MPRf.c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f,c,p ≤ EIRPmax |
| ${\sum }_{p} {P}_{UMAX , f , c , p} \leq {EIRP}_{max}$ |
| Σₚ P_{UMAX,f,c,p} ≤ EIRPₘₐₓ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding TCI pool (or TCI group or TCI set) *p* that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to TCI pool (or TCI group or TCI set) *p* that supports carrier *f* of support cell c, by means of the frequency band in which uplink transmission is performed, regional characteristics, bandwidth of uplink transmission, and the like. ΔMB_{P,n} refers to |
| the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2 / 2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds half the above value, the UE may follow the uplink scheduling and may determine P_{UMAX,f,c,p} by applying P-MPR_{f,c,p}. In this regard, 2 is the number of panels, and it is also possible to apply a different number (n) of panels. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding TCI pool (or TCI group or TCI *set) p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 28 describes a case in which each panel is distinguished by a CORESET group (or CORESETPoolIndex), and the sum of P_{UMAXf,c,p} configured in respective panels is configured so as not to exceed the general P_{UMAXf,c} value for single panel transmission.

**[Table 28]**

| |
|---|
| The UE may configure the maximum output power configured for the UE regarding CORESET group (or CORESETPoolIndex) *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding CORESET group (or CORESETPoolIndex) *p* that supports carrier *f* of support cell c needs be configured to correspond to P_{UMAX,f,c,p} which is peak EIRP measured with regard to CORESET group (or CORESETPoolIndex) *p* that supports carrier *f* of support cell c, and P_{UMAX,f,c,p}, which is each CORESET group (or CORESETPoolIndex)-specific PUMAX value, is determined by the UE within the upper and lower boundaries as in the following Equation 3. In this regard, p refers to the index of the CORESET group associated with panel *p,* and the index *p* of the CORESET group (or CORESETPoolIndex) may be defined from 0 to n-1 according to the number (n) of panels supporting simultaneous transmission (for example, during two-panel simultaneous transmission, p is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f.c,p ≤ EIRPmax |
| ${\sum }_{p} {P}_{UMAX , f , c , p} \leq {P}_{UMAX , f , c}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding CORESET group (or CORESETPoolIndex) p that supports carrier *f* of support cell c. A-MPR_{f,c,p} is |
| configured by network signaling (NS) of which the UE is informed by the base station for the purpose of satisfying regional regulations or avoiding adjacent band interference, and refers to a power reduction value additionally allowed with regard to CORESET group (or CORESETPoolIndex) *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| In Equation 4, P_{UMAX,f,c} refers to a P_{UMAX} value configured by a UE that does not support multi-panel simultaneous transmission, and is defined as in Equation 2 (section 6.2.4 of TS 38.101-2) as described above. maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds the above value, the UE may follow the uplink scheduling and may determine P_{UMAX,f,c,p} by applying P-MPR_{f,c,p}. If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding CORESET group (or CORESETPoolIndex) *p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference In the case of temporarily reducing the output through the proximity detection sensor mounted on the UE in order to comply with applicable electromagnetic power density exposure requirements which are regulated human impact assessment criteria |

Table 29 describes a case in which each panel is distinguished by a CORESET group (or CORESETPoolIndex), and the sum of P_{UMAXf,c,p} configured in respective panels is configured to be able to increase by the number of panels.

**[Table 29]**

| |
|---|
| The UE may configure the maximum output power configured for the UE regarding CORESET group (or CORESETPoolIndex) *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding CORESET group (or CORESETPoolIndex) *p* that supports carrier *f* of support cell c needs be configured to correspond to P_{UMAX,f,c,p} which is peak EIRP measured with regard to CORESET group (or CORESETPoolIndex) *p* that supports carrier *f* of support cell c, and P_{UMAX,f,c,p}, which is each CORESET group (or CORESETPoolIndex)-specific PUMAX value, is determined by the UE within the upper and lower boundaries as in the following Equation 3. In this regard, p refers to the index of the CORESET group associated with panel *p,* and the index *p* of the CORESET group (or CORESETPoolIndex) may be defined from 0 to n-1 according to the number (n) of panels supporting simultaneous transmission (for example, during two-panel simultaneous transmission, p is 0 or 1). |
| \|PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f.c,p ≤ EIRPmax |
| ${\sum }_{p} {P}_{UMAX , f , c , p} \leq {EIRP}_{max}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding CORESET group (or CORESETPoolIndex) *p* that supports carrier *f* of support cell *c*. A-MPR_{f,c,p} is configured by network signaling (NS) of which the UE is informed by the base station for the purpose of satisfying regional regulations or avoiding adjacent band interference, and refers to a power reduction value additionally allowed with regard to CORESET group (or CORESETPoolIndex) *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2 / 2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds half the above value, the UE may follow the uplink scheduling and may determine P_{UMAX,f,c,p} by applying P-MPR_{f,c,p}. In this regard, 2 is the number of panels, and it is also possible to apply a different number (n) of panels. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding CORESET group (or |
| CORESETPoolIndex) *p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 30 describes a case in which each panel is distinguished by an SRS resource set, and the sum of P_{UMAXf,c,p} configured in each panel is configured so as not to exceed the general P_{UMAXf,c} value for single panel transmission.

**[Table 30]**

| |
|---|
| The UE may configure the maximum output power configured for the UE regarding SRS resource set *p* at carrier *f* of support cell c. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding SRS resource set *p* that supports carrier *f* of support cell c needs be configured to correspond to P_{UMAX,f,c,p} which is peak EIRP measured with regard to SRS resource set *p* that supports carrier *f* of support cell *c*, and P_{UMAX,f,c,p}, which is each SRS resource set-specific P_{UMAX} value, is determined by the UE within the upper and lower boundaries as in the following Equation 3. In this regard, *p* refers to the index of the SRS resource set associated with panel *p,* and the index *p* of the SRS resource set may be defined from 0 to n-1 according to the number (*n*) of panels supporting simultaneous transmission (for example, during two-panel simultaneous transmission, *p* is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAx,f,c,p ≤ EIRPmax |
| ${\sum }_{p} {P}_{UMAX , f , c , p} \leq {P}_{UMAX , f , c}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding SRS resource set *p* that supports carrier *f* of support cell *c*. A-MPR_{f,c,p} is configured by network signaling (NS) of which the UE is informed by the base station for the purpose of satisfying regional regulations or avoiding adjacent band interference, and refers to a power reduction value additionally allowed with regard to SRS resource set *p* that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| In Equation 4, P_{UMAX,f,c} refers to a PUMAX value configured by a UE that does not support multi-panel simultaneous transmission, and is defined as in Equation 2 (section 6.2.4 of TS 38.101-2) as described above. |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds the above value, the UE may follow the uplink scheduling and may determine P_{UMAX,f,c,p} by applying P-MPR_{f,c,p}. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding SRS resource set *p* that supports carrier *f* of support cell *c* only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 31 describes a case in which each panel is distinguished by an SRS resource set, and the sum of P_{UMAXf,c,p} configured in respective panels is configured to be able to increase by the number of panels.

**[Table 31]**

| |
|---|
| The UE may configure the maximum output power configured for the UE regarding SRS resource set *p* at carrier *f* of support cell *c*. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding SRS resource set *p* that supports carrier *f* of support cell c needs be configured to correspond to P_{UMAX,f,c,p} which is peak EIRP measured with regard to SRS resource set *p* that supports carrier *f* of support cell c, and P_{UMAX,f,c,p}, which is each SRS resource set-specific P_{UMAX} value, is determined by the UE within the upper and lower boundaries as in the following Equation 3. In this regard, *p* refers to the index of the SRS resource set associated with panel *p,* and the index *p* of the SRS resource set may be defined from 0 to n-1 according to the number (n) of panels supporting simultaneous transmission (for example, during two-panel simultaneous transmission, *p* is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f,c,p ≤ EIRPmax |
| ${\sum }_{p} {P}_{UMAX , f , c , p} \leq {EIRP}_{max}$ |
| ∑ₚ P_{UMAX,f,c,p} ≤EIRPₘₐₓ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding SRS resource set *p* that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to SRS resource set *p* that supports carrier *f* of support cell *c*, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the percentage of the uplink transmitted per one second of a specific measurement interval is larger than maxUplinkDutyCycle-FR2 / 2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds half the above value, the UE may follow |
| the uplink scheduling and may determine P_{UMAX,f,c,p} by applying P-MPR_{f,c,p}. In this regard, 2 is the number of panels, and it is also possible to apply a different number (*n*) of panels. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding SRS resource set *p* that supports carrier *f* of support cell *c* only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 32 describes a case in which each panel is distinguished by a closed loop index, and the sum of P_{UMAXf,c,p} configured in each panel is configured so as not to exceed the general P_{UMAXf,c} value for single panel transmission.

**[Table 32]**

| |
|---|
| The UE may configure the maximum output power configured for the UE regarding closed loop index *p* at carrier *f* of support cell *c*. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding closed loop index *p* that supports carrier *f* of support cell c needs be configured to correspond to P_{UMAX,f,c,p} which is peak EIRP measured with regard to closed loop index *p* that supports carrier *f* of support cell *c*, and P_{UMAX,f,c,p}, which is each closed loop index-specific P_{UMAX} value, is determined by the UE within the upper and lower boundaries as in the following Equation 3. In this regard, *p* refers to the closed loop index associated with panel *p,* and the closed loop index *p* may be defined from 0 to n-1 |
| according to the number (n) of panels supporting simultaneous transmission (for example, during two-panel simultaneous transmission, p is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f.c,p ≤ EIRPmax |
| ${\sum }_{p} {P}_{UMAX , f , c , p} \leq {P}_{UMAX , f , c}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding closed loop index p that supports carrier *f* of support cell *c*. A-MPR_{f,c,p} is configured by network signaling (NS) of which the UE is informed by the base station for the purpose of satisfying regional regulations or avoiding adjacent band interference, and refers to a power reduction value additionally allowed with regard to closed loop index p that supports carrier *f* of support cell c, by means of the frequency band in which uplink transmission is performed, regional characteristics, bandwidth of uplink transmission, and the like. ΔMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| In Equation 4, P_{UMAX,f,c} refers to a PUMAX value configured by a UE that does not support multi-panel simultaneous transmission, and is defined as in Equation 2 (section 6.2.4 of TS 38.101-2) as described above. |
| maxUplinkDutyCycle-FR2 refers to UE capability related to electromagnetic power density exposure requirements as defined in TS 38.306, and is applicable to all FR2 power grades. |
| In case that UE capability maxUplinkDutyCycle-FR2 exists, and in case that the |
| percentage of the uplink transmitted per one second of a specific measurement interval is larger than maxUplinkDutyCycle-FR2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds the above value, the UE may follow the uplink scheduling and may determine P_{UMAX,f,c,p} by applying P-MPR_{f,c,p}. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding closed loop index *p* that supports carrier *f* of support cell *c* only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

Table 33 describes a case in which each panel is distinguished by a closed loop index, and the sum of P_{UMAXf,c,p} configured in respective panels is configured to be able to increase by the number of panels.

**[Table 33]**

| |
|---|
| The UE may configure the maximum output power configured for the UE regarding closed loop index *p* at carrier *f* of support cell *c*. The UE's maximum rated output power configured as such is defined as P_{CMAX,f,c,p} (configured UE maximum output power), which corresponds to the maximum rated output at a reference point of a given transmitter corresponding to a reference point of higher-layer filtered RSRP measurement as defined in TS 38.215. |
| In FR2, the UE's rated maximum output power regarding closed loop index *p* that supports carrier *f* of support cell c needs be configured to correspond to P_{UMAX,f,c,p} which is peak EIRP measured with regard to closed loop index *p* that supports carrier *f* of support cell *c*, and P_{UMAX,f,c,p}, which is each closed loop index-specific |
| P_{UMAX} value, is determined by the UE within the upper and lower boundaries as in the following Equation 3. In this regard, p refers to the closed loop index associated with panel *p,* and the closed loop index *p* may be defined from 0 to n-1 according to the number (n) of panels supporting simultaneous transmission (for example, during two-panel simultaneous transmission, p is 0 or 1). |
| PPowerclass + ΔPIBE - MAX(MAX(MPRf,c,p, A- MPRf,c,p) + ΔMBP,n, P-MPRf,c,p) - MAX{T(MAX(MPRf,c,p, A- MPRf,c,p,)), T(P-MPRf,c,p)} -[ΔTSTxMP] ≤ PUMAX,f,c,p ≤ EIRPmax |
| ${\sum }_{p} {P}_{UMAX , f , c , p} \leq {EIRP}_{max}$ |
| In Equation 3, ΔT_{STxMP} refers to an additional transmission power reduction value that may be applied when the UE supports multi-panel simultaneous transmission in FR2. |
| In Equation 3, P_{Powerclass} refers to the UE's minimum peak EIRP value defined as in the example in Table 22, and EIRPₘₐₓ refers to the allowable maximum EIRP value defined as in the example in Table 23. |
| In Equation 3, MPR_{f,c,p} refers to the allowable maximum power reduction value determined by the modulation scheme and the amount of uplink transmission resources (that is, bandwidth) allocated for the UE regarding closed loop index p that supports carrier *f* of support cell c. A-MPR_{f,c,p} is configured by network signaling (NS) of which the UE is informed by the base station for the purpose of satisfying regional regulations or avoiding adjacent band interference, and refers to a power reduction value additionally allowed with regard to closed loop index p that supports carrier *f* of support cell c, by means of the frequency band in which uplink transmission is performed, regional characteristics, bandwidth of uplink transmission, and the like. ΔsMB_{P,n} refers to the degree of multi-band relaxation with regard to each band configured such that, in case that the UE supports two or more FR2 bands, the minimum peak EIRP (P) can be additionally relaxed according to the number (n) of supported bands. ΔP_{IBE} is configured to be 1 dB or 0 dB depending on whether the UE supports *mpr-PowerBoost-FR2-r16.* |
| maxUplinkDutyCycle-FR2 refers to UE capability related to electromagnetic power density exposure requirements as defined in TS 38.306, and is applicable to all FR2 power grades. |
| In case that UE capability maxUplinkDutvCvcle-FR2 exists, and in case that the |
| percentage of the uplink transmitted per one second of a specific measurement interval is larger than maxUplinkDutyCycle-FR2 / 2, the UE may follow existing uplink scheduling and may apply P-MPR_{f,c,p}. That is, in case that the UE has reported maxUplinkDutyCycle-FR2 as UE capability, and even if the base station performs uplink scheduling that exceeds half the above value, the UE may follow the uplink scheduling and may determine P_{UMAX,f,c,p} by applying P-MPR_{f,c,p}. In this regard, 2 is the number of panels, and it is also possible to apply a different number (*n*) of panels. |
| If UE capability maxUplinkDutyCycle-FR2 is absent, the UE satisfies the electromagnetic power density exposure requirements by a power density reducing method or another method. |
| P-MPR_{f,c,p} refers to power management maximum output power reduction, and the UE may configure the P-MPR_{f,c,p} value regarding closed loop index *p* that supports carrier *f* of support cell c only in the following cases: |
| - In the case of simultaneous transmission with multiple radio access technologies regarding scenarios outside the scope of 3GPP, for the purpose of complying with applicable electromagnetic power density exposure requirements which are regulated human impact assessment criteria, or for the purpose of addressing requirements such as unwanted emission and magnetic interference |
| In the case of temporarily reducing the output through the proximity detection sensor mounted on the UE in order to comply with applicable electromagnetic power density exposure requirements which are regulated human impact assessment criteria |

### <Fifth embodiment: MAC-CE transmission scheme in PCMAX-related UE>

In this embodiment, methods for defining a new MAC-CE for reporting multiple P_{CMAX} values derived from multi-panel simultaneous transmission to the base station, and transmitting the same, will be described.

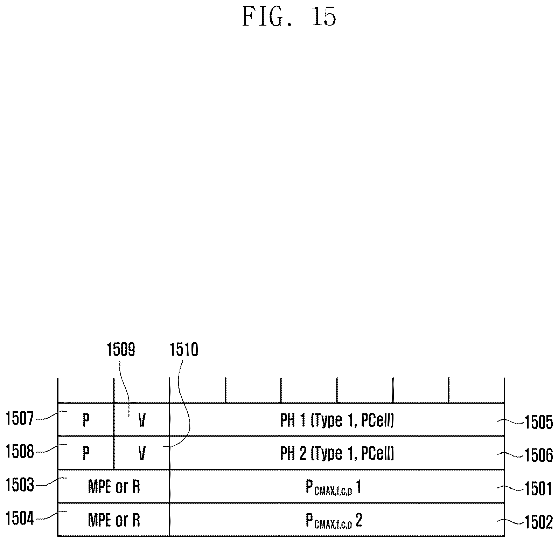

The derived P_{CMAXf,c,p} is included in a single entry PHR or multiple entry PHR according to whether single carrier transmission or multi-carrier transmission is performed, as in FIG. 15, and then reported to the base station.

FIG. 15 illustrates an example of the structure of an extended single entry PHR MAC CE defined to transmit multiple pieces of P_{CMAXf,c,p} and P-MPR_{f,c,p} derived for multi-panel simultaneous transmission. FIG. 15 illustrates an example of the structure of an extended single entry PHR MAC CE, and the disclosure is not limited to the example.

In case that it is necessary to report multiple pieces of P_{CMAXf,c,p} and PH regarding the serving cell in a single carrier, it is advantageous in terms of overhead reduction to gather them into one PHR and then transmit the same. The new single entry PHR MAC CE has been designed such that, unlike conventional general PHR MAC CEs, multiple pieces of PH information 1505 and 1506 and P_{CMAX,c,f,p} information 1501 and 1502 can be reported together. The multiple pieces of PH information 1505 and 1506 and P_{CMAX,c,f,p} information 1501 and 1502 may correspond to PH information and P_{CMAX,c,f,p} information for each panel. The content of the disclosure is not limited to the provided example regarding two pieces of PH information and two pieces of P_{CMAX,c,f,p} and can also be applied to more than two pieces of PH information and more than two pieces of P_{CMAX,c,f,p}.

The P bit 1507 indicates whether the UE maximum transmit power P_{CMAX} has been affected by P-MPR _{c}. As described above, even if a specific serving cell has no actual PUSCH transmission, the UE calculates the PH by assuming a virtual transmission format and P_{CMAX,c,f,p}.

In addition, in case that the UE has indicated whether P-MPR_{f,c,p} is used or not through the P bit, the 2-bit information of the MPE fields 1503 and 1504 indicates the specific degree of power back-off (P-MPR) use. The size of the P-MPR varies greatly depending on the position of each panel, the uplink transmission direction, or the grip position of the user holding the UE. Therefore, it is advantageous for a UE that supports multi-panel simultaneous transmission to configure P-MPR information for each panel, and these pieces of information need all to be included in the PHR MAC CE and reported to the base station.

The V bits 1509 and 1510 are 1-bit indicators. In connection with reporting the PH of a specific panel, in case that the UE has calculated the PH of the panel based on the actual panel's PUSCH transmission, that is, by using an actual transmission format, the corresponding bit is configured to be a predetermined value (for example, 0). In case that the UE has calculated the PH by using a reference format and virtual P_{CMAX,f,c,p} because the panel has no PUSCH transmission, the corresponding bit is configured to be another predetermined value (for example, 1).

In the case of a serving cell having actual uplink transmission, the UE may report both PH and P_{CMAX,c,f,p}. In the case of a serving cell having no uplink transmission, the UE may report only PH. The base station collects the P_{CMAX,c,f,p} of serving cells having actual uplink transmission, monitors history of change thereof, and uses the same for reference in future uplink scheduling.

The UE calculates the serving cell-specific PH as in the following Equation 6 in consideration of the requested transmission output and P_{CMAX,c,f,p} of serving cells which are currently active, and which have uplink transmission configured therefor.

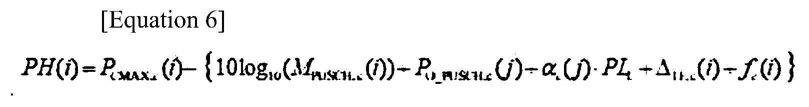

As in Equation 6, the PH(i) of the *i*^{th} subframe in the serving cell c is calculated by the maximum reverse transmission power P_{CMAX,c}(i), the number of resource blocks M_{PUSCH,c}(i), power offset Δ_{TF,c} derived from the modulation coding scheme (MCS), and pathloss PL_{c}, f_{c}(i) (accumulated TPC commands).

As illustrated in FIG. 15, starting from the third byte of PHR (in case that the corresponding serving cell has actual uplink transmission), P_{CMAX}, 1 1501 of the first panel (as an example, p=0) of the UE is included therein, and P_{CMAX}, 2 1502 of the second panel (as an example, p=1) of the UE is included in the fourth byte.

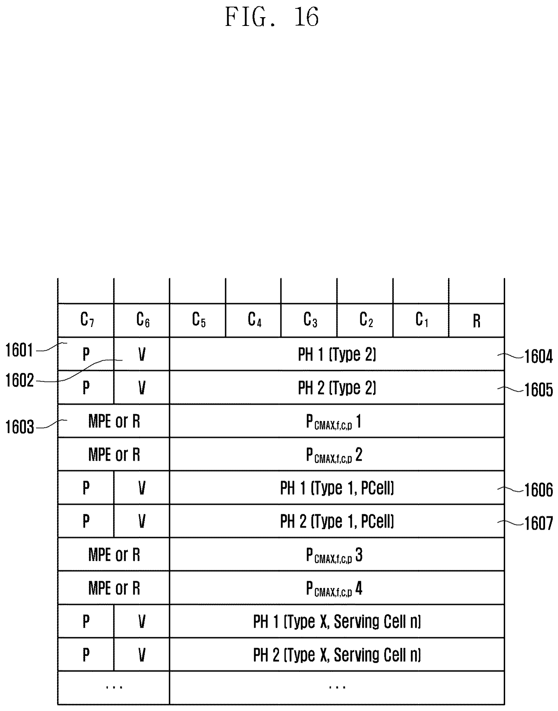

FIG. 16 illustrates an example of the structure of an extended multiple entry PHR MAC CE. FIG. 16 discloses an example of the structure of an extended multiple entry PHR MAC CE, and the disclosure is not limited to the example.

In case that multi-panel simultaneous transmission is extended to a mobile communication system in which multiple carriers are integrated, and it in case that it is necessary to report the PH regarding multiple serving cells, it is advantageous in terms of overhead reduction to gather them into one PHR and then transmit the same. The multiple entry PHR MAC CE for multi-panel simultaneous transmission has been designed such that, unlike conventional general multiple entry PHR MAC CEs, multiple pieces of PH information regarding multiple cells and multiple pieces of P_{CMAX,c,f,p} (p=0,1) and the like can be reported together. The multiple pieces of PH information and P_{CMAX,c,f,p} information may correspond to PH information and P_{CMAX,c,f,p} information for each panel. The content of the disclosure is not limited to the provided example regarding two pieces of PH information and two pieces of P_{CMAX,c,f,p} and can also be applied to more than two pieces of PH information and more than two pieces of P_{CMAX,c,f,p}.

Each bit of the bitmap corresponds to one SCell. The relationship between respective bits and SCells is configured according to the SCell index. Each SCell index is provided to the UE when the base station configures SCells for the UE.

The P bit 1601 indicates whether the UE maximum transmit power P_{CMAX} has been affected by P-MPR _{f,*c*,*p*}. As described above, even if a specific serving cell has no actual PUSCH transmission, the UE calculates the PH by assuming a virtual transmission format and P_{CMAX,c,f,p}. In case of reporting PH calculated with regard to a serving cell having no actual reverse transmission as above, this may be indicated by configuring the V field of a predetermined bit of the byte containing the PH, that is, the second bit, to have a predetermined value. The V bit 1602 is a 1-bit indicator to this end. In connection with reporting the PH of a specific cell, in case that the UE has calculated the PH of the cell based on actual PUSCH transmission, that is, by using an actual transmission format, the corresponding bit may be configured to be a predetermined value (for example, 0). In case that the UE has calculated the PH by using a reference format and virtual P_{CMAX,f,c,p} because the cell has no PUSCH transmission, the corresponding bit may be configured to be another predetermined value (for example, 1).

In addition, in case that the UE has indicated whether P-MPR_{f,c,p} is used or not through the P bit, the 2-bit information of the MPE field 1603 indicates the specific degree of power back-off (P-MPR) use. The size of the P-MPR varies greatly depending on the position of each panel, the uplink transmission direction, or the grip position of the user holding the UE. Therefore, it is advantageous for a UE that supports multi-panel simultaneous transmission to configure P-MPR information for each panel, and these pieces of information collected with regard to respective cells need all to be included in the PHR MAC CE and reported to the base station.

In the case of a serving cell having actual uplink transmission, the UE reports both PH and P_{CMAX,c,f,p}. In the case of a serving cell having no uplink transmission, the UE reports only PH. The base station collects the P_{CMAX,c,f,p} of serving cells having actual uplink transmission, monitors history of change thereof, and uses the same for reference in future uplink scheduling.

As illustrated in FIG. 16, starting from the third byte of the PHR, a pair of PH and P_{CMAX} (in case that the corresponding serving cell has actual uplink transmission), or the PH (in case that the corresponding serving cell has no actual uplink transmission) is contained in a predetermined order. Information regarding the PCell is contained first, and SCells that are currently active are contained in descending order of the SCell index size. With regard to the PCell, two types of PHs including Type 2 PH1 and PH2 1604 and 1605 and Type 1 PH1 and PH2 1606 and 1607 may be contained. The multiple pieces of PH information and P_{CMAX,c,f,p} information may correspond to PH information and P_{CMAX,c,f,p} information for each panel. Type 1 PH has been calculated in consideration of PUSCH transmission only, and Type 2 PH has been calculated in consideration of both PUCCH transmission and PUSCH transmission.

As described above, whether P_{CMAX} is contained in the PHR may be expressed by using a specific bit of the bitmap. As an example, the V bit may be used to indicate whether P_{CMAX,f,c} is included in the PHR MAC CE. Alternatively, whether P_{CMAX} is contained may be implicitly expressed by using information indicating the size of the PHR MAC CE. For example, in case that the size occupied by the bitmap and PH information is X bytes, and in case that P_{CMAX} is contained, (X+n) bytes may be used as the size of the PHR MAC CE, and *n* is the number of P_{CMAX} included in the PHR MAC CE, and may be based on the number of panels. In case that P_{CMAX} is not contained, X bytes may be used as the size of the PHR MAC CE.

In case that, in order to report multiple pieces of PCMAX, P-MPR and PH calculated per panel, such as a new single entry PHR for multi-panel simultaneous transmission, a UE supporting multi-panel simultaneous transmission needs to report PH through a new multiple entry PHR, predetermined bytes are added to the PHR, compared to the existing multiple entry PHR, in order to report multiple pieces of PH, PCMAX, and P-MPR.

### <Sixth embodiment: overall UE/base station operations for supporting multi-panel simultaneous transmission>

In this embodiment, respective elements for controlling the UE's each panel-specific transmission power according to the disclosure, in connection with multi-panel simultaneous transmission described so far, will be integrated, and overall UE and base station operations will be described in detail.

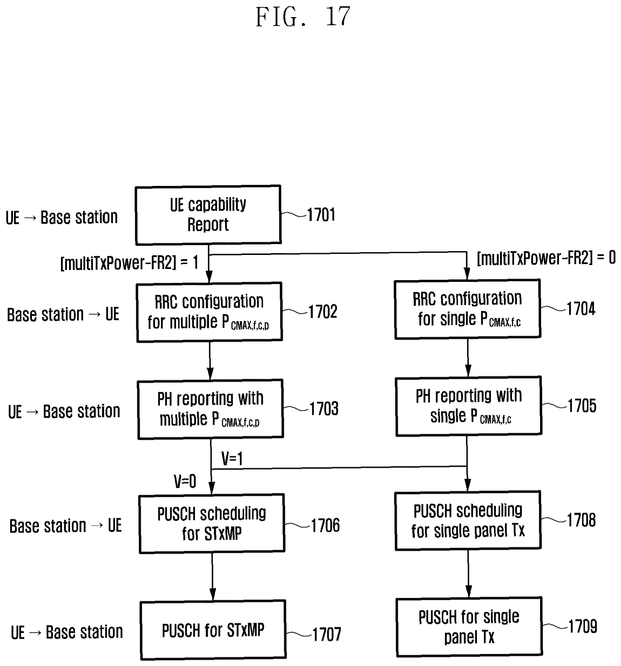

FIG. 17 is a flowchart illustrating an example of operations of a base station and a UE performing the UE's multi-panel simultaneous uplink transmission.

As illustrated in FIG. 17, in order to first identify whether a UE supporting FR2 supports multi-panel simultaneous transmission, new UE capability related thereto needs to be defined. In case that the UE supports multi-panel simultaneous transmission, it is also necessary to identify, as described above, whether the UE supports operations of controlling power with regard to each panel through P_{CMAXf,c,p} which is independent with regard to each panel. New UE capability (for example, [multiTxPower-FR2]) may be defined so as to report such capability (1701). The UE capability information reported by the UE to the base station may include at least one from among information regarding to the number of panels supported by the UE, information regarding whether the UE supports uplink simultaneous transmission using multiple panels, information regarding whether the UE supports operations of controlling power with regard to each panel (or configurations related to each panel), information regarding whether the UE identifies independent P_{CMAXf,c,p} with regard to each panel (or configurations related to each panel), information regarding the PHR MAC CE format that the UE may report to the base station or information that may be included in the PHR MAC CE.

Accordingly, the base station configures RRC parameters according to the UE's multi-panel simultaneous transmission capability report (1902). As an example, in case that a UE supporting multi-panel simultaneous transmission reports UE capability indicating that P_{CMAX} can be derived per panel, the base station may configure an RRC information element (as an example, twoPHRMode-r17) newly defined to report the PHR MAC CE proposed in the disclosure. The UE may accordingly transmit a new MAC CE for reporting multiple pieces of P_{CMAX}, P-MPR, and PH (1703).

In case that the UE does not support operations of controlling power with regard to each panel through P_{CMAXf,c,p} which is independent with regard to each panel (in case of reporting UE capability indicating that the same does not support operations of controlling power with regard to each panel through P_{CMAXf,c,p} which is independent with regard to each panel), the base station may not configure a newly defined RRC information element (as an example, twoPHRMode-r18), may configure a general RRC information element for the UE such that existing single panel transmission is configured, (1704), and the UE may transmit a MAC CE for reporting one P_{CMAX}, P-MPR, and PH (1705).

In case that the UE supports multi-panel simultaneous transmission, each panel-specific P_{CMAX} is supported at the corresponding support cell and operating frequency, and two or more pieces of P_{CMAX} information are thus reported, a new MAC CE format may be used. In this case, all PHs are reported actually (V=0).

Upon receiving the new PHR MAC CE, the base station schedules a PUSCH for simultaneous transmission with multi-panel (STxMP) to the UE according to multiple PHs calculated per panel based on the received PHR MAC CE (1706). The UE can perform simultaneous PUSCH transmission with multi-panels according to the scheduling (1707).

Although the UE supports multi-panel simultaneous transmission and supports panel-specific P_{CMAX} reporting, the UE may perform single-panel transmission with a single TRP. In this case, the base station configures an RRC information element (as an example, twoPHRMode-r18) such that that the UE can report multiple pieces of P_{CMAX} and PH. The UE may then actually (V=0) report the PH (for example, PH1) regarding a transmitted panel, and may virtually (V=1) report the PH (for example, PH2) regarding an un-transmitted panel. The base station schedules a general PUSCH using a single panel for the UE (1708). The UE transmits the PUSCH according to the scheduling (1709).

The above flowchart illustrates exemplary methods that may be implemented in accordance with the principles of the disclosure, and the methods illustrated in the flowcharts herein may be variously modified. For example, although illustrated as a series of steps, various steps in each drawing may overlap, occur in parallel, occur in different orders, or occur multiple times. In other examples, respective steps may be omitted or replaced with other steps.

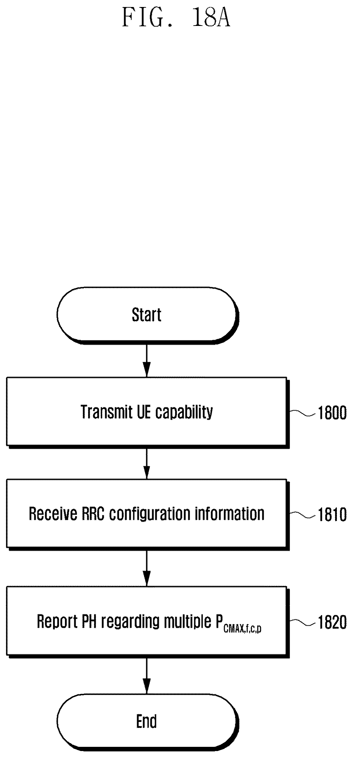

FIG. 18A is a flowchart illustrating an example of multi-panel simultaneous uplink transmission operations of a UE. Referring to FIG. 18A, the UE transmits UE capability information related to whether multi-panel simultaneous transmission is supported to a base station. The UE capability information may include at least one from among information regarding to the number of panels supported by the UE, information regarding whether the UE supports uplink simultaneous transmission using multiple panels, information regarding whether the UE supports operations of controlling power with regard to each panel (or configurations related to each panel), information regarding whether the UE identifies independent P_{CMAXf,c,p} with regard to each panel (or configurations related to each panel), information regarding the PHR MAC CE format that the UE may report to the base station or information that may be included in the PHR MAC CE (1800).

The UE receives higher-layer signaling related to multi-panel simultaneous transmission. As an example, the higher-layer signaling may include configuration information of a PH report format including multiple pieces of P_{CMAX} corresponding to respective panels, information for configuring multi-panel simultaneous transmission, and the like (1810).

Thereafter, the UE may perform PH reporting including multiple pieces of P_{CMAX} based on a combination of at least one the embodiments proposed in the disclosure, based on the higher-layer signaling (1820). Thereafter, the base station may schedule a PUSCH based on multi-panel simultaneous transmission such that the UE receives PUSCH scheduling information. The UE may simultaneously transmit a PUSCH using multiple panels, based on the scheduling.

The above flowchart illustrates exemplary methods that may be implemented in accordance with the principles of the disclosure, and the methods illustrated in the flowcharts herein may be variously modified. For example, although illustrated as a series of steps, various steps in each drawing may overlap, occur in parallel, occur in different orders, or occur multiple times. In other examples, respective steps may be omitted or replaced with other steps.

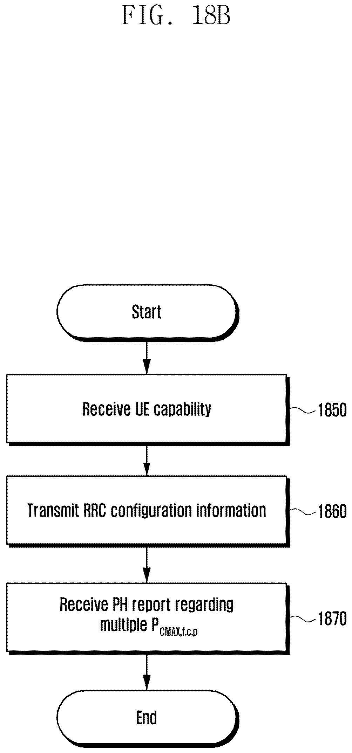

FIG. 18B is a flowchart illustrating an example of multi-panel simultaneous uplink transmission operations of a base station. Referring to FIG. 18B, the base station receives UE capability information related to whether multi-panel simultaneous transmission is supported from a UE. The UE capability information may include at least one from among information regarding to the number of panels supported by the UE, information regarding whether the UE supports uplink simultaneous transmission using multiple panels, information regarding whether the UE supports operations of controlling power with regard to each panel (or configurations related to each panel), information regarding whether the UE identifies independent P_{CMAXf,c,p} with regard to each panel (or configurations related to each panel), information regarding the PHR MAC CE format that the UE may report to the base station or information that may be included in the PHR MAC CE (1850).

The base station transmits higher-layer signaling related to multi-panel simultaneous transmission to the UE. As an example, the higher-layer signaling may include configuration information of a PH report format including multiple pieces of P_{CMAX} corresponding to respective panels, information for configuring multi-panel simultaneous transmission, and the like (1860).

Thereafter, the base station may receive a PH report including multiple pieces of P_{CMAX} based on a combination of at least one the embodiments proposed in the disclosure from the UE (1870). The PH report including multiple pieces of P_{CMAX} may be related to the higher-layer signaling. Thereafter, the base station may schedule a PUSCH based on multi-panel simultaneous transmission, and may receive a PUSCH transmitted simultaneously using multiple panels related to the scheduling.

The above flowchart illustrates exemplary methods that may be implemented in accordance with the principles of the disclosure, and the methods illustrated in the flowcharts herein may be variously modified. For example, although illustrated as a series of steps, various steps in each drawing may overlap, occur in parallel, occur in different orders, or occur multiple times. In other examples, respective steps may be omitted or replaced with other steps.

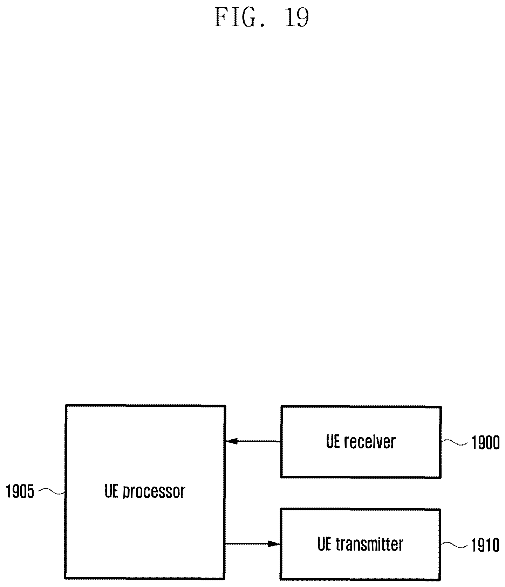

FIG. 19 illustrates a structure of a UE in a wireless communication system according to an embodiment of the disclosure.

Referring to FIG. 19, the UE may include a transceiver, which refers to a UE receiver 1900 and a UE transmitter 1910 as a whole, a memory (not illustrated), and a UE processor 1905 (or UE controller or processor). The UE transceiver 1900 and 1910, the memory, and the UE processor 1905 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. The processor may include multiple processors, and the processor may perform operations of controlling the components of the UE by executing programs stored in the memory.

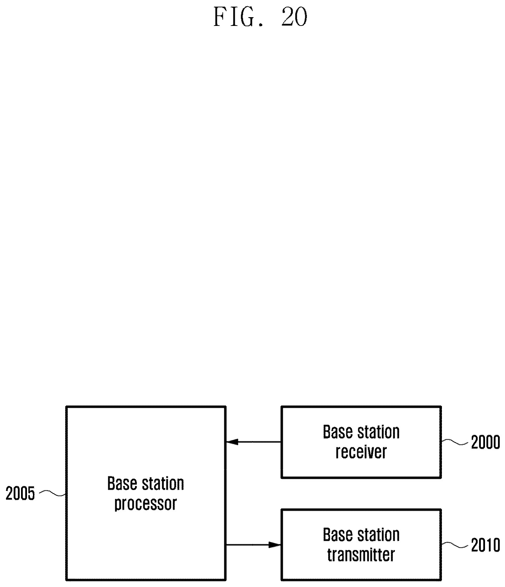

FIG. 20 illustrates a structure of a base station in a wireless communication system according to an embodiment of the disclosure.

Referring to FIG. 20, the base station may include a transceiver, which refers to a base station receiver 2000 and a base station transmitter 2010 as a whole, a memory (not illustrated), and a base station processor 2005 (or base station controller or processor). The base station transceiver 2000 and 2010, the memory, and the base station processor 2005 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal of a communication system, the method comprising:
receiving information for configuring physical uplink shared channel (PUSCH) simultaneous transmission using two panels from a base station;
receiving information indicating two transmission configuration indicator (TCI) states from the base station;
acquiring a first P_{UMAX} value corresponding to a first TCI state of the two TCI states and acquiring a second P_{UMAX} value corresponding to a second TCI state; and
reporting at least one of the acquired first P_{UMAX} value or second P_{UMAX} value to the base station.

2. The method of claim 1, wherein each of the acquired first P_{UMAX} value and second P_{UMAX} value is acquired based on an additional transmission output reduction parameter Δ _{STxMP} applied when the terminal performs simultaneous transmission using multiple panels.

3. The method of claim 1, wherein the sum of the acquired first P_{UMAX} value and second P_{UMAX} value is equal to or smaller than an allowable maximum value of peak effective isotropically radiated power (EIRP).

4. The method of claim 1, wherein the acquired first P_{UMAX} value and second P_{UMAX} value are included in a medium access control control element (MAC CE) for one power headroom (PH) report and reported to the base station.

5. A method performed by a base station of a communication system, the method comprising:
transmitting information for configuring physical uplink shared channel (PUSCH) simultaneous transmission using two panels to a terminal;
transmitting information indicating two transmission configuration indicator (TCI) states to the terminal; and
receiving at least one of a first P_{UMAX} value corresponding to a first TCI state of the two TCI states and a second P_{UMAX} value corresponding to a second TCI state from the terminal.

6. The method of claim 5, wherein each of the first P_{UMAX} value and second P_{UMAX} value is based on an additional transmission output reduction parameter Δ _{STxMP} applied when the terminal performs simultaneous transmission using multiple panels.

7. The method of claim 5, wherein the sum of the acquired first P_{UMAX} value and second P_{UMAX} value is equal to or smaller than an allowable maximum value of peak effective isotropically radiated power (EIRP).

8. The method of claim 5, wherein the first P_{UMAX} value and second P_{UMAX} value are included in a medium access control control element (MAC CE) for one power headroom (PH) report and received.

9. A terminal of a communication system, the terminal comprising:
a transceiver; and
a controller configured to:
receive information for configuring physical uplink shared channel (PUSCH) simultaneous transmission using two panels from a base station;
receive information indicating two transmission configuration indicator (TCI) states from the base station;
acquire a first P_{UMAX} value corresponding to a first TCI state of the two TCI states and acquire a second P_{UMAX} value corresponding to a second TCI state; and
report at least one of the acquired first P_{UMAX} value or second P_{UMAX} value to the base station.

10. The terminal of claim 9, wherein each of the acquired first P_{UMAX} value and second P_{UMAX} value is acquired based on an additional transmission output reduction parameter Δ _{STxMP} applied when the terminal performs simultaneous transmission using multiple panels.

11. The terminal of claim 9, wherein the sum of the acquired first P_{UMAX} value and second P_{UMAX} value is equal to or smaller than an allowable maximum value of peak effective isotropically radiated power (EIRP).

12. The terminal of claim 9, wherein the acquired first P_{UMAX} value and second P_{UMAX} value are included in a medium access control control element (MAC CE) for one power headroom (PH) report and reported to the base station.

13. A base station of a communication system, the base station comprising:
a transceiver; and
a controller configured to:
transmit information for configuring physical uplink shared channel (PUSCH) simultaneous transmission using two panels to a terminal;
transmit information indicating two transmission configuration indicator (TCI) states to the terminal; and
receive at least one of a first P_{UMAX} value corresponding to a first TCI state of the two TCI states and a second P_{UMAX} value corresponding to a second TCI state from the terminal.

14. The base station of claim 9, wherein each of the first P_{UMAX} value and second P_{UMAX} value is based on an additional transmission output reduction parameter Δ _{STxMP} applied when the terminal performs simultaneous transmission using multiple panels, and
the sum of the acquired first P_{UMAX} value and second P_{UMAX} value is equal to or smaller than an allowable maximum value of peak effective isotropically radiated power (EIRP).

15. The base station of claim 9, wherein the first P_{UMAX} value and second P_{UMAX} value are included in a medium access control control element (MAC CE) for one power headroom (PH) report and received.
